# EUROPEAN PATENT APPLICATION

(11) **EP 4 797 861 A1**
(43) Date of publication of application: **26.08.2026**
(21) Application number: 23955801.8
(22) Date of filing: 20.10.2023
(51) Int. Cl.: H04W 76/15, H04W 48/16

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Guangdong 523860 (CN)
(74) Representative: RGTH
(86) International application number: PCT/CN2023/125746
(87) International publication number: WO 2025/081480

(57) **Abstract**

The present application relates to a communication method, a device, a computer readable storage medium, a computer program product, and a computer program. The method comprises: a terminal sends a first request message, wherein the first request message is used for establishing a first 3rd Generation Partnership Project (3GPP) connection; and the terminal receives a first reply message, wherein the first reply message is used for indicating that the first 3GPP connection is successfully established, and the first 3GPP connection is one of a plurality of 3GPP connections of the terminal.

## Description

### TECHNICAL FIELD

The present application relates to the field of communications, and more specifically, to a communication method, a device, a computer-readable storage medium, a computer program product, and a computer program.

### BACKGROUND

The current 5G system only supports establishment of a 3rd Generation Partnership Project (3GPP) connection and a non-3GPP connection, its mobility management is relatively simple, and all processes are preferentially completed by the 3GPP connection. However, in certain use cases or scenarios, non-3GPP access is not very applicable in terms of capacity, coverage, reliability, and quality of service. Therefore, how to enable a terminal to achieve higher capacity and/or throughput in scenarios where establishing the non-3GPP connection is not applicable has become a problem that needs to be solved.

### SUMMARY

Embodiments of the present application provide a communication method, a device, a computer-readable storage medium, a computer program product, and a computer program.

The embodiments of the present application provide a communication method, including:
transmitting, by a terminal, a first request message, where the first request message is used to establish a first 3GPP connection; and
receiving, by the terminal, a first reply message, where the first reply message is used to indicate that the first 3GPP connection has been successfully established, and the first 3GPP connection is one of multiple 3GPP connections of the terminal.

The embodiments of the present application provide a communication method, including:
receiving, by a first core network side device, a first request message, where the first request message is used to establish a first 3GPP connection; and
transmitting, by the first core network side device, a first reply message, where the first reply message is used to indicate that the first 3GPP connection has been successfully established, and the first 3GPP connection is one of the multiple 3GPP connections of a terminal.

The embodiments of the present application provide a terminal, including:
a first communication unit, configured to transmit a first request message, where the first request message is used to establish a first 3GPP connection; and receive a first reply message, where the first reply message is used to indicate that the first 3GPP connection has been successfully established, and the first 3GPP connection is one of multiple 3GPP connections of the terminal.

The embodiments of the present application provide a first core network side device, including:
a second communication unit, configured to receive a first request message, where the first request message is used to establish a first 3GPP connection; and transmit a first reply message, where the first reply message is used to indicate that the first 3GPP connection has been successfully established, and the first 3GPP connection is one of multiple 3GPP connections of a terminal.

The embodiments of the present application provide a terminal, including a transceiver, a processor, and a memory. The memory is configured to store a computer program, the transceiver is configured to communicate with other devices, and the processor is configured to call and run the computer program stored in the memory to enable the terminal to perform the method described above.

The embodiments of the present application provide a first core network side device, including: a transceiver, a processor, and a memory. The memory is configured to store a computer program, the transceiver is configured to communicate with other devices, and the processor is configured to call and run the computer program stored in the memory to enable the first core network side device to perform the method described above.

The embodiments of the present application provide a chip for implementing the above method.

Specifically, the chip includes a processor configured to call a computer program from memory and run computer program, enabling a device equipped with the chip to perform the methods described above.

The embodiments of the present application provide a computer-readable storage medium for storing a computer program, which, when run by a device, enables the device to perform the method described above.

The embodiments of the present application provide a computer program product, including computer program instructions that enable a computer to perform the method described above.

The embodiments of the present application provide a computer program that, when run on a computer, enables the computer to perform the method described above.

By adopting the solution provided in the embodiments, the terminal may establish and maintain multiple 3GPP connections simultaneously. In this way, a solution may be implemented where the terminal maintains the multiple 3GPP connections simultaneously. Furthermore, it can solve the problem in related art where the terminal is only supported to establish a 3GPP connection and a non-3GPP connection, thereby failing to guarantee the terminal to obtain higher capacity and/or throughput when the terminal is in a scenario where establishing a non-3GPP connection is not applicable.

### BRIEF DESCRIPTION OF THE DRAWINGS

FIG. 1 is a schematic diagram of an application scenario according to the embodiments of the present application.
FIG. 2 is a schematic diagram of 5G network system architecture.
FIG. 3 is a schematic diagram of a scenario for a multi-access (MA) protocol data unit (PDU).
FIG. 4 is a schematic diagram of another scenario for a multi-access (MA) PDU.
FIGS. 5 and 6 are example diagrams of two types of multi-3GPP access scenarios.
FIG. 7 is a schematic flowchart of a communication method according to an embodiment of the present application.
FIG. 8 is a schematic flowchart of a communication method according to another embodiment of the present application.
FIG. 9 is an exemplary flowchart of a communication method according to an embodiment of the present application.
FIG. 10 is another exemplary flowchart of a communication method according to an embodiment of the present application.
FIG. 11 is a schematic flowchart of a registration update process of a communication method according to another embodiment of the present application.
FIG. 12 is a schematic flowchart of a paging-related process of a communication method according to another embodiment of the present application.
FIG. 13 is another schematic flowchart of a communication method according to another embodiment of the present application.
FIG. 14 is a schematic block diagram of a terminal according to an embodiment of the present application.
FIG. 15 is a schematic block diagram of a first core network side device according to an embodiment of the present application.
FIG. 16 is a schematic block diagram of a communication device according to the embodiments of the present application.
FIG. 17 is a schematic block diagram of a chip according to the embodiments of the present application.
FIG. 18 is a schematic block diagram of a communication system according to the embodiments of the present application.

### DETAILED DESCRIPTION

The technical solutions in the embodiments of the present application will now be described with reference to the accompanying drawings.

The technical solutions in the embodiments of the present application may be applied to various communication systems, such as: a long term evolution (LTE) system, an advanced long term evolution (LTE-A) system, a new radio (NR) system, an evolution system of the NR system, a LTE-based access to unlicensed spectrum (LTE-U) system, a NR-based access to unlicensed spectrum (NR-U) system, a non-terrestrial network (NTN) system, a universal mobile telecommunication system (UMTS), wireless local area networks (WLAN), wireless fidelity (WiFi), a 5th-Generation (5G) system, or other communication systems.

Generally speaking, a number of connections supported by a traditional communication system is limited and is easy to implement, however, with the development of the communication technology, the mobile communication system will not only support the traditional communication, but also support, for example, device to device (D2D) communication, machine to machine (M2M) communication, machine type communication (MTC), vehicle to vehicle (V2V) communication, or vehicle to everything (V2X) communication, etc., and the embodiments of the present application may also be applied to these communication systems. In a possible implementation, a communication system in the embodiments of the present application may be applied to a carrier aggregation (CA) scenario, a dual connectivity (DC) scenario, or a standalone (SA) networking scenario. In a possible implementation, the communication system in the embodiments of the present application may be applied to unlicensed spectrum, where the unlicensed spectrum may also be considered as shared spectrum; or, the communication system in the embodiments of the present application may also be applied to licensed spectrum, where the licensed spectrum may also be considered as non-shared spectrum.

The present application describes various embodiments in conjunction with network devices and terminal devices. The terminal device may also be referred to as user equipment (UE), an access terminal, a user unit, a user station, a mobile station, a mobile platform, a remote station, a remote terminal, a mobile device, a user terminal, a terminal, a wireless communication device, a user agent, or a user apparatus, etc. The terminal devices may be stations (STAION, ST) in WLANs, cellular phones, cordless phones, session initiation protocol (SIP) phones, wireless local loop (WLL) stations, personal digital assistant (PDA) devices, handheld devices with wireless communication capabilities, computing devices or other processing devices connected to a wireless modem, vehicle-mounted devices, wearable devices, terminal devices in next-generation communication systems such as the NR network, or terminal devices in future evolved public land mobile network (PLMN) networks, etc. In the embodiments of the present application, the terminal device may be deployed on land, including indoors or outdoors, handheld, wearable or vehicle-mounted; or it may also be deployed on water (e.g., ships); or it may also be deployed in the air (e.g., airplanes, balloons and satellites). In the embodiments of the present application, the terminal device may be a mobile phone, a pad, a computer with wireless transceiver capabilities, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home, etc. By way of example and not limitation, in the embodiments of the present application, the terminal device may also be a wearable device. The wearable device may also be referred to as a wearable smart device, which is a general term for wearable devices developed by using wearable technologies to intelligently design everyday wear, such as glasses, gloves, a watch, clothing, or shoes. The wearable device is a portable device that is worn directly on a body, or integrated into a user's clothing or accessories. The wearable device is not only a hardware device, but also implements powerful functions through software support as well as data interaction or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device for communicating with a mobile device. The network device may be an access point (AP) in WLAN, a base transceiver station (BTS) in GSM or CDMA, a base station (NodeB, NB) in WCDMA, an evolutional Node B (eNB or eNodeB) in LTE, a relay station or access point, or a vehicle-mounted device, a wearable device, or a network device (gNB) in the NR network, or a network device in a future evolved PLMN network or a network device in an NTN network, etc. By way of example and not limitation, in the embodiments of the present application, the network device may have mobility characteristics, for example, the network device may be a mobile device. Optionally, the network device may be a satellite or a balloon station. For example, satellites may be low earth orbit (LEO) satellites, medium earth orbit (MEO) satellites, geostationary earth orbit (GEO) satellites, high elliptical orbit (HEO) satellites, etc. Optionally, the network device may also be a base station set up on land, water, or other similar locations. In the embodiments of the present application, the network device may provide services to a cell. The terminal device communicates with the network device through the transmission resources (e.g., frequency domain resources, or spectrum resources) used by the cell. The cell may be the cell corresponding to the network device (e.g., a base station), the cell may belong to a macro base station or to a base station corresponding to a small cell. The small cell may include: a metro cell, a micro cell, a pico cell, a femto cell, etc. These small cells have the characteristics of small coverage area and low transmission power, which are suitable for providing high-speed data transmission services.

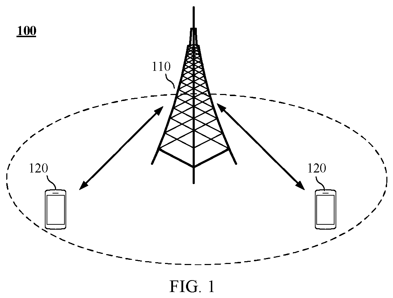

FIG. 1 illustrates a communication system 100 as an example. The communication system includes a network device 110 and two terminal devices 120. In a possible implementation, the communication system 100 may include multiple network devices 110, and the coverage area of each network device 110 may include other number of terminal devices 120, which is not limited in the embodiments of the present application. In a possible implementation, the communication system 100 may further include other network entities such as a mobility management entity (MME) and an access and mobility management function (AMF), which are not limited in the embodiments of the present application. The network device may include an access network device and a core network device, that is, the wireless communication system further includes multiple core networks for communicating with access network devices. The access network device may be a evolutional base station (evolutional node B, eNB or e-NodeB for short), a macro base station, a micro base station (also known as "small base station"), a pico base station, an access point (AP), a transmission point (TP), or a new generation Node B (gNodeB) in the long-term evolution (LTE) system, the next-generation (mobile communication system) (NR), or the authorized auxiliary access long-term evolution (LAA-LTE) system. It should be understood that devices with communication functions in the network/system in the embodiments of the present application may be referred to as communication devices. Taking the communication system illustrated in FIG. 1 as an example, the communication devices may include network devices and terminal devices with communication functions. The network devices and terminal devices may be specific devices in the embodiments of the present application, which will not be repeated here. The communication devices may also include other devices in the communication system, such as network controllers, mobility management entities and other network entities, which are not limited in the embodiments of the present application.

To facilitate understanding of the embodiments of the present application, the basic processes and concepts involved in the embodiments of the present application will be briefly explained below. It should be understood that the basic processes and concepts described below do not limit the embodiments of the present application.

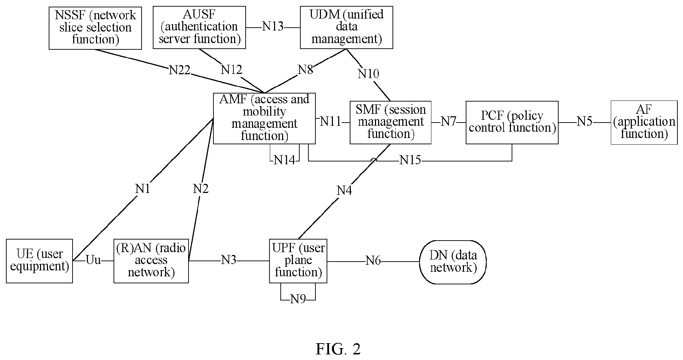

The 5G network system architecture diagram is illustrated in FIG. 2, which includes: a network slice selection function (NSSF), mainly used for managing network slice-related information, such as selecting network slices for terminal devices; an authentication server function (AUSF), used to complete identity authentication for user access; a unified data management (UDM), used for managing and storing subscription data and authentication data; an access and mobility management function (AMF), used for mobility management, security anchors, and security UE policy management, etc., where in addition to managing UE mobility, the AMF is also responsible for forwarding session management-related messages between the UE and session management function (SMF); an SMF, used to complete session management, UE IP address allocation and management, etc.; a policy control function (PCF), responsible for formulating policies related to UE mobility management, session management, and billing; an application function (AF), used for external application servers; and a user plane function (UPF), used for complex user plane processing, such as forwarding traffic between the radio access network and the Internet, reporting traffic usage, and enforcing QoS (Quality of Service) policies; a data network (DN), i.e., an external data network of 5GC (such as the Internet). Data transmission occurs between the nodes of the 5GC (5G core network), between the user equipment (UE) and the nodes of the 5GC, between the UE and the radio access network ((R)AN), and between the RAN and the nodes of the 5GC, respectively, through corresponding interfaces. For example, as illustrated in FIG. 2: AMF and NSSF in 5GC perform data transmission through an interface N22; AMF performs data transmission with SMF through an interface N11; AMF performs data transmission with AUSF through N12; and AMF and UDM perform data transmission through an interface N8. The SMF and UPF perform data transmission through an interface N4. UPF performs data transmission with the external data network through an interface N6 and performs data transmission with AN through an interface N3. The UE connects to the (R)AN via the Uu port to exchange access layer messages and radio data. The UE connects to the AMF via the N1 port to exchange non access stratum (NAS) messages. RAN and AMF perform data transmission through an interface N2, and RAN and UPF perform data transmission through the N3 interface. It should be understood that the above only describes some of the interfaces between nodes, and other interfaces between other nodes of 5GC in FIG. 2 will not be described in detail. In FIG. 2, apart from UE, (R)AN and DN, all other nodes are core network nodes; core network nodes may be further divided into user plane nodes (i.e., UPF in FIG. 2) and control plane nodes (the other core network nodes except UPF in the core network nodes).

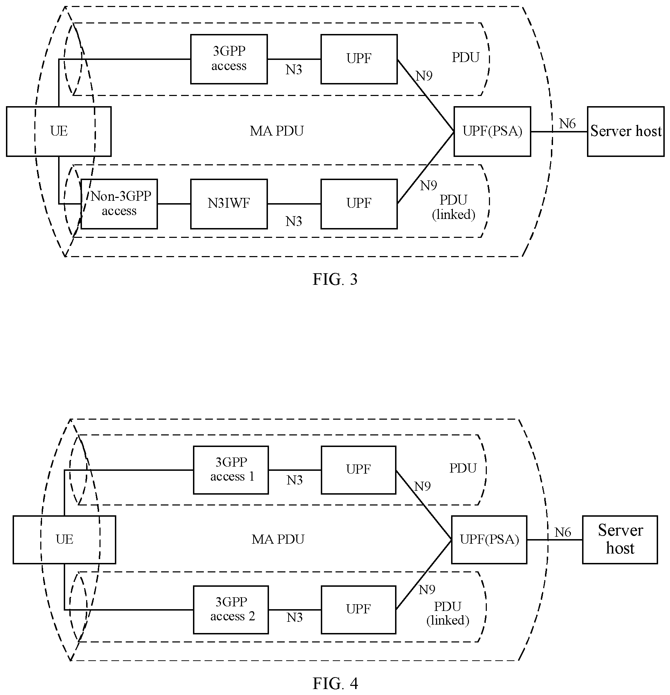

In the current standard, UEs may access the core network simultaneously through 3GPP access and non-3GPP access, and transmit different data packets through 3GPP (3rd generation partnership project) access or non-3GPP access. Specifically, the multi-access (MA) PDU scenario illustrated in FIG. 3 includes: UE accessing via 3GPP and connecting to UPF via the N3 interface; UPF connecting to UPF (PSA (PDU session anchor)) via the N9 interface; and finally, UPF (PSA) connecting to the server host via the N6 interface. In this way, UE may transmit protocol data units (PDUs) (or transmit PDU sessions) through a 3GPP connection; UE accessing via non-3GPP and connecting to N3IWF (Non-3GPP inter working function); N3IWF connecting to UPF via the N3 interface; UPF connecting to UPF (PSA) via the N9 interface; and finally, UPF (PSA) connecting to the server host via the N6 interface. In this way, UE may transmit PDUs (linked) through a non-3GPP connection.

As can be seen from the above explanation, the current 5G system only supports the establishment of one 3GPP connection and one non-3GPP connection, the mobility management is relatively simple, and all processes are preferentially completed by the 3GPP connection. However, in certain use cases or scenarios, non-3GPP access is not very applicable in terms of capacity, coverage, reliability, and QoS (Quality of Service), such as stadiums with stand-alone non-public network (SNPN) or local PLMN deployments, and scenarios combining 3GPP terrestrial (TN) and 3GPP non-terrestrial (NTN) access. To address the issue of not being able to establish non-3GPP connections in certain scenarios, it is necessary to consider a solution where a UE accesses the core network through two or more 3GPP connections, i.e., a UE establishes or simultaneously maintains multiple 3GPP connections. Further, in a scenario where a UE establishes multiple 3GPP connections, since there is only one UE, mobility management-related processes may be completed through only one of the 3GPP connections, thus eliminating other unnecessary interactions and configurations.

Referring to FIG. 4, a scenario example illustrating the establishment of multiple 3GPP connections for a single UE is provided. The multi-access (MA) PDU scenario illustrated in FIG. 4 includes that the UE connects to 3GPP access 1, 3GPP access 1 connects to the UPF via the N3 interface, the UPF connects to the UPF (PSA (PDU session anchor) via the N9 interface, and finally the UPF (PSA) connects to the server host via the N6 interface. In this way, the UE may transmit PDUs (or PDU sessions) through a single 3GPP connection. The UE further connects to 3GPP access 2, 3GPP access 2 connects to the UPF via the N3 interface, the UPF connects to the UPF (PSA) via the N9 interface, and finally the UPF (PSA) connects to the server host via the N6 interface. In this way, the UE may transmit PDUs (linked) through a second 3GPP connection.

In some practical use cases, since there are many 3GPP access types, it is necessary to consider the same UE accessing the network through multiple different 3GPP types for data transmission in some situations. Here, the same UE accessing the network through multiple different 3GPP types for data transmission may be divided into multiple granularities and combined to realize multiple 3GPP access scenarios. For example, it may include: a single PLMN (public land mobile network), multiple PLMNs; PLMN+SNPN (stand-alone non-public network); NR access+satellite access; satellite high-orbit access+satellite medium-orbit access+satellite low-orbit access, etc. It should be understood that the above is merely an exemplary description of multiple granularities and combinations of various granularities. In actual processing, it may include but not limited to the multiple granularities exemplified above, and also include but not limited to combinations of the different granularities as exemplified above.

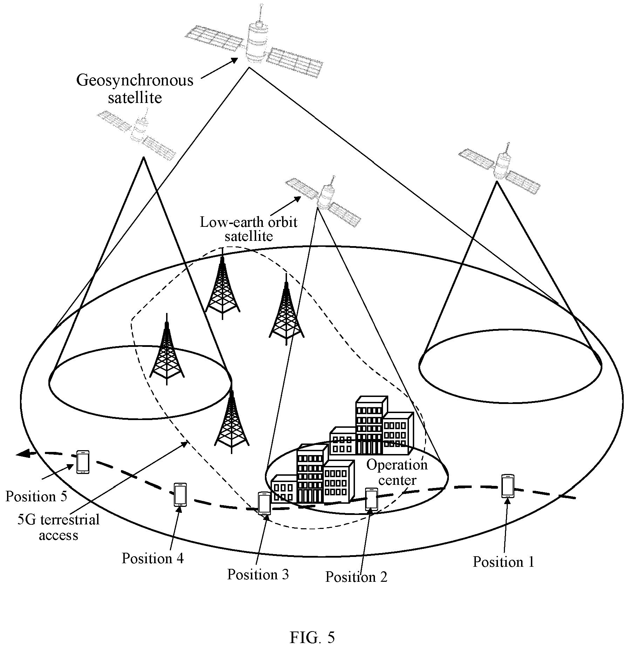

Further, regarding the different granularities and combinations thereof mentioned above, here are two examples of multiple 3GPP access scenarios:
Scenario 1: Single PLMN, with terrestrial and satellite access. This scenario is illustrated in FIG. 5. NTN (non-terrestrial networks) (i.e., the low-earth orbit satellites and geostationary satellites illustrated in FIG. 5) are used to extend the capacity/throughput of TN (terrestrial networks) (i.e., the 5G terrestrial access illustrated in FIG. 5), and vice versa. In this scenario, the UE may be temporarily covered by dual radio access technology (RAT). For example, if the UE is in the same carrier (train/cruise ship/airplane) and the carrier stops over at position 1, and position 2 to position 5 as illustrated in FIG. 5, then the UE may be under dual RAT coverage at at least one of the positions 1 to 5, and may use the multi-3GPP access scenario provided by scenario 1 for communication.

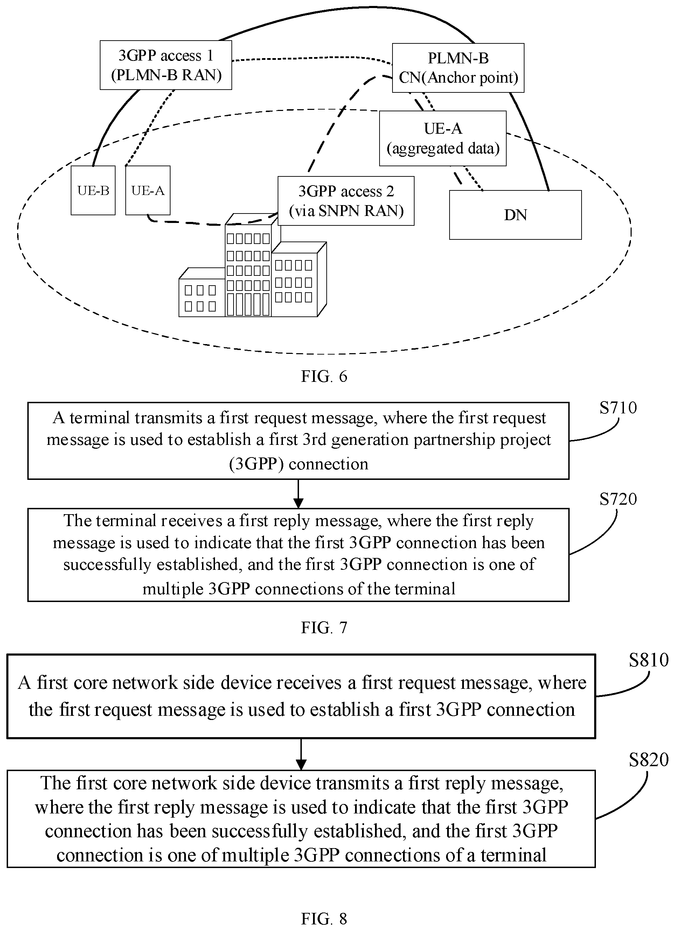

Scenario 2: dual PLMN or PLMN+SNPN. FIG. 6 illustrates an exemplary scenario of local dual 3GPP connections. For example, in FIG. 5, UE-A and UE-B are in a stadium. In FIG. 6, UE-B connects to the PLMN-B CN (anchor point) only through 3GPP access 1 (PLMN-B RAN). UE-A illustrated in FIG. 5 may obtain additional PLMN-B capacity using the local SNPN (i.e., 3GPP access 2 (via SNPN RAN) illustrated in FIG. 6) and the PLMN-B RAT (i.e., 3GPP access 1 (PLMN-B RAN) illustrated in FIG. 6), and vice versa. In this way, UE-A may access the PLMN-B CN (anchor point) through 3GPP access 1 (PLMN-B RAN) and 3GPP access 2 (via SNPN RAN). After the PLMN-B CN (anchor point), the data from the two 3GPP accesses of UE-A may be aggregated to obtain UE-A aggregated data, which is finally transmitted to the DN. FIG. 6 is for illustrative purposes only. The establishment of two 3GPP connections by UE-A can be temporary or on-demand, and the scenario illustrated in FIG. 6 may also be replaced with other similar scenarios, such as campuses, enterprises, factories, etc, which is not exhaustively listed or limited here.

The two scenarios above are merely illustrative examples. In addition to the two scenarios mentioned above, NR+LTE scenarios, dual-satellite access scenarios, and other possible multi-3GPP access scenarios are also possible, but they will not be listed exhaustively here.

It should be understood that the terms "system" and "network" are often used interchangeably in the present application. In the present application, the term "and/or" is merely a description of the relationship between related objects, indicating that there can be three relationships. For example, A and/or B may represent three cases: A exists alone, both A and B exist, and B exists alone. Additionally, the character "/" in the present application generally indicates that the objects before and after this character are in an "or" relationship. It should be understood that the "indicate" mentioned in the embodiments of the present application may be a direct indication, an indirect indication, or an indication of an association. For example, A indicating B may mean that A directly indicates B, for example, B may be obtained through A; it may also mean that A indirectly indicates B, for example, A indicates C, and B can be obtained through C; it may also mean that there is a relationship between A and B. In the description in the embodiments of the present application, the term "correspondence" may indicate that there is a direct or indirect correspondence between two things, or that there is an association between two things, or that there is a relationship of indicating and being indicated, configuring and being configured, etc.

To facilitate understanding of the technical solutions in the embodiments of the present application, the relevant technologies in the embodiments of the present application are described below. The following relevant technologies are optional solutions and can be combined with the technical solutions in the embodiments of the present application in any way, and they all fall within the protection scope of the embodiments of the present application.

FIG. 7 is a schematic flowchart of a communication method according to an embodiment of the present application. The method includes at least some of the following.

S710, a terminal transmits a first request message, where the first request message is used to establish a first 3rd generation partnership project (3GPP) connection.

S720, the terminal receives a first reply message, where the first reply message is used to indicate that the first 3GPP connection has been successfully established, and the first 3GPP connection is one of multiple 3GPP connections of the terminal.

FIG. 8 is a schematic flowchart of a key derivation method according to another embodiment of the present application. The method includes at least some of the following.

S810, a first core network side device receives a first request message, where the first request message is used to establish a first 3GPP connection.

S820, the first core network side device transmits a first reply message, where the first reply message is used to indicate that the first 3GPP connection has been successfully established, and the first 3GPP connection is one of multiple 3GPP connections of a terminal.

Here, the first core network side device may include a control plane node. For example, the control plane node may include one or more access and mobility management functions (AMFs). It should be understood that the above is only an illustrative example. In actual processing, the first core network side device is not limited to the control plane nodes listed above, and here, all possible network elements of the first core network side device are not exhaustively listed.

The terminal may be a 3GPP terminal, that is, a terminal that may access the 3GPP network to perform data transmission and reception. For example, the terminal may be a mobile phone, watch, pad, etc. This embodiment does not exhaustively list or limit all possible types of terminals.

The first 3GPP connection refers to a 3GPP connection not initially established by the terminal.

In some possible implementations, before the terminal transmits the first request message, the method further includes: receiving, by the terminal, a second reply message, where the second reply message is used to determine whether the terminal is allowed to establish the multiple 3GPP connections. Before receiving, by the terminal, a second reply message, the method further includes: transmitting, by the terminal, a second request message, where the second request message is used to establish a second 3GPP connection, and the second 3GPP connection is a 3GPP connection established by the terminal for the first time.

Before the first core network side device receives the first request message, the method further includes: transmitting, by the first core network side device, the second reply message, where the second reply message is used to determine whether the terminal is allowed to establish the multiple 3GPP connections. Before transmitting, by the first core network side device, the second reply message, the method further includes: receiving, by the first core network side device, a second request message, where the second request message is used to establish a second 3GPP connection, and the second 3GPP connection is the 3GPP connection requested to be established by the terminal for the first time.

The second 3GPP connection is the 3GPP connection established by the terminal for the first time. In some examples below, the second 3GPP connection may be alternatively described as an initial 3GPP connection established by the terminal, or a 3GPP connection established by the terminal for the first time, or the 3GPP connection initially established by the terminal, etc., which will not be explained again below.

Specifically, transmitting, by the terminal, the second request message may include: transmitting, by the terminal, the second request message to the first core network side device through an RRC (radio resource control) connection established with a first access network device. Accordingly, receiving, by the first core network side device, the second request message may include: receiving, by the first core network side device, the second request message transmitted by the terminal through the first access network device. The first access network device may be an access network device serving the terminal and the access network device corresponding to the second 3GPP connection, where the method by which the terminal establishes the RRC connection with the first access network device is not limited in this embodiment.

It should be understood that the second reply message may also be called a second response message, that is, the second reply message is a response message corresponding to the second request message. The second request message may be a registration request message; the second reply message may be a registration reply message. Further, the second request message may refer to a registration request message transmitted by the terminal for the first time; the second reply message may refer to a registration reply message corresponding to the registration request message transmitted by the terminal for the first time.

In an embodiment, the second request message may carry capability information of the terminal. Further, the second request message may also carry some or all of the content that is required to carry as specified in the relevant protocol. For example, the second request message is the registration request message, then the second request message may carry some or all of the content that the registration request message is required to carry as specified in the relevant protocol.

The capability indication of the terminal is used to indicate at least one of: the terminal supporting or requesting the establishment of the multiple 3GPP connections, or the number of the multiple 3GPP connections that the terminal supports or requests to establish.

In an example, the capability indication of the terminal may only indicate that the terminal supports or requests the establishment of the multiple 3GPP connections.

Optionally, the terminal supports or requests the establishment of the multiple 3GPP connections, and classification according to the granularity of connection type is not required.

Optionally, the terminal supports or requests the establishment of the multiple 3GPP connections, which may be classified according to the granularity of connection type. That is, the terminal supports or requests the establishment of the multiple 3GPP connections, which may include that the terminal supports or requests the establishment of the multiple 3GPP connections under each of one or more connection types.

The one or more connection types include at least one of: a control plane connection or a user plane connection. The one or more connection types may be determined from a variety of optional connection types, and the variety of optional connection types includes the control plane connection and the user plane connection. That is, the terminal supports or requests the establishment of the multiple 3GPP connections, which may include at least one of: the terminal supporting or requesting establishment of multiple user plane connections, or the terminal supporting or requesting establishment of multiple control plane connections.

The control plane connection may refer to a NAS connection, and the user plane connection may refer to a PDU session.

In an example, the capability indication of the terminal may only indicate the number of the multiple 3GPP connections that the terminal supports or requests to establish. In this example, the capability indication of the terminal may implicitly indicate that the terminal supports or requests to establish the multiple 3GPP connections through indicating the number of 3GPP connections that the terminal supports or requests to establish.

Optionally, the number of the multiple 3GPP connections that the terminal supports or requests to establish may not be classified according to the granularity of connection type. That is, the number of the multiple 3GPP connections that the terminal supports or requests to establish refers to a sum of numbers of all 3GPP connections that the terminal supports or requests to establish.

Optionally, the number of the multiple 3GPP connections that the terminal supports or requests to establish may be classified according to the granularity of connection type. That is, the number of the multiple 3GPP connections that the terminal supports or requests to establish includes: a respective number of the multiple 3GPP connections under each of one or more connection types that the terminal supports or requests to establish. Specifically, the number of the multiple 3GPP connections that the terminal supports or requests to establish may include at least one of: the number of user plane connections that the terminal supports or requests to establish, or the number of control plane connections that the terminal supports or requests to establish.

In an example, the capability indication of the terminal may indicate: the terminal supporting or requesting the establishment of the multiple 3GPP connections, and the number of the multiple 3GPP connections that the terminal supports or requests to establish. In this example, the description of the terminal supporting or requesting the establishment of the multiple 3GPP connections, and the description of the number of the multiple 3GPP connections that the terminal supports or requests to establish, are the same as those in the previous examples, and therefore will not be repeated.

After receiving the second request message, and before transmitting the second reply message, the first core network side device may perform the following processes: transmitting, by the first core network side device, the capability information of the terminal to a second core network side device; and receiving, by the first core network side device, subscription information of the terminal transmitted by the second core network side device.

The second core network side device may include UDM (user data management). It should be understood that this is only an exemplary description of the second core network side device. In actual processing, the second core network side device may include, but is not limited to UDM, for example, may further include UDR (user data repository), etc, which is not limited or exhaustive here.

The subscription information of the terminal includes at least one of: whether the terminal is allowed to establish the multiple 3GPP connections; a number of the multiple 3GPP connections that the terminal is allowed to establish; or respective frequency information corresponding to each 3GPP connection among the multiple 3GPP connections that the terminal is allowed to establish.

Optionally, whether the terminal is allowed to establish the multiple 3GPP connections may not be classified with granularity or may be classified without granularity.

Optionally, whether the terminal is allowed to establish the multiple 3GPP connections may be classified according to the granularity of connection type. That is, whether the terminal is allowed to establish the multiple 3GPP connections may include whether the terminal is allowed to establish the multiple 3GPP connections under each of one or more connection types. The descriptions of the one or more connection types are the same as those in the foregoing embodiments and will not be repeated here. Specifically, whether the terminal is allowed to establish the multiple 3GPP connections may include at least one of: whether the terminal is allowed to establish the multiple user plane connections, or whether the terminal is allowed to establish the multiple control plane connections.

Optionally, the number of the multiple 3GPP connections that the terminal is allowed to establish may not be classified according to the granularity of connection type. That is, the number of the multiple 3GPP connections that the terminal is allowed to establish refers to a sum of numbers of all 3GPP connections that the terminal is allowed to establish.

Optionally, the number of the multiple 3GPP connections that the terminal is allowed to establish may be classified according to the granularity of connection type. That is, the number of the multiple 3GPP connections that the terminal is allowed to establish includes: the number of 3GPP connections under each of the one or more connection types that the terminal is allowed to establish. Specifically, the number of the multiple 3GPP connections that the terminal is allowed to establish may include at least one of: the number of user plane connections that the terminal is allowed to establish, or the number of control plane connections that the terminal is allowed to establish.

The frequency information may include a radio frequency selection policy (RFSP). This RFSP may be used for the access network device to determine frequency information used when establishing a radio interface connection for the terminal.

In some possible examples, the subscription information of the terminal may include: the terminal being not allowed to establish the multiple 3GPP connections, and one 3GPP connection being allocated with the corresponding frequency information. In other words, the second core network side device may indicate in the subscription information of the terminal that the terminal is not allowed to establish the multiple 3GPP connections, and only carry the frequency information corresponding to one 3GPP connection established by the terminal. In some other possible examples, the subscription information of the terminal may include one 3GPP connection being allocated with the corresponding frequency information. In other words, the second core network side device may carry only the frequency information corresponding to one 3GPP connection in the subscription information of the terminal. In this example, it may be implicitly indicated, through the subscription information of the terminal, that the terminal is not allowed to establish the multiple 3GPP connections and/or the terminal is only allowed to establish one 3GPP connection.

In some embodiments, after the first core network side device receives the subscription information of the terminal transmitted by the second core network side device, the method may include: determining, by the first core network side device, UE context of the terminal based on the subscription information of the terminal and/or local policies, where the UE context includes at least one of the following information: a first indication, one or more association identifiers, one or more association identifier ranges, a condition under which the terminal is allowed to establish the multiple 3GPP connections, or a first temporary identifier.

After determining the UE context, the first core network side device may transmit the second reply message to the terminal. The content carried in the second reply message may include part or all of the content in the UE context. Specifically, the second reply message may carry at least one of: a first instruction, one or more association identifiers, one or more association identifier ranges, a condition under which the terminal is allowed to establish the multiple 3GPP connections, or a first temporary identifier.

The first indication is used to indicate at least one of: whether the terminal is allowed to establish the multiple 3GPP connections, or a number of the multiple 3GPP connections that the terminal is allowed to establish.

In an embodiment, the first indication is used only to indicate whether the terminal is allowed to establish the multiple 3GPP connections.

For example, the first indication may only indicate whether the terminal is allowed to establish the multiple 3GPP connections, and the indication manner may be a manner by taking a value or a manner by using specific descriptive information.

Taking an example that the first indication adopts the manner by taking a value to indicate whether the terminal is allowed to establish the multiple 3GPP connections, if the value is a first value, it means that the terminal is allowed to establish the multiple 3GPP connections; or if the value is a second value, it means that the terminal is not allowed to establish the multiple 3GPP connections. The first value and the second value are different.

For example, the multiple 3GPP connections may be classified according to granularity. The first indication may only indicate whether the terminal is allowed to establish the multiple 3GPP connections under each of one or more connection types. The indication manner may be a manner by taking a value or a manner by using specific descriptive information.

Taking an example that the first indication adopts the manner by taking a value to indicate whether the terminal is allowed to establish the multiple 3GPP connections under each of one or more connection types, the first indication may include two indication fields. Values of the two indication fields may respectively indicate whether the terminal is allowed to establish multiple user plane connections and whether the terminal is allowed to establish multiple control plane connections. For example, if the value of the first indication field included in the first indication is a third value, it means that the terminal is allowed to establish the multiple user plane connections; or if the value of the first indication field included in the first indication is a fourth value, it means that the terminal is not allowed to establish the multiple user plane connections; where the third value and the fourth value are different. For example, if the value of the second indication field included in the first indication is a fifth value, it means that the terminal is allowed to establish the multiple control plane connections; or if the value of the second indication field included in the first indication is a sixth value, it means that the terminal is not allowed to establish the multiple control plane connections; where the fifth value and the sixth value are different.

In an embodiment, the first indication is used only to indicate the number of the multiple 3GPP connections that the terminal is allowed to establish.

For example, the multiple 3GPP connections may not be classified with the granularity; that is, the first indication may only indicate the number of the multiple 3GPP connections that the terminal is allowed to establish. The indication manner may be a manner of directly including a quantity or a manner of indicating a value.

Taking an example that the first indication adopts the manner of directly including the quantity to indicate the number of the multiple 3GPP connections that the terminal is allowed to establish, the first indication may directly include 3. That is, the first indication is used to indicate that the number of the multiple 3GPP connections that the terminal is allowed to establish is 3. This is only a possible exemplary illustration and is not intended to limit the first indication.

Taking an example that the first indication adopts the manner of indicating a value to indicate the number of 3GPP connections that the terminal is allowed to establish, the first indication may be any one of a number of optional indication values. Each optional indication value may correspond to a respective quantity, and different optional indication values correspond to different quantities. For example, an optional indication value 001 corresponds to a quantity of 2, an optional indication value 002 may correspond to a quantity of 3, and so on. This is merely a possible illustrative example and is not intended to limit the first indication.

For example, the multiple 3GPP connections may be classified with granularity, and the number of the multiple 3GPP connections that the terminal is allowed to establish includes: a respective number of 3GPP connections under each of one or more connection types that the terminal is allowed to establish. That is, the first indication may indicate the number of user plane connections that the terminal is allowed to establish and/or the number of control plane connections that the terminal is allowed to establish. The specific indication manner may be a manner of directly including a quantity or a manner of indicating a value.

Taking an example that the first indication adopts the manner of directly including the quantity to indicate a respective number of 3GPP connections under each of one or more connection types that the terminal is allowed to establish, the first indication may include two quantity indication fields. The first quantity indication field corresponds to the control plane connection, and the second quantity indication field corresponds to the user plane connection. Assuming that the first quantity indication field in the first indication includes a value of 3 and the second quantity indication field includes a value of 2, that is, the first indication is used to indicate that the number of the multiple control plane connections that the terminal is allowed to establish is 3 and the number of the multiple user plane connections that the terminal is allowed to establish is 2. It should be understood that this is merely one possible illustrative example and is not intended as an exhaustive or limited list of all possible values for the first indication.

Taking an example that the first indication adopts the manner of indicating a value to indicate a respective number of 3GPP connections under each of one or more connection types that the terminal is allowed to establish, the first indication may include two quantity indication fields. The first quantity indication field corresponds to the control plane connection, and the second quantity indication field corresponds to the user plane connection. Assuming that the first quantity indication field in the first indication includes a first indication value and the second quantity indication field includes a second indication value, the first indication value and the second indication value may be the same or different. The first indication value and the second indication value may be any one of multiple optional indication values. Any optional indication value may correspond to a quantity, and different optional indication values may correspond to different quantities. For example, an optional indication value 001 may correspond to a quantity of 2, and an optional indication value 002 may correspond to a quantity of 3. It should be understood that this is merely one possible illustrative example and is not intended as an exhaustive or limited list of all possible values for the first indication.

In an embodiment, the first indication is used to indicate whether the terminal is allowed to establish the multiple 3GPP connections, and the number of the multiple 3GPP connections that the terminal is allowed to establish. In this embodiment, the specific description the specific indication manner and other related descriptions of indicating by the first indication that whether the terminal is allowed to establish the multiple 3GPP connections, the number of the multiple 3GPP connections that the terminal is allowed to establish are all the same as those in the previous embodiments, and therefore will not be repeated.

It should be understood that the first indication may be determined by the first core network side device based on the subscription information of the terminal and/or local policies. Examples are as follows.

Optionally, the subscription information of the terminal only includes whether the terminal is allowed to establish the multiple 3GPP connections, which is not classified with granularity or is classified without granularity.

In this case, the first indication may be the same as the content of the subscription information of the terminal, and the first indication may only indicate whether the terminal is allowed to establish the multiple 3GPP connections.

Alternatively, in this case, the first core network side device may further determine at least one of the following by combining the subscription information of the terminal and local policies: whether the terminal is allowed to establish the multiple 3GPP connections under each of one or more connection types, the number of the multiple 3GPP connections that the terminal is allowed to establish, or the number of the multiple 3GPP connections under each of one or more connection types that the terminal is allowed to establish. Accordingly, the first indication may be used to indicate at least one of: whether the terminal is allowed to establish the multiple 3GPP connections, the number of the multiple 3GPP connections that the terminal is allowed to establish, whether the terminal is allowed to establish the multiple 3GPP connections under each of one or more connection types, or the number of the multiple 3GPP connections under each of one or more connection types that the terminal is allowed to establish.

Optionally, the subscription information of the terminal may only include whether the terminal is allowed to establish 3GPP connections under each of one or more connection types.

In this case, the first indication may be the same as the content of the subscription information of the terminal, and the first indication may only indicate whether the terminal is allowed to establish the multiple 3GPP connections under each of one or more connection types.

Alternatively, in this case, the first indication may differ from the content of the subscription information of the terminal; for example, the first indication may only indicate whether the terminal is allowed to establish the multiple 3GPP connections.

Alternatively, in this case, the first core network side device may further determine at least one of the following by combining the subscription information of the terminal and local policies: whether the terminal is allowed to establish the multiple 3GPP connections under each of one or more connection types, the number of the multiple 3GPP connections that the terminal is allowed to establish, or the number of the multiple 3GPP connections under each of one or more connection types that the terminal is allowed to establish. Accordingly, the first indication may be used to indicate at least one of: whether the terminal is allowed to establish the multiple 3GPP connections, the number of the multiple 3GPP connections that the terminal is allowed to establish, whether the terminal is allowed to establish the multiple 3GPP connections under each of one or more connection types, or the number of the multiple 3GPP connections under each of one or more connection types that the terminal is allowed to establish.

Optionally, the subscription information of the terminal may include the number of the multiple 3GPP connections that the terminal is allowed to establish, which is not classified with granularity or is classified without granularity.

In this case, the first indication may be the same as the content of the subscription information of the terminal, and the first indication may only indicate the number of the multiple 3GPP connections that the terminal is allowed to establish.

Alternatively, in this case, the first indication may not be exactly the same as the content of the subscription information of the terminal. The first indication may indicate: the terminal being allowed to establish the multiple 3GPP connections, and the number of the multiple 3GPP connections that the terminal is allowed to establish.

Alternatively, in this case, the first core network side device may further determine at least one of the following by combining the subscription information of the terminal and local policies: the terminal being allowed to establish the multiple 3GPP connections under each of one or more connection types, or the number of the multiple 3GPP connections under each of one or more connection types that the terminal is allowed to establish. Accordingly, the first indication may be used to indicate at least one of: the terminal being allowed to establish the multiple 3GPP connections, the number of the multiple 3GPP connections that the terminal is allowed to establish, the terminal being allowed to establish the multiple 3GPP connections under each of one or more connection types, or the number of the multiple 3GPP connections under each of one or more connection types that the terminal is allowed to establish.

It should be understood that as long as the subscription information of the terminal including the number of the multiple 3GPP connections that the terminal is allowed to establish is within the scope of protection of this example, it is not limited here whether the subscription information of the terminal further includes at least one of: whether the terminal is allowed to establish the multiple 3GPP connections, or the respective frequency information corresponding to each of the multiple 3GPP connections that the terminal is allowed to establish.

Optionally, the subscription information of the terminal may include a respective number of 3GPP connections under each of one or more connection types that the terminal is allowed to establish.

In this case, the first indication may be the same as the content of the subscription information of the terminal, and the first indication may only indicate a respective number of 3GPP connections under each of one or more connection types that the terminal is allowed to establish.

Alternatively, in this case, the first indication may not be exactly the same as the content of the subscription information of the terminal. The first indication may indicate: the terminal being allowed to establish the multiple 3GPP connections under each of one or more connection types, and a respective number of the 3GPP connections under each of one or more connection types that the terminal is allowed to establish.

It should be understood that as long as the subscription information of the terminal including the number of 3GPP connections under each of the one or more connection types that the terminal is allowed to establish is within the scope of protection of this example, it is not limited here whether the subscription information of the terminal further includes at least one of: whether the terminal is allowed to establish the multiple 3GPP connections, or respective frequency information corresponding to each of the multiple 3GPP connections that the terminal is allowed to establish.

The condition under which the terminal is allowed to establish the multiple 3GPP connections include at least one of: a location where the terminal is allowed to establish the multiple 3GPP connections, a time when the terminal is allowed to establish the multiple 3GPP connections, or one or more access manners in which the terminal is allowed to establish the multiple 3GPP connections.

The location may include at least one of: one or more cells, one or more tracking areas (TAs), or one or more areas. The location where the terminal is allowed to establish the multiple 3GPP connections may include at least one of: one or more cells where the terminal is allowed to establish the multiple 3GPP connections, one or more TAs where the terminal is allowed to establish the multiple 3GPP connections, or one or more areas where the terminal is allowed to establish the multiple 3GPP connections.

Specifically, the one or more cells where the terminal is allowed to establish the multiple 3GPP connections may be represented as a respective identifier of each cell among the one or more cells where the terminal is allowed to establish the multiple 3GPP connections. For example, the identifier of any cell may be PCI (physical cell identifier).

The one or more TAs where the terminal is allowed to establish the multiple 3GPP connections may be specifically represented as a respective TAC (tracking area code) corresponding to each of the one or more TAs where the terminal is allowed to establish the multiple 3GPP connections.

The one or more areas where the terminal is allowed to establish the multiple 3GPP connections may be specifically represented as respective coordinates of each area among the one or more areas where the terminal is allowed to establish the multiple 3GPP connections. For example, the coordinates of any one area may be coordinates of a center point of any one area and/or coordinates of one or more boundary locations of any one area, etc. Any coordinate may be represented using the global positioning system (GPS) coordinate.

The time may include at least one of: one or more absolute time points (or one or more absolute moments), one or more absolute time periods, or establishment duration (or duration). A time unit of the absolute time point (or moment) may be a minute or a smaller time unit, such as a second, millisecond, microsecond, slot, etc., which is not limited or exhaustively listed in this embodiment.

The time when the terminal is allowed to establish the multiple 3GPP connections may include at least one of: one or more absolute time periods during which the terminal is allowed to establish the multiple 3GPP connections, one or more absolute time points (or absolute moments) when the terminal is allowed to establish the multiple 3GPP connections, or the establishment duration during which the terminal is allowed to establish the multiple 3GPP connections.

Optionally, the time when the terminal is allowed to establish the multiple 3GPP connections may include one or more absolute time periods during which the terminal is allowed to establish the multiple 3GPP connections. Any one absolute time period may include an absolute start time (or moment) and an absolute end time (or moment); and different absolute time periods may not overlap. For example, an absolute time period during which the terminal is allowed to establish the multiple 3GPP connections may include: the absolute start time the terminal is allowed to establish the multiple 3GPP connections may be 10:00 AM on a certain day, and the absolute end time may be 6:00 PM on the same day. This is only an example for illustration. In actual processing, any absolute time period may be set to other time periods, which is not limited or exhaustively listed here.

Optionally, the time when the terminal is allowed to establish the multiple 3GPP connections may include: one or more absolute time points (or absolute moments) when the terminal is allowed to establish the multiple 3GPP connections, and the establishment duration during which the terminal is allowed to establish the multiple 3GPP connections. In this case, any one absolute time point may be used as the absolute start time point (or moment) when the terminal is allowed to establish the multiple 3GPP connections, and the establishment duration may be used as a time length (or duration) after the absolute start time point during which the terminal is allowed to establish the multiple 3GPP connections. In this case, the terminal may construct or determine one or more absolute time periods during which the terminal is allowed to establish the multiple 3GPP connections, based on one or more absolute time points (or absolute moments) when the terminal is allowed to establish the multiple 3GPP connections and the establishment duration during which the terminal is allowed to establish the multiple 3GPP connections.

Optionally, the time when the terminal is allowed to establish the multiple 3GPP connections may include one or more absolute time points (or absolute moments) when the terminal is allowed to establish the multiple 3GPP connections. In this case, any one absolute time point may be used as the absolute start time point (or moment) when the terminal is allowed to establish the multiple 3GPP connections, without limiting the hold time or duration after the terminal establishes the multiple 3GPP connections.

Optionally, the time when the terminal is allowed to establish the multiple 3GPP connections may include multiple absolute time points (or absolute moments) when the terminal is allowed to establish the multiple 3GPP connections. Multiple absolute time points (or absolute moments) may be combined to obtain one or more absolute time periods. Each absolute time period may include an absolute start time point (or moment) and an absolute end time point (or moment). In this case, the terminal may determine one or more absolute time periods during which the terminal is allowed to establish the multiple 3GPP connections based on the multiple absolute time points when the terminal is allowed to establish the multiple 3GPP connections.

Optionally, the time when the terminal is allowed to establish the multiple 3GPP connections may include: the establishment duration during which the terminal is allowed to establish the multiple 3GPP connections. In this case, the start time when the terminal is allowed to establish the multiple 3GPP connections may not be limited, or the start time when the terminal is allowed to establish the multiple 3GPP connections may be configured in other ways, but the terminal may only maintain this establishment duration after the terminal starts establishing multiple 3GPP connections.

The one or more access manners in which the terminal is allowed to establish the multiple 3GPP connections may be configured according to actual conditions, and may include at least one of: allowing the terminal to establish the multiple 3GPP connections under NR access (or allowing the terminal to establish the multiple 3GPP connections of NR access), allowing the terminal to establish the multiple 3GPP connections under LTE access (or allowing the terminal to establish the multiple 3GPP connections of LTE access), or allowing the terminal to establish the multiple 3GPP connections under satellite access (or allowing the terminal to establish multiple 3GPP connections of satellite access). The one or more access manners in which the terminal is allowed to establish the multiple 3GPP connections may be determined from a variety of optional access manners. That is, the one or more access manners in which the terminal is allowed to establish the multiple 3GPP connections may be one or more of the variety of optional access manners; where the variety of optional access manners may include: the NR access, the LTE access, the satellite access, and the like.

The first temporary identifier may be a first GUTI (globally unique temporary UE identity).

The one or more association identifiers may be configured according to the actual situation. In this embodiment, the association identifier may also be called a candidate association identifier, or an optional association identifier, or a reference association identifier, or the like. If any of the candidate association identifier, optional association identifier, or reference association identifier is mentioned below, it is the same as the definition or meaning of the association identifier and will not be explained again.

Each of the one or more association identifiers is used to indicate a correspondence between at least one of the following and a 3GPP connection: the terminal, a connection type, an access manner, a network type, or a network identifier. The 3GPP connection mentioned here may refer to any 3GPP connection subsequently established by the terminal that is not the initial one. In other words, the association identifier is mainly used for the terminal to indicate the correspondence between at least one of the following and the N-th 3GPP connection by carrying an association parameter associated with the association identifier when initiating the establishment of the N-th 3GPP connection: the terminal, the connection type, the access manner, the network type, or the network identifier; N being an integer greater than or equal to 2.

The connection type, access manner, and other related descriptions are the same as those in the previous embodiments and will not be repeated. The network type may include at least one of: PLMN, SNPN, or the like, but not all possible network types are listed here. The network identifier may refer to a respective network identifier of each network under each network type in one or more network types; any one network identifier may be one of: one or more PLMN IDs under the PLMN type, one or more SNPN IDs under the SNPN type, or the like. Here, the network identifiers under all possible network types are not exhaustively listed or limited.

In an embodiment, the number of the association identifiers may be one, which is used to indicate the correspondence between the terminal and the 3GPP connection.

In an embodiment, the number of association identifiers may be multiple.

Optionally, each of the multiple association identifiers may be used to indicate that a 3GPP connection the establishment of which is initiated by the terminal is one of the multiple 3GPP connections established by the terminal, and may be used to indicate any one of the connection type, access manner, network type, or network identifier of the 3GPP connection the establishment of which is initiated by the terminal; and different association identifiers correspond to different connection types, or different access manners, or different network types, or different network identifiers.

Optionally, each of the multiple association identifiers may be used to indicate that a 3GPP connection the establishment of which is initiated by the terminal is one of the multiple 3GPP connections established by the terminal, and may be used to indicate at least two of the network identifier, network type, access manner, or connection type associated with the 3GPP connection the establishment of which is initiated by the terminal. Furthermore, different association identifiers correspond to at least two of: different network identifiers, different network types, different access manners, or different connection types.

The one or more association identifier ranges may be configured according to the actual situation. In this embodiment, the association identifier range may also be called the candidate association identifier range, the optional association identifier range, or the reference association identifier range, or the like. If any of the candidate association identifier range, optional association identifier range, or reference association identifier range is mentioned below, it is the same as the definition or meaning of the association identifier range and will not be explained again.

Each of the one or more association identifier ranges is used to indicate the correspondence between at least one of the following and a 3GPP connection: the terminal, the connection type, the access manner, the network type, or the network identifier. It should be noted that any value of each of the one or more association identifier ranges may be used to indicate the correspondence between at least one of the following and the 3GPP connection: the terminal, the connection type, the access manner, the network type, or the network identifier. The description of 3GPP connection mentioned here is the same as that in the aforementioned embodiments and will not be repeated.

In an embodiment, the number of the association identifier ranges may be one. The function of this one association identifier range is to indicate that a certain 3GPP connection the establishment of which is initiated by the terminal is one of the multiple 3GPP connections established by the terminal.

In an embodiment, the number of association identifier ranges may be multiple.

Optionally, each of the multiple association identifier ranges may be used to indicate that a 3GPP connection the establishment of which is initiated by the terminal is one of the multiple 3GPP connections established by the terminal, and may also indicate any one of the connection type, access manner, network type, or network identifier of the 3GPP connection the establishment of which is initiated by the terminal. Furthermore, different association identifier ranges correspond to different connection types, different access manners, different network types, or different network identifiers.

Optionally, each of the multiple association identifier ranges may be used to indicate a 3GPP connection established by the terminal is one of the multiple 3GPP connections the establishment of which is initiated by the terminal, and to indicate at least two of the network identifier, network type, access manner, or connection type associated with the 3GPP connection the establishment of which is initiated by the terminal. Furthermore, different association identifier ranges correspond to at least two of the following: different network identifiers, different network types, different access manners, or different connection types.

In some embodiments, the aforementioned second request message is used to establish a second 3GPP connection; therefore, the second reply message is also used to indicate whether the second 3GPP connection has been successfully established. Preferably, the second reply message is used to indicate that the second 3GPP connection has been successfully established.

In this embodiment, the first core network side device will further determine information related to the second 3GPP connection. Specifically, after the first core network side device receives the subscription information of the terminal transmitted by the second core network side device, the method may further include: determining, by the first core network side device, at least one of the following information based on the subscription information of the terminal and/or local policies: an identifier of the second 3GPP connection, a connection level indication corresponding to the second 3GPP connection, or a paging indication corresponding to the second 3GPP connection.

After determining at least one of: the identifier of the second 3GPP connection, the connection level indication corresponding to the second 3GPP connection, or the paging indication corresponding to the second 3GPP connection, the first core network side device may transmit the second reply message to the terminal. The content carried in the second reply message may include part or all of the above-mentioned identifier of the second 3GPP connection, the connection level indication corresponding to the second 3GPP connection, and the paging indication corresponding to the second 3GPP connection. Specifically, the second reply message further carries at least one of: the identifier of the second 3GPP connection, the connection level indication corresponding to the second 3GPP connection, or the paging indication corresponding to the second 3GPP connection.

The identifier of the second 3GPP connection may be at least one of: an ID of the second 3GPP connection, a serial number of the second 3GPP connection, a sequence number of the second 3GPP connection, or the like. As long as the identifier of the second 3GPP connection being able to uniquely recognize or uniquely identify the second 3GPP connection is within the protection scope of this embodiment, the possible contents or expressions that the identifier of the second 3GPP connection may contain are not exhaustively listed or limited.

The connection level indication is used to determine whether to perform a specified process through a corresponding 3GPP connection. The specified process may include at least one of: a paging-related process, or a registration update process.

The paging-related process may include a paging response, which means that after receiving a paging message, the terminal transmits an uplink service request or registration request message through the corresponding 3GPP connection (e.g., a control plane connection).

Multiple optional connection level indications may be pre-configured at the first core network side device. These multiple optional connection level indications may include at least two of: high (or high level or high grade), medium (or medium level), low (or low level or low grade), high priority, low priority, medium priority, multiple optional scores, or the like, where each optional score among the multiple optional scores may be a specific score.

The first core network side device pre-configures the above-mentioned multiple optional connection level indications according to the actual situation. For example, the multiple optional connection level indications may include: high (or high level or high grade), and low (or low level or low grade); or the multiple optional connection level indications may include: high (or high level or high grade), medium (or medium level), and low (or low level or low grade); or the multiple optional connection level indications may include: high priority, and low priority; or the multiple optional connection level indications may include: the multiple optional scores. The above is merely an illustrative example; it does not limit or exhaustively describe all possible ways or contents of the multiple optional connection level indications.

The connection level indication corresponding to the second 3GPP connection may include one of: the connection level indication corresponding to the second 3GPP connection being high (or high level or high grade), the connection level indication corresponding to the second 3GPP connection being medium (or medium level), the connection level indication corresponding to the second 3GPP connection being low (or low level or low grade), the connection level indication corresponding to the second 3GPP connection being high priority, the connection level indication corresponding to the second 3GPP connection being low priority, the connection level indication corresponding to the second 3GPP connection being medium priority, or the connection level indication corresponding to the second 3GPP connection being a score. The specific connection level indication assigned to a particular connection by the first core network side device may be determined by the first core network side device according to the actual situation, which is not limited in the present embodiment.

The paging indication is used to determine whether to perform a paging-related process through the corresponding 3GPP connection. Multiple optional paging indications may be pre-configured at the first core network side device. Specifically, the multiple optional paging indications may be multiple optional paging indication values. The length of any optional paging indication value may be set according to the actual situation, such as 1 bit or more bits, which is not limited here.

The paging indication corresponding to the second 3GPP connection may include one of: a first paging indication value or a second paging indication value. The first paging indication value indicates that the paging-related process is performed through the second 3GPP connection, while the second paging indication value indicates that the paging-related process cannot be performed through the second 3GPP connection. In this embodiment, as long as the first paging indication value is different from the second paging indication value, it is within the protection scope of this embodiment. For example, the first paging indication value may be 1 and the second paging indication value may be 0, or vice versa, which is not limited or exhaustive listed here. The specific type of paging indication (i.e., whether to assign the first paging indication value or the second paging indication value) that the first core network side device assigns to a certain connection may be determined by the first core network side device according to the actual situation, which is not limited in the present embodiment.

In another possible embodiment, the second request message, i.e., the registration request message transmitted by the terminal for the first time, may carry only some or all of the content that the registration request message is required to carry as specified in the relevant protocol, without carrying the capability indication of the terminal.

In this embodiment, after receiving the second request message, the first core network side device may perform the following processes: obtaining, by the first core network side device, the subscription information of the terminal from the second core network side device; based on the subscription information of the terminal and/or local policies, determining, by the first core network side device, at least one of: the first indication, the one or more association identifiers, the one or more association identifier ranges, the condition under which the terminal is allowed to establish the multiple 3GPP connections, the first temporary identifier, the identifier of the second 3GPP connection, the connection level indication corresponding to the second 3GPP connection, or the paging indication corresponding to the second 3GPP connection.

The only difference between this embodiment and the above embodiments is that the first core network side device does not need to obtain the capability information of the terminal, but directly determines at least one of the following through the subscription information of the terminal and/or local policies: the first indication, the one or more association identifiers, the one or more association identifier ranges, the condition under which the terminal is allowed to establish the multiple 3GPP connections, the first temporary identifier, the identifier of the second 3GPP connection, the connection level indication corresponding to the second 3GPP connection, or the paging indication corresponding to the second 3GPP connection. Then, the first core network side device may transmit the second reply message to the terminal. The content carried in the second reply message may include some or all of at least one of the above-mentioned information. Specifically, the second reply message may carry at least one of: the first indication, the one or more association identifiers, the one or more association identifier ranges, the condition under which the terminal is allowed to establish the multiple 3GPP connections, the first temporary identifier, the identifier of the second 3GPP connection, the connection level indication corresponding to the second 3GPP connection, or the paging indication corresponding to the second 3GPP connection.

In this embodiment, the detailed descriptions of each piece of information, including the first indication, the one or more association identifiers, the one or more association identifier ranges, the condition under which the terminal is allowed to establish the multiple 3GPP connections, the first temporary identifier, the identifier of the second 3GPP connection, the connection level indication corresponding to the second 3GPP connection, or the paging indication corresponding to the second 3GPP connection, are the same as those in the previous embodiments, and therefore will not be repeated.

In some possible implementations, transmitting, by the terminal, the first request message includes: in a case where a first condition is met, transmitting, by the terminal, the first request message, where the first condition includes at least one of: a condition under which the terminal is allowed to establish the multiple 3GPP connections, or determining, based on a first indication, that the terminal is allowed to establish the multiple 3GPP connections.

In one embodiment, the first condition may include only the condition under which the terminal is allowed to establish the multiple 3GPP connections. In other words, if the terminal meets the condition under which the terminal is allowed to establish the multiple 3GPP connections, then it may be determined that the first condition is met.

The condition under which the terminal is allowed to establish the multiple 3GPP connections includes at least one of: a location where the terminal is allowed to establish the multiple 3GPP connections, a time when the terminal is allowed to establish the multiple 3GPP connections, or one or more access manners in which the terminal is allowed to establish the multiple 3GPP connections. The processing of determining that the terminal meets the condition under which the terminal is allowed to establish the multiple 3GPP connections may include at least one of: determining to meet the condition under which the terminal is allowed to establish the multiple 3GPP connections in a case where at least one of the following is met: the location where the terminal is currently located being the location where the terminal is allowed to establish the multiple 3GPP connections, the current time being the time when the terminal is allowed to establish the multiple 3GPP connections, or the access manner of the first 3GPP connection being one of the one or more access manners in which the terminal is allowed to establish the multiple 3GPP connections.

The location where the terminal is allowed to establish the multiple 3GPP connections may include at least one of: one or more cells where the terminal is allowed to establish the multiple 3GPP connections, one or more TAs where the terminal is allowed to establish the multiple 3GPP connections, or one or more areas where the terminal is allowed to establish the multiple 3GPP connections.

Accordingly, the method for determining whether the current location of the terminal is the location where the terminal is allowed to establish the multiple 3GPP connections may include at least one of: the terminal determining whether a cell corresponding to the current location is one of one or more cells where the terminal is allowed to establish the multiple 3GPP connections; the terminal determining whether a TA corresponding to the current location is one of one or more TAs where the terminal is allowed to establish the multiple 3GPP connections; or the terminal determining whether the current location is within any one of one or more areas where the terminal is allowed to establish the multiple 3GPP connections.

The time when the terminal is allowed to establish the multiple 3GPP connections may include at least one of: one or more absolute time periods during which the terminal is allowed to establish the multiple 3GPP connections, one or more absolute time points (or absolute moments) when the terminal is allowed to establish the multiple 3GPP connections, or the establishment duration during which the terminal is allowed to establish the multiple 3GPP connections.

Accordingly, the method for determining whether the current moment is the time when the terminal is allowed to establish the multiple 3GPP connections may include at least one of: the terminal determining whether the current moment is within any one of one or more absolute time periods during which the terminal is allowed to establish the multiple 3GPP connections; the terminal determining whether the current moment is within one of one or more absolute time points when the terminal is allowed to establish the multiple 3GPP connections; or the terminal determining whether the current moment is within the establishment duration during which the terminal is allowed to establish the multiple 3GPP connections.

It should be noted that the processing performed by the terminal is related to the number or specific details of the condition under which the terminal is allowed to establish the multiple 3GPP connections.

For example, if the condition under which the terminal is allowed to establish the multiple 3GPP connections is only the location where the terminal is allowed to establish the multiple 3GPP connections, then the terminal only needs to determine that the condition under which the terminal is allowed to establish the multiple 3GPP connections is met, in a case where the current location is the location where the terminal is allowed to establish the multiple 3GPP connections.

For example, the condition under which the terminal is allowed to establish the multiple 3GPP connections include: one or more cells where the terminal is allowed to establish the multiple 3GPP connections, and the access manners in which the terminal is allowed to establish the multiple 3GPP connections include NR access and satellite access. Accordingly, the processing of the terminal includes: in a case where the cell corresponding to the current location is one of one or more cells where the terminal is allowed to establish the multiple 3GPP connections, and the access manner of the first 3GPP connection is the NR access through which the terminal is allowed to establish the multiple 3GPP connections, determining that the condition under which the terminal is allowed to establish the multiple 3GPP connections is met.

For example, the condition under which the terminal is allowed to establish the multiple 3GPP connections include: one or more areas where the terminal is allowed to establish the multiple 3GPP connections, and one or more absolute time periods during which the terminal is allowed to establish the multiple 3GPP connections. Accordingly, the processing of the terminal may include: in a case where the location where the terminal is currently located is within any one of one or more areas where the terminal is allowed to establish the multiple 3GPP connections, and the current moment is within any one of one or more absolute time periods during which the terminal is allowed to establish the multiple 3GPP connections, then determining that the condition under which the terminal is allowed to establish the multiple 3GPP connections is met.

For example, the condition under which the terminal is allowed to establish the multiple 3GPP connections include: one or more cells where the terminal is allowed to establish the multiple 3GPP connections, one or more absolute time points when the terminal is allowed to establish the multiple 3GPP connections, and access manners in which the terminal is allowed to establish the multiple 3GPP connections including NR access and satellite access. Accordingly, the processing of the terminal may include: in a case where the location where the terminal is currently located is within any one of one or more areas where the terminal is allowed to establish the multiple 3GPP connections, the current moment is any one of one or more absolute time points when the terminal is allowed to establish the multiple 3GPP connections, and the access manner of the first 3GPP connection is the satellite access through which the terminal is allowed to establish the multiple 3GPP connections, then determining that the condition under which the terminal is allowed to establish the multiple 3GPP connections is met.

It should be understood that the above is merely an illustrative example, and no limit or exhaustive list is made on each combination and its corresponding determining and processing methods.

In an embodiment, the first condition may only include determining, based on the first indication, that the terminal is allowed to establish the multiple 3GPP connections. In other words, in a case where the terminal determines that the terminal is allowed to establish the multiple 3GPP connections based on the first indication, it may be determined that the first condition is met.

The first indication is used to indicate at least one of: whether the terminal is allowed to establish the multiple 3GPP connections, or the number of the multiple 3GPP connections that the terminal is allowed to establish. A detailed description of the first indication will not be repeated here. Accordingly, the processing of determining, by the terminal, based on the first indication that the terminal is allowed to establish the multiple 3GPP connections may include: determining that the terminal is allowed to establish the multiple 3GPP connections, in a case where the first indication is used to indicate that the terminal is allowed to establish the multiple 3GPP connections, and/or the first indication is used to indicate the number of the multiple 3GPP connections that the terminal is allowed to establish and the number is greater than 1.

Further, the first indication is used to indicate at least one of: whether the terminal is allowed to establish the multiple 3GPP connections under each of one or more connection types, or the number of 3GPP connections under each of one or more connection types that the terminal is allowed to establish; where the one or more connection types may include user plane connection and/or control plane connection. Accordingly, the processing of determining, by the terminal based on the first indication that the terminal is allowed to establish the multiple 3GPP connections may include at least one of: in a case where the first indication is used to indicate that the terminal is allowed to establish multiple control plane connections, and/or the first indication is used to indicate the number of control plane connections that the terminal is allowed to establish and the number is greater than 1, determining that the terminal is allowed to establish multiple control plane connections; or in a case where the first indication is used to indicate that the terminal is allowed to establish multiple user plane connections, and/or the first indication is used to indicate the number of user plane connections that the terminal is allowed to establish and the number is greater than 1, determining that the terminal is allowed to establish multiple user plane connections.

In an embodiment, the first condition includes the condition under which the terminal is allowed to establish the multiple 3GPP connections, and determining, based on the first indication, that the terminal is allowed to establish the multiple 3GPP connections.

The processing of determining, by the terminal, that the first condition is met may include: determining that the first condition is met, in a case where it is determined that the condition under which the terminal is allowed to establish the multiple 3GPP connections is met, and the terminal being allowed to establish the multiple 3GPP connections is determined based on a first indication. In this embodiment, the specific processing of determining, by the terminal, that the condition under which the terminal is allowed to establish the multiple 3GPP connections is met, and the specific processing of determining, by the terminal based on the first indication, that the terminal is allowed to establish the multiple 3GPP connections, are the same as the detailed description in the foregoing embodiments, and therefore will not be repeated.

In some embodiments, the first request message is used to establish the first 3GPP connection of the terminal. The first 3GPP connection may be a new 3GPP connection established by the terminal while maintaining one or more existing 3GPP connections. The one or more existing 3GPP connections include at least the second 3GPP connection. In other words, the first request message is used to establish the new 3GPP connection that is a non-first 3GPP connection established, non-initial 3GPP connection established, or not initially established 3GPP connection.

It should be noted that the first 3GPP connection is any non-initial 3GPP connection established except the 3GPP connection initially established by the terminal (i.e., the second 3GPP connection). Since the establishment and related processing methods of each non-initial 3GPP connection established by the terminal are the same as the related processing methods of the first 3GPP connection, the related processing of each non-initial established 3GPP connection will not be described in detail below. It should be understood that for the sake of brevity, the following description only takes the first 3GPP connection as an example to explain the related processing of the non-initial established 3GPP connection. It does not mean that the terminal in the solution provided by the present application can only establish the first 3GPP connection and the second 3GPP connection.

The terminal transmitting the first request message may include: transmitting, by the terminal, the first request message to the first core network side device through an RRC connection established with the second access network device. Accordingly, the first core network side device receiving the first request message may include: receiving, by the first core network side device, the first request message transmitted by the terminal through the second access network device. The second access network device may be an access network device serving the terminal and an access network device corresponding to the first 3GPP connection. The method by which the terminal establishes the RRC connection with the second access network device is not limited in this embodiment. The second access network device may be the same as or different from the first access network device; the RRC connection carrying the first request message (NAS message) and the RRC connection carrying the second request message (NAS message) may be the same as or different from each other.

The first request message may carry at least one of: a capability indication of the terminal, a first association parameter, a connection identifier, or a first temporary identifier. Further, the first request message may further carry some or all of the content that is required to carry as specified in the relevant protocol. For example, the first request message is a registration request message, and the first request message may be the registration request message. Specifically, the first request message may refer to a registration request message which is not initially transmitted by the terminal.

The capability indication of the terminal may be the optional content. The detailed description of the capability information of the terminal is the same as that in the previous embodiments and will not be repeated.

The first temporary identifier is obtained by the terminal from the second reply message. The relevant description of the first temporary identifier is the same as that in the previous embodiments, and will not be repeated here. It should be understood that by carrying the first temporary identifier in the first request message, the receiving side, i.e., the first core network side device, may also know or determine that the first 3GPP connection the establishment of which being currently initiated is not the 3GPP connection initially established by the terminal, but a new 3GPP connection that the terminal further requests to establish on the basis of having already established and maintained one or more 3GPP connections.

The connection identifier includes at least one of: an identifier of the first 3GPP connection, or a respective identifier of each of one or more 3GPP connections of the terminal other than the first 3GPP connection.

The identifier of the first 3GPP connection may be at least one of: an ID of the first 3GPP connection, a serial number of the first 3GPP connection, a sequence number of the first 3GPP connection, or the like. As long as the identifier of the first 3GPP connection being able to uniquely recognize or uniquely identify the first 3GPP connection is within the protection scope of this embodiment, the possible contents or expressions that the identifier of the first 3GPP connection may contain are not exhaustively listed or limited.

The respective identifier of each of the one or more 3GPP connections of the terminal other than the first 3GPP connection may refer to a respective identifier of each of the one or more 3GPP connections that the terminal has established, other than the first 3GPP connection. The one or more 3GPP connections that the terminal has established include at least the second 3GPP connection.

Optionally, in a case where the terminal is able to allocate the identifier of the first 3GPP connection and the terminal has locally allocated the identifier of the first 3GPP connection, the connection identifier may carry the identifier of the first 3GPP connection; further, the connection identifier may further carry the respective identifier of each of the one or more 3GPP connections of the terminal other than the first 3GPP connection.

Optionally, in a case where the terminal is unable to allocate the identifier of the first 3GPP connection, or in a case where the terminal has not allocated the identifier of the first 3GPP connection, the connection identifier may only carry the respective identifier of each of the one or more 3GPP connections of the terminal other than the first 3GPP connection.

The first association parameter is used to indicate that the first 3GPP connection is one of the multiple 3GPP connections of the terminal. Where the first association parameter is determined based on one or more association identifiers, or the first association parameter is determined based on one or more association identifier ranges.

In an embodiment, the first core network side device configures an association identifier for the terminal through the second reply message.

In this case, the first association parameter is the association identifier. Further, the purpose of the association identifier is to indicate that a certain 3GPP connection is one of the multiple 3GPP connections established by a terminal. In other words, by carrying the first association parameter (i.e., association identifier) in the second request message, the terminal may enable the receiving side, i.e., the first core network side device, to determine that the first 3GPP connection currently requested to be established is not the 3GPP connection initially established by the terminal, but one of the multiple 3GPP connections of the terminal. In other words, by carrying the first association parameter (i.e., association identifier) in the second request message, the terminal may enable the receiving side, i.e., the first core network side device, to determine that the first 3GPP connection currently requested to be established by the terminal is not the 3GPP connection initially established by the terminal, but a new 3GPP connection that the terminal further requests to establish on the basis of having already maintained one or more 3GPP connections.

In an embodiment, the first core network side device configures multiple association identifiers for the terminal through the second reply message.

In this case, the first association parameter is one of the multiple association identifiers. The first association parameter is used to indicate that the first 3GPP connection is one of the multiple 3GPP connections of the terminal, and the first association parameter is related to at least one of: a connection type of the first 3GPP connection, an access manner corresponding to the first 3GPP connection, a network type corresponding to the first 3GPP connection, or a network identifier corresponding to the first 3GPP connection.

Further, the first association parameter may be allocated or determined based on at least one of: the connection type of the first 3GPP connection, the access manner corresponding to the first 3GPP connection, the network type corresponding to the first 3GPP connection, or the network identifier corresponding to the first 3GPP connection.

More specifically, the first association parameter may be determined from the multiple association identifiers based on at least one of: the connection type of the first 3GPP connection, the access manner corresponding to the first 3GPP connection, the network type corresponding to the first 3GPP connection, or the network identifier corresponding to the first 3GPP connection. In other words, by carrying the first association parameter (i.e., one of the multiple association identifiers) in the second request message, the terminal may enable the receiving side, i.e., the first core network side device, to determine that the first 3GPP connection currently requested to be established is not the 3GPP connection initially established by the terminal, but a new 3GPP connection that the terminal further requests to establish on the basis of having already maintained one or more 3GPP connections. Furthermore, the terminal may further enable the first core network side device to determine or know at least one of: the connection type of the first 3GPP connection, the access manner corresponding to the first 3GPP connection, the network type corresponding to the first 3GPP connection, or the network identifier corresponding to the first 3GPP connection.

Optionally, each of the multiple association identifiers may be used to indicate that a 3GPP connection the establishment of which is initiated by the terminal is one of the multiple 3GPP connections established by the terminal, and may be used to indicate any one of: the connection type, access manner, network type, or network identifier of the 3GPP connection the establishment of which is initiated by the terminal; and different association identifiers correspond to different connection types, or different access manners, or different network types, or different network identifiers.

The first association parameter may be determined from the multiple association identifiers based on one of: the connection type of the first 3GPP connection, the access manner corresponding to the first 3GPP connection, the network type corresponding to the first 3GPP connection, or the network identifier corresponding to the first 3GPP connection.

For example, the multiple association identifiers may include association identifier 1 and association identifier 2. Association identifier 1 is used to indicate that a certain 3GPP connection is one of the multiple 3GPP connections of the terminal and the connection type is the user plane connection. Association identifier 2 is used to indicate that a certain 3GPP connection is one of the multiple 3GPP connections of the terminal and the connection type is the control plane connection. The specific values of association identifier 1 and association identifier 2 may be configured according to the actual situation. For example, association identifier 1 may be "001" or "0a", etc., and association identifier 2 may be "002" or "010" or "0b", etc. The possible values of multiple association identifiers are not limited or exhaustively listed here.

Accordingly, the first association parameter may be determined from the multiple association identifiers based on the connection type of the first 3GPP connection; for example, if the first 3GPP connection is the control plane connection, then the first association parameter is association identifier 2 (e.g., the specific value may be 002).

For example, the multiple association identifiers may include association identifier 3, association identifier 4, and association identifier 5. Association identifier 3 is used to indicate that a certain 3GPP connection is one of the multiple 3GPP connections of the terminal and the access manner is the NR access. Association identifier 4 is used to indicate that a certain 3GPP connection is one of the multiple 3GPP connections of the terminal and the access manner is the LTE access. Association identifier 5 is used to indicate that a certain 3GPP connection is one of the multiple 3GPP connections of the terminal and the access manner is the satellite access. The specific values of association identifiers 3 to 5 may be configured according to the actual situation. For example, association identifier 3 may be "003", "010", or "0c", etc., association identifier 4 may be "004", "011", or "0d", etc., and association identifier 5 may be "005". The possible values of multiple association identifiers are not limited or exhaustively listed here.

Accordingly, the first association parameter may be determined from the multiple association identifiers based on the access manner corresponding to the first 3GPP connection; for example, if the access manner corresponding to the first 3GPP connection is the LTE access, then the first association parameter is association identifier 4 (e.g., the specific value may be 004).

For example, the multiple association identifiers may include association identifier 6 and association identifier 7, where association identifier 6 is used to indicate that a certain 3GPP connection is one of the multiple 3GPP connections of the terminal and the network type is the PLMN, and association identifier 7 is used to indicate that a certain 3GPP connection is one of the multiple 3GPP connections of the terminal and the network type is the SNPN. The specific values of the association identifier 6 and association identifier 7 may be configured according to the actual situation. For example, association identifier 6 may be "006", "06", or "0f", etc., and association identifier 7 may be "007", "0g", or "07", etc. The possible values of multiple association identifiers are not limited or exhaustively listed here.

Accordingly, the first association parameter may be determined from the multiple association identifiers based on the network type corresponding to the first 3GPP connection; for example, if the network type corresponding to the first 3GPP connection is the PLMN, then the first association parameter is association identifier 6 (e.g., the specific value may be 006).

Optionally, each of the multiple association identifiers may be used to indicate that a 3GPP connection the establishment of which is initiated by the terminal is one of the multiple 3GPP connections established by the terminal, and may be used to indicate at least two of the network identifier, network type, access manner, or connection type associated with the 3GPP connection the establishment of which is initiated by the terminal. Furthermore, different association identifiers correspond to at least two of: different network identifiers, different network types, different access manners, or different connection types.

The first association parameter may be determined from the multiple association identifiers based on the following two: the connection type of the first 3GPP connection, the access manner corresponding to the first 3GPP connection, the network type corresponding to the first 3GPP connection, or the network identifier corresponding to the first 3GPP connection.

For example, the multiple association identifiers may include association identifier a1, association identifier a2, and association identifier a3. Association identifier a1 indicates that a certain 3GPP connection is one of the multiple 3GPP connections of the terminal, the connection type is the NAS connection, the access manner is the NR access, the network type is the PLMN, and the network identifier is PLMN ID1. Association identifier a2 indicates that a certain 3GPP connection is one of the multiple 3GPP connections of the terminal, the connection type is the control plane connection, the access manner is the LTE access, the network type is the PLMN, and the network identifier is PLMN ID2. Association identifier a3 indicates that a certain 3GPP connection is one of the multiple 3GPP connections of the terminal, the connection type is the user plane connection, the access manner is the NR access, the network type is SNPN, and the network identifier is SNPN ID2. The specific values of the association identifiers a1 to a3 may be configured according to the actual situation. For example, association identifier a1 may be "a001", association identifier a2 may be "a002", and association identifier a3 may be "a003", and so on. The possible values of multiple association identifiers are not limited or exhaustively listed here.

Accordingly, the first association parameter may be determined from the multiple association identifiers based on the connection type of the first 3GPP connection, the access manner corresponding to the first 3GPP connection, the network type corresponding to the first 3GPP connection, and the network identifier corresponding to the first 3GPP connection. For example, if the connection type of the first 3GPP connection is the control plane connection, the access manner corresponding to the first 3GPP connection is the LTE access, the network type corresponding to the first 3GPP connection is the PLMN, and the network identifier corresponding to the first 3GPP connection is PLMN ID2, then the first association parameter is association identifier a2 (e.g., the specific value may be a002).

In an embodiment, the first core network side device configures an association identifier range for the terminal through the second reply message.

In this case, the first association parameter is determined based on the association identifier range. Specifically, the first association parameter may be any value within the association identifier range. This embodiment does not limit which value within the association identifier range the first association parameter takes.

The purpose of the association identifier range is to indicate that a certain 3GPP connection is one of the multiple 3GPP connections established by a terminal. In other words, by carrying the first association parameter (i.e., any value in the association identifier range) in the second request message, the terminal may enable the receiving side, i.e. the first core network side device, to determine that the first 3GPP connection currently requested to be established is not the 3GPP connection initially established by the terminal, but one of the multiple 3GPP connections of the terminal. In other words, by carrying the first association parameter in the second request message, the terminal may enable the receiving side, i.e., the first core network side device, to determine that the first 3GPP connection currently requested to be established is not the 3GPP connection initially established by the terminal, but a new 3GPP connection that the terminal further requests to establish on the basis of having already maintained one or more 3GPP connections.

For example, the association identifier range may include "001 to 005". The terminal may select any value between 001 and 005 as the first association parameter, for example, may select "002" as the first association parameter. Then, by carrying the first association parameter (i.e., 002) in the second request message, the terminal may enable the receiving side, i.e. the first core network side device, determine that the first 3GPP connection currently requested to be established is not the 3GPP connection initially established by the terminal, but a new 3GPP connection that the terminal further requests to establish on the basis of having already maintained one or more 3GPP connections.

In an embodiment, the first core network side device configures multiple association identifier ranges for the terminal through the second reply message.

In this case, the first association parameter is determined based on the multiple association identifier ranges. The first association parameter is used to indicate that the first 3GPP connection is one of the multiple 3GPP connections of the terminal, and the first association parameter is related to at least one of: the connection type of the first 3GPP connection, the access manner corresponding to the first 3GPP connection, the network type corresponding to the first 3GPP connection, or the network identifier corresponding to the first 3GPP connection.

Further, the first association parameter may be allocated or determined based on at least one of: the connection type of the first 3GPP connection, the access manner corresponding to the first 3GPP connection, the network type corresponding to the first 3GPP connection, or the network identifier corresponding to the first 3GPP connection.

More specifically, the first association parameter may be determined from the multiple association identifier ranges based on at least one of: the connection type of the first 3GPP connection, the access manner corresponding to the first 3GPP connection, the network type corresponding to the first 3GPP connection, or the network identifier corresponding to the first 3GPP connection. In other words, by carrying the first association parameter (i.e., any value in one of the multiple association identifier ranges) in the second request message, the terminal may enable the receiving side, i.e. the first core network side device, to determine that the first 3GPP connection currently requested to be established is not the 3GPP connection initially established by the terminal, but a new 3GPP connection that the terminal further requests to establish on the basis of having already maintained one or more 3GPP connections. Furthermore, the terminal may further enable the first core network side device to determine or know at least one of: the connection type of the first 3GPP connection, the access manner corresponding to the first 3GPP connection, the network type corresponding to the first 3GPP connection, or the network identifier corresponding to the first 3GPP connection.

Optionally, each of the multiple association identifier ranges may be used to indicate that a 3GPP connection the establishment of which is initiated by the terminal is one of the multiple 3GPP connections established by the terminal, and may also indicate any one of the connection type, access manner, network type, or network identifier of the 3GPP connection the establishment of which is initiated by the terminal. Furthermore, different association identifier ranges correspond to different connection types, different access manners, different network types, or different network identifiers.

The first association parameter may be determined from the multiple association identifier ranges based on one of: the connection type of the first 3GPP connection, the access manner corresponding to the first 3GPP connection, the network type corresponding to the first 3GPP connection, or the network identifier corresponding to the first 3GPP connection. Further, the first association parameter may be any value in a target association identifier range determined from the multiple association identifier ranges based on one of: the connection type of the first 3GPP connection, the access manner corresponding to the first 3GPP connection, the network type corresponding to the first 3GPP connection, or the network identifier corresponding to the first 3GPP connection.

For example, the multiple association identifier ranges may include association identifier range 1 and association identifier range 2, where association identifier range 1 may include "001 to 003". Each value among "001 to 003" may be used to indicate that a certain 3GPP connection is one of the multiple 3GPP connections of the terminal and the connection type is the user plane connection; the association identifier range 2 may include "004 to 006", and each value among "004 to 006" may be used to indicate that a certain 3GPP connection is one of the multiple 3GPP connections of the terminal and the connection type is the control plane connection. The possible values of multiple association identifier ranges, and the specific ways in which these specific values are represented are not limited or exhaustively listed here.

Accordingly, the first association parameter may be determined from the multiple association identifier ranges based on the connection type of the first 3GPP connection; for example, if the first 3GPP connection is the control plane connection, the first association parameter may be any value (e.g., may be 005) in association identifier range 2 (which may also be called the target association identifier range).

For example, the multiple association identifier ranges may include association identifier range 3, association identifier range 4, and association identifier range 5. Association identifier range 4 (e.g., may include 001 to 005), each value in association identifier range 4 may be used to indicate that a certain 3GPP connection is one of the multiple 3GPP connections of the terminal and the access manner is the NR access; association identifier range 5 (e.g., may include 006 and 007), each value in association identifier range 5 may be used to indicate that a certain 3GPP connection is one of the multiple 3GPP connections of the terminal and the access manner is the LTE access; association identifier range 6 (e.g., it may include 008 to 010), each value in association identifier range 6 may be used to indicate that a certain 3GPP connection is one of the multiple 3GPP connections of the terminal and the access manner is the satellite access. The possible values of the multiple association identifier ranges are not limited or exhaustively listed here.

Accordingly, the first association parameter may be determined from the multiple association identifier ranges based on the access manner corresponding to the first 3GPP connection; for example, if the access manner corresponding to the first 3GPP connection is the NR access, then the first association parameter is any value (e.g., may be 001) in the association identifier range 4 (which may also be called the target association identifier range).

For example, the multiple association identifiers may include association identifier range 6 and association identifier range 7. Each value in association identifier range 6 (e.g., 001 and 002) may be used to indicate that a certain 3GPP connection is one of the multiple 3GPP connections of the terminal and the network type is the PLMN. Each value in association identifier range 7 (e.g., 003 to 006) may be used to indicate that a certain 3GPP connection is one of the multiple 3GPP connections of the terminal and the network type is the SNPN. The possible values for each association identifier range are not limited or exhaustively listed here.

Accordingly, the first association parameter may be determined from the multiple association identifier ranges based on the network type corresponding to the first 3GPP connection; for example, if the network type corresponding to the first 3GPP connection is the PLMN, then the first association parameter is any value (e.g., may be 002) in the association identifier range 6 (e.g., it may be called the target association identifier range).

Optionally, each of the multiple association identifier ranges may be used to indicate that a 3GPP connection the establishment of which is initiated by the terminal is one of the multiple 3GPP connections established by the terminal, and to indicate at least two of the network identifier, network type, access manner, or connection type associated with the 3GPP connection the establishment of which is initiated by the terminal. Furthermore, different association identifier ranges correspond to at least two of: different network identifiers, different network types, different access manners, or different connection types.

The first association parameter may be determined from the multiple association identifiers based on two of: the connection type of the first 3GPP connection, the access manner corresponding to the first 3GPP connection, the network type corresponding to the first 3GPP connection, or the network identifier corresponding to the first 3GPP connection.

For example, the multiple association identifier ranges may include association identifier range b1, association identifier range b2, and association identifier range b3. Association identifier range b1 includes values 001 to 004, each of which may indicate that a 3GPP connection is one of the multiple 3GPP connections of the terminal, and that the connection type is the control plane connection, the access manner is the NR access, the network type is the PLMN, and the network identifier is PLMN ID2. Association identifier range b2 includes values 005 to 008, each of which may indicate that a 3GPP connection is one of the multiple 3GPP connections of the terminal, and that the connection type is the user plane connection, the access manner is the LTE access, the network type is the PLMN, and the network identifier is PLMN ID3. Association identifier range b3 includes values 010 to 020, each of which may indicate that a 3GPP connection is one of the multiple 3GPP connections of the terminal, and that the connection type is the control plane connection, and the access manner is the satellite access.

Accordingly, the first association parameter may be determined from the multiple association identifiers based on at least two of: the connection type of the first 3GPP connection, the access manner corresponding to the first 3GPP connection, the network type corresponding to the first 3GPP connection, or the network identifier corresponding to the first 3GPP connection. For example, if the connection type of the first 3GPP connection is the control plane connection and the access manner corresponding to the first 3GPP connection is the satellite access, then the first association parameter is any value (e.g., may be 015) in the association identifier range b3 (e.g., it may be called the target association identifier range). For example, if the connection type of the first 3GPP connection is the control plane connection, the access manner corresponding to the first 3GPP connection is the NR access, the network type corresponding to the first 3GPP connection is the PLMN, and the network identifier corresponding to the first 3GPP connection is PLMN ID2, then the first association parameter is any value (e.g., may be 003) in the association identifier range b1 (e.g., it may be called the target association identifier range).

It should be understood that the above are all illustrative examples, and there is no limitation or enumeration on the possible values of the association identifier (or the association identifier ranges), nor is there any limitation or enumeration on all possible combinations of ways in which the terminal determines the first association parameter based on one or more association identifiers (or one or more association identifier ranges).

In some embodiments, after receiving the first request message, the first core network side device may transmit the first reply message, which is used to indicate that the first 3GPP connection has been successfully established.

As described in the foregoing embodiments, the first request message may be the registration request message; accordingly, the first reply message may be a registration reply message. It should be understood that the first reply message may also be called the first response message, that is, the first reply message is the response message corresponding to the first request message. Further, the first request message may refer to a registration request message that is not initially transmitted by the terminal; the first reply message may refer to a registration reply message corresponding to the registration request message that is not initially transmitted by the terminal.

After receiving the first request message, and before transmitting the first reply message, the first core network side device may further perform the following processing: exchanging, by the first core network side device, update content with the second core network side device, that is, informing the second core network side device that the terminal has made a registration request through another 3GPP access (or a new 3GPP connection). The processing of the second core network side device may be as follows: storing situation of registration request of the terminal. For example, the content stored by the second core network side device may include at least one of: the number of times the terminal has registered, the 3GPP access manner corresponding to each registration of the terminal, or the like, which is not limited or exhaustively listed here.

For example, the exchanging, by the first core network side device, update content with the second core network side device may include: transmitting, by the first core network side device, a subscription interaction update (request) to the second core network side device, and receiving, by the first core network side device, a subscription interaction update reply transmitted by the second core network side device. Accordingly, the processing of the second core network side device may be as follows: receiving, by the second core network side device, the subscription interaction update (request) transmitted by the first core network side device; storing, by the second core network side device, the situation of the registration request of the terminal; and transmitting, by the second core network side device, the subscription interaction update reply to the first core network side device. In the processing of the second core network side device storing the terminal registration request, the content stored by the second core network side device may include at least one of: the number of times the terminal has registered, the 3GPP access manner corresponding to each registration of the terminal, or the like, without limiting or exhaustively listing them here. The subscription interaction update (request) may carry relevant descriptive information or relevant indication information to inform the second core network side device that the terminal has made the registration request through another 3GPP access (or a new 3GPP connection); and the subscription interaction update reply may be used to instruct the first core network side device to complete the subscription interaction update.

In an embodiment, the first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

The method by which the first association parameter is determined by the first core network side device, and the related description of the first association parameter, are the same as the method by which the first association parameter is determined by the terminal side, and the related description of the first association parameter, and thus they will not be repeated.

In a case, the first request message carries the first association parameter; the first reply message may carry the first association parameter, or may not carry the first association parameter. In another case, the first request message does not carry the first association parameter; preferably, the first reply message may carry the first association parameter.

The related description of the identifier of the first 3GPP connection may be the same as the related description of the identifier of the first 3GPP connection carried in the first request message transmitted by the terminal side.

In a case, the first request message carries the identifier of the first 3GPP connection; the first reply message may carry the identifier of the first 3GPP connection, or may not carry the identifier of the first 3GPP connection. Regardless of whether the first response message carries the identifier of the first 3GPP connection, it may indicate that the first core network side device and the terminal have completed negotiation and determined to use the identifier of the first 3GPP connection to uniquely identify the first 3GPP connection in the subsequence.

In another case, the first request message does not carry the identifier of the first 3GPP connection; preferably, the first reply message carries the identifier of the first 3GPP connection. In other words, the first core network side device agrees to establish the first 3GPP connection, allocates a corresponding identifier for the first 3GPP connection, and transmits the identifier to the terminal through the first reply message.

The updated condition under which the terminal is allowed to establish the multiple 3GPP connections may include at least one of: an updated location where the terminal is allowed to establish the multiple 3GPP connections, an updated time when the terminal is allowed to establish the multiple 3GPP connections, or one or more updated access manners in which the terminal is allowed to establish the multiple 3GPP connections. The related descriptions regarding location, time, and access manner are the same as those in the aforementioned embodiments and will not be repeated.

It should be noted that the first reply message may or may not carry the updated condition under which the terminal is allowed to establish the multiple 3GPP connections.

For example, if the first core network side device does not need to update the condition under which the terminal is allowed to establish the multiple 3GPP connections carried in the second reply message, then the first reply message may not carry the updated condition under which the terminal is allowed to establish the multiple 3GPP connections.

For example, if the first core network side device needs to update the condition under which the terminal is allowed to establish the multiple 3GPP connections carried in the second reply message, the first reply message may carry the updated condition under which the terminal is allowed to establish the multiple 3GPP connections.

A content type included in the updated condition under which the terminal is allowed to establish the multiple 3GPP connections and a content type included in the condition under which the terminal is allowed to establish the multiple 3GPP connections carried in the second reply message may be completely the same or at least partially different.

Optionally, the processing after the terminal receives the first reply message may include: deleting, by the terminal, the condition under which the terminal is allowed to establish the multiple 3GPP connections, and saving, by the terminal, the updated condition under which the terminal is allowed to establish the multiple 3GPP connections.

For example, the condition under which the terminal is allowed to establish the multiple 3GPP connections include: the location where the terminal is allowed to establish the multiple 3GPP connections, the time when the terminal is allowed to establish the multiple 3GPP connections, and one or more access manners in which the terminal is allowed to establish the multiple 3GPP connections; the updated condition under which the terminal is allowed to establish the multiple 3GPP connections may only include: the updated time when the terminal is allowed to establish the multiple 3GPP connections. The terminal may directly delete the condition under which the terminal is allowed to establish the multiple 3GPP connections and save the updated condition under which the terminal is allowed to establish the multiple 3GPP connections for replacement.

It should be noted that the first core network side device may also directly delete the condition under which the terminal is allowed to establish the multiple 3GPP connections and save the updated condition under which the terminal is allowed to establish the multiple 3GPP connections for replacement.

Optionally, the processing of the terminal after receiving the first reply message may include one of the following:
in a case where a content type included in the updated condition under which the terminal is allowed to establish the multiple 3GPP connections and a content type included in the condition under which the terminal is allowed to establish the multiple 3GPP connections are identical, deleting, by the terminal, the condition under which the terminal is allowed to establish the multiple 3GPP connections and saves the updated condition under which the terminal is allowed to establish the multiple 3GPP connections; or
in a case where the content type included in the updated condition under which the terminal is allowed to establish the multiple 3GPP connections is at least partially different from the content type included in the condition under which the terminal is allowed to establish the multiple 3GPP connections, saving, by the terminal, the updated condition under which the terminal is allowed to establish the multiple 3GPP connections and deleting a part of the content type of the condition under which the terminal is allowed to establish the multiple 3GPP connections and the content type of the updated condition under which the terminal is allowed to establish the multiple 3GPP connections.

For example, the condition under which the terminal is allowed to establish the multiple 3GPP connections include: the location where the terminal is allowed to establish the multiple 3GPP connections and the time when the terminal is allowed to establish the multiple 3GPP connections; the updated condition under which the terminal is allowed to establish the multiple 3GPP connections may only include: the updated location where the terminal is allowed to establish the multiple 3GPP connections and the updated time when the terminal is allowed to establish the multiple 3GPP connections. Since the updated condition under which the terminal is allowed to establish the multiple 3GPP connections include the identical content type as the condition under which the terminal is allowed to establish the multiple 3GPP connections, the terminal may directly delete the condition under which the terminal is allowed to establish the multiple 3GPP connections and save the updated condition under which the terminal is allowed to establish the multiple 3GPP connections for replacement. It should be noted that the first core network side device may also directly delete the condition under which the terminal is allowed to establish the multiple 3GPP connections and save the updated condition under which the terminal is allowed to establish the multiple 3GPP connections for replacement.

For another example, the condition under which the terminal is allowed to establish the multiple 3GPP connections include: the location where the terminal is allowed to establish the multiple 3GPP connections, the time when the terminal is allowed to establish the multiple 3GPP connections, and one or more access manners in which the terminal is allowed to establish the multiple 3GPP connections; the updated condition under which the terminal is allowed to establish the multiple 3GPP connections may only include: the updated time when the terminal is allowed to establish the multiple 3GPP connections. Since the content type included in the updated condition under which the terminal is allowed to establish the multiple 3GPP connections is partially different from the content type included in the condition under which the terminal is allowed to establish the multiple 3GPP connections, the terminal may keep the location where the terminal is allowed to establish the multiple 3GPP connections and the one or more access manners in which the terminal is allowed to establish the multiple 3GPP connections unchanged, but delete the original time when the terminal is allowed to establish the multiple 3GPP connections in the condition under which the terminal is allowed to establish the multiple 3GPP connections and replace it with the updated time when the terminal is allowed to establish the multiple 3GPP connections. It should be noted that the first core network side device may also perform similar processing as the terminal, and thus it will not be explained again.

The second temporary identifier may be an updated GUTI. It should be noted that the second temporary identifier may be an optional content. If the first reply message does not carry the second temporary identifier, it means that the GUTI will not be updated and the terminal will continue to use the first temporary identifier.

The related descriptions of the connection level indication and the paging indication are the same as those in the previous embodiments and will not be repeated. The related descriptions of the connection level indication corresponding to the first 3GPP connection and paging indication corresponding to the first 3GPP connection are similar to those of the connection level indication corresponding to the second 3GPP connection and paging indication corresponding to the second 3GPP connection in the previous embodiments, and therefore will not be repeated.

It should be further noted that the first reply message may or may not carry the connection level indication corresponding to the first 3GPP connection; and/or, the second reply message may or may not carry the connection level indication corresponding to the second 3GPP connection; and/or, the first reply message may or may not carry the paging indication corresponding to the first 3GPP connection; and/or, the second reply message may or may not carry the paging indication corresponding to the second 3GPP connection.

As can be seen from the description of the foregoing embodiments, the connection level indication corresponding to a certain 3GPP connection is used to determine whether to perform a specified process through the 3GPP connection.

In an example, if the reply message corresponding to each 3GPP connection carries a connection level indication corresponding to the 3GPP connection, the terminal may subsequently determine, based on the connection level indication corresponding to each 3GPP connection, through which 3GPP connection the specified process is to be performed.

In an example, if the reply message corresponding to one or more 3GPP connections (i.e., some 3GPP connections) in all of the 3GPP connections of the terminal carries one or more connection level indications corresponding to the one or more 3GPP connections, the terminal may subsequently determine, based on the one or more connection level indications corresponding to the one or more 3GPP connection, through which 3GPP connection the specified process is to be performed.

In an example, if the reply message corresponding to each 3GPP connection among all of the 3GPP connections of the terminal does not carry a connection level indication corresponding to the 3GPP connection, the terminal may subsequently determine, based on a default rule or other methods, through which 3GPP connection the specified process is performed.

As can be seen from the description of the foregoing embodiments, the paging indication corresponding to a certain 3GPP connection is used to determine whether to perform paging-related process through the 3GPP connection.

In an example, if the reply message corresponding to each 3GPP connection carries a paging indication corresponding to the 3GPP connection, the terminal may subsequently determine, based on the paging indication corresponding to each 3GPP connection, through which 3GPP connection the paging-related process is performed.

In an example, if the reply message corresponding to only one 3GPP connection among all of the 3GPP connections of the terminal carries a paging indication corresponding to the 3GPP connection, and the paging indication is used to indicate that the paging-related process is performed through the 3GPP connection, then the terminal may subsequently determine, based on the paging indication corresponding to the 3GPP connection, to perform the paging-related process through the 3GPP connection.

In an example, if the reply message corresponding to each 3GPP connection among all of the 3GPP connections of the terminal does not carry a paging indication corresponding to the 3GPP connection, the terminal may subsequently determine, based on a default rule or other methods, through which 3GPP connection the paging indication is performed.

The second indication may be used to indicate at least one of: whether the terminal is allowed to establish the multiple 3GPP connections, or the number of the multiple 3GPP connections that the terminal is allowed to establish. The detailed description of whether the terminal is allowed to establish the multiple 3GPP connections, and the number of the multiple 3GPP connections that the terminal is allowed to establish, is similar to that in the previous embodiments and will not be repeated here.

It should be noted that the first reply message may or may not carry the second indication.

For example, the second reply message carries the first indication, and the first reply message may not carry the second indication. In this case, it is equivalent to the first core network side device keeping the content of the first indication unchanged by default when establishing a control plane connection (NAS connection) with the terminal for the non-first time.

For example, the second reply message does not carry the first indication, but the first reply message may carry the second indication. In this case, it is equivalent to the first core network side device instructing the terminal whether the terminal is allowed to continue establishing the multiple 3GPP connections, and/or the number (or total number) of the multiple 3GPP connections that the terminal is allowed to establish, when establishing a control plane connection (NAS connection) with the terminal for the non-first time. Accordingly, the terminal may save this second indication for use in establishing other 3GPP connections later.

For example, the second reply message carries the first indication, and the first reply message also carries the second indication. In this case, it is equivalent to the first core network side device instructing the terminal whether the terminal is allowed to continue establishing the multiple 3GPP connections and/or the number of the multiple 3GPP connections that the terminal is allowed to establish, when establishing a control plane connection (NAS connection) with the terminal for the first time. However, when the first core network side device establishes a control plane connection (NAS connection) with the terminal for other than the first time, it may change its policy. Therefore, the first core network side device may use the second indication to instruct the terminal whether the terminal is allowed to continue establishing the multiple 3GPP connections and/or the number (or total number) of the multiple 3GPP connections that the terminal is allowed to establish. Accordingly, the terminal may update and save the second indication (while deleting the first indication) for subsequent establishment of other 3GPP connections.

Additionally, it should be noted that in this embodiment, the first indication may also be referred to as the first indication information or the first indication message; the second indication may also be referred to as the second indication information or the second indication message.

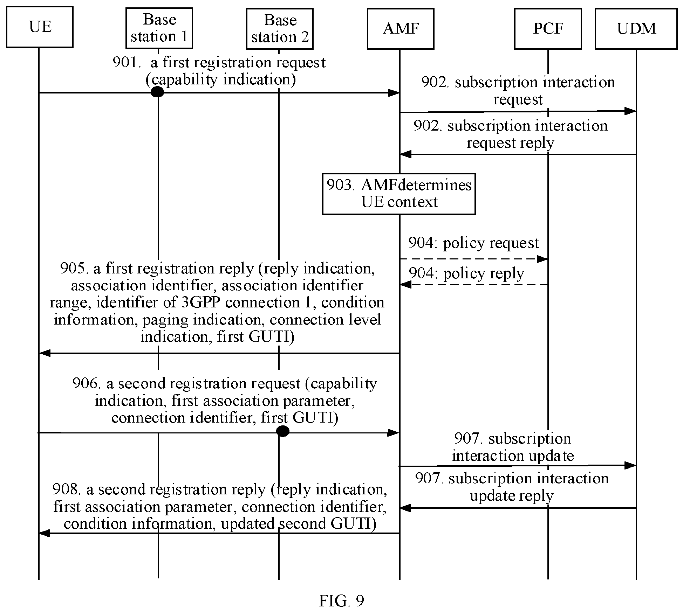

Referring to FIG. 9, taking the terminal as a UE, the first core network side device as an AMF, and the second core network side device as a UDM as an example, an exemplary description of the communication method provided in the aforementioned embodiments will be given. The scenario corresponding to FIG. 9 is as follows: the same UE performs a registration process through two different 3GPP connections (NAS connection, i.e., control plane connection), different UE contexts corresponding to the two NAS connections may be obtained, such as the registration area, periodic update time, and implicit deregistration time corresponding to each NAS connection. The scenario corresponding to FIG. 9 may be distinguished based on two different 3GPP connection situations to obtain different UE contexts corresponding to the two NAS connections. For example, when the UE accesses through TN and NTN respectively, the deregistration time and registration area of the NAS connection may be quite different. This situation is particularly applicable to the example provided in FIG. 9. An illustrative example of the processing flow is provided by referring to FIG. 9, which includes the following steps.

Step 901, the UE initiates a first registration request (i.e., the second request message in the aforementioned embodiments) through an RRC connection established with base station 1.

The first registration request includes a "capability indication", which is the capability indication of the terminal in the foregoing embodiments.

The capability indication is used to indicate at least one of: the UE supporting/requesting establishment of multiple 3GPP connections; or the number of 3GPP connections that the UE supports/requests to establish. Further, the capability indication may indicate the granularity of NAS connections and/or PDU sessions, that is, may indicate that the UE supports/requests the establishment of multiple NAS connections, and/or the establishment of multiple PDU sessions, and/or may indicate the number of multiple NAS connections that the UE supports/requests to establish, and/or the number of multiple PDU sessions that the UE supports/requests to establish; where the establishment of multiple NAS connections may be further expressed as initiating a registration process through multiple NAS connections.

It should be understood that before performing step 901, that is, before the UE initiates the first registration request NAS message, it has already established an RRC connection with the base station at the access layer. In this example, "3GPP connection" refers to a connection established through 3GPP access (e.g., NR base stations, LTE base stations, satellite access, or the like), including control plane connections (e.g., NAS connections) and user plane connections (e.g., PDU sessions).

Step 902: after receiving the first registration request from the UE, the AMF initiates interaction with the UDM. Specifically, as illustrated in FIG. 9, the AMF transmits a subscription interaction request to the UDM, and the AMF receives a subscription interaction request reply (or subscription reply message) transmitted by the UDM.

In addition to carrying the subscription permanent identifier (SUPI) of the UE, the subscription interaction request may also carry a "first indication" to indicate the UDM that the UE supports/requests the establishment of multiple 3GPP connections.

The subscription interaction request reply transmitted by the UDM may include the subscription information of the UE, which may include 1) whether the UE is allowed to establish multiple 3GPP connections, 2) the number of 3GPP connections that the UE is allowed to establish, and 3) the respective frequency information corresponding to each 3GPP connection (e.g., RFSP and RFSP used by one or more 3GPP connections). RFSP may be used by the base station (i.e., the base station serving the UE) to determine the frequency information used when establishing a radio interface connection for the UE. Whether the UE is allowed to establish multiple 3GPP connections and the number of 3GPP connections that the UE is allowed to establish included in the subscription information may be further divided into two granularities: control plane NAS connections and user plane PDU sessions.

Step 903: after receiving the subscription reply message, the AMF determines the UE context based on the subscription information and/or local policies.

The UE context may include at least one of the following information:
reply indication (i.e., the first indication in the foregoing embodiments): whether the UE is allowed to perform establishment of multiple 3GPP connections, and/or the number of 3GPP connections allowed to be established. Further, this indication may indicate the granularity of NAS connection and/or PDU session, that is, may indicate whether multiple NAS connections are allowed to be established, and/or whether multiple PDU sessions are allowed to be established. The establishment of multiple NAS connections may be further expressed as initiating a registration process through multiple NAS connections;
an identifier (or serial number) of the current NAS connection, which is the identifier of the second 3GPP connection in the aforementioned embodiments;
an association identifier and/or association identifier range, i.e., association identifiers of multiple NAS connections and/or multiple user plane connections established by UE. For example, if the UE establishes multiple NAS connections through 3GPP access, these connections correspond to an association identifier. Similarly, if the UE establishes multiple PDU sessions through 3GPP access, these PDU sessions may also correspond to an association identifier;
   where the association identifier and/or association identifier range may be further differentiated according to different 3GPP standards, such as the number of control/user plane connections, or association identifiers and serial numbers/serial numbers (ranges) under the NR access, LTE access, and satellite access respectively;
   where the association identifier and/or association identifier range may be further differentiated according to the PLMN and SNPN, such as the number of control plane/user plane connections, association identifiers or serial numbers (ranges) under the PLMN and SNPN respectively. Furthermore, it is even possible to further differentiate the granularity of each PLMN ID and SNPN ID;
   condition information, that is, the condition under which the terminal is allowed to establish the multiple 3GPP connections (e.g., location area, time, 3GPP access manner requirement, or the like);
   connection level indication, indicating the level (or priority) of this NAS connection (i.e., the second 3GPP connection, which in this example may also be referred to as 3GPP connection 1). For example, it may indicate whether the NAS connection (i.e., 3GPP connection 1) is the "primary connection". When the UE performs the corresponding paging or registration update process, the NAS connection (3GPP connection 1) is used to initiate the corresponding process, such as the service request process or the registration request process. Multiple priority values may be assigned to different NAS connections and specify the priority value for the current NAS connection. If a 3GPP connection is designated as a primary connection or a similar connection through a "connection level indication", and the UE defaults to using the connection of this importance for corresponding paging or registration updates, the explicit parameter "paging indication" may be omitted;
   paging indication, i.e., whether the UE uses the NAS connection (3GPP connection 1) to reply when receiving a paging message, if so, when receiving the paging message, the UE may use the NAS connection (3GPP connection 1) to transmit a service request or registration request process to reply; or
   a first temporary identifier GUTI, which may be an existing parameter, and multiple 3GPP connections may share a single temporary identifier GUTI of a UE.

Step 904 (optional), the AMF transmits a request message to the PCF to obtain a policy, which may be an access and mobility policy. As illustrated in FIG. 9, the AMF transmits a policy request to the PCF, and the AMF receives a policy reply from the PCF.

In the policy request (message), the AMF may put one or more pieces of information generated in step 903 into the policy request (message), and then transmit the policy request (message) to the PCF. The PCF may then determine and reply with the policy content. For example, the PCF may determine a value of an RFSP index based on the information content in the request message.

Step 905, the AMF transmits a first registration reply to the UE, the first registration reply may carry one or more of the parameters generated in step 903 (e.g., at least one of: reply indication, association identifier, association identifier range, connection identifier, condition information, paging indication, connection level indication, or the first GUTI). In this step, the first registration reply is the second reply message in the aforementioned embodiments.

Step 906, after completing the first registration, the UE may determine whether to initiate a second registration request based on the received parameter (e.g., reply indication and condition information). The second registration request is carried through a second RRC connection of base station 2. The second registration request may be the first request message in the aforementioned embodiments.

The second registration request message carries at least one of: a capability indication, a first association parameter, a connection identifier, or the first GUTI. The capability indication has the same parameter definition as that in the first registration request, and may be omitted if the terminal does not update the capability indication. The first association parameter is used to associate the NAS connection (i.e., 3GPP connection 1) corresponding to the first registration request and the NAS connection (i.e., 3GPP connection 2) corresponding to the second registration request. The connection identifier may include a connection identifier of the NAS connection corresponding to the first registration request (i.e., an identifier of 3GPP connection 1) and/or an NAS connection identifier corresponding to the second connection request (i.e., an identifier of 3GPP connection 2).

Here, base station 1 and base station 2 may be the same base station or different base stations. The RRC connections that carry different NAS messages may be the same or different.

Step 907, the AMF exchanges update content with the UDM, that is, the AMF informs the UDM that the UE has made a registration request through another 3GPP access. The UDM stores a situation of the registration request of the UE, including the number of registrations and the 3GPP access standard used in each registration. Specifically, as illustrated in FIG. 9, the AMF transmits a subscription interaction update to the UDM, and the AMF receives a subscription interaction update reply from the UDM.

Step 908, the AMF transmits a second registration reply message to the UE (i.e., the first reply message in the aforementioned embodiments), including at least one of: the reply indication, the first association parameter, the connection identifier, the condition information and/or a second GUTI. The reply indication is used to indicate whether the registration was successful; the connection identifier may include the identifier of 3GPP connection 2; the condition information may be the updated condition under which the terminal is allowed to establish the multiple 3GPP connections. In addition, the second registration reply message may further carry the second indication in the aforementioned embodiments, which will not be repeated here.

By adopting the solution provided in this embodiment, the terminal may establish and simultaneously maintain multiple 3GPP connections, which enables the terminal to maintain multiple 3GPP connections at the same time, and solves the problem which leads to the inability to guarantee the terminal to obtain higher capacity and/or throughput when the terminal is in a scenario where establishing a non-3GPP connection is not applicable, in related technologies where the terminal is only supported to establish only one 3GPP connection and one non-3GPP connection.

Further, in the scheme of a terminal establishing multiple 3GPP connections provided in this embodiment, since there is only one terminal, the mobility management related process may be completed through only one of the 3GPP connections, and thus unnecessary other interactions and configurations are eliminated.

In some possible implementations, after the terminal receives the first reply message, the method further includes: transmitting, by the terminal, a third request message through a third 3GPP connection, where the third request message is used to establish a user plane connection corresponding to the third 3GPP connection, where the third 3GPP connection is one of the multiple 3GPP connections of the terminal; and receiving, by the terminal, a third reply message through the third 3GPP connection, where the third reply message is used to indicate that the user plane connection corresponding to the third 3GPP connection has been successfully established.

After the first core network side device transmits the first reply message, the method further includes: receiving, by the first core network side device, a third request message through the third 3GPP connection, where the third request message is used to establish the user plane connection corresponding to the third 3GPP connection, where the third 3GPP connection is one of the multiple 3GPP connections of the terminal; and transmitting, by the first core network side device, the third reply message through the third 3GPP connection, where the third reply message is used to indicate that the user plane connection corresponding to the third 3GPP connection has been successfully established.

In this embodiment, the multiple 3GPP connections of the terminal refer to the multiple 3GPP connections that the terminal has currently established and maintains simultaneously. The multiple 3GPP connections of the terminal may at least include a first 3GPP connection and a second 3GPP connection. In an example, the multiple 3GPP connections that the terminal has currently established and maintained simultaneously may include multiple 3GPP connections that the terminal has currently established and maintained simultaneously, and the connection type of each 3GPP connection may be the control plane connection (NAS connection).

It should be understood that the multiple 3GPP connections of the terminal may include more 3GPP connections. For example, after the first 3GPP connection is established, the terminal may establish a second 3GPP connection and one or more other 3GPP connections. In this embodiment, the multiple 3GPP connections of the terminal may include all the 3GPP connections established and simultaneously maintained by the terminal, which is not limited or exhaustively listed for the sake of simplicity.

The aforementioned third 3GPP connection is one of the multiple 3GPP connections of the terminal, which means that the third 3GPP connection is any one of the multiple 3GPP connections of the terminal; further, the third 3GPP connection is any one 3GPP connection that needs to establish a corresponding user plane connection in the multiple 3GPP connections of the terminal. For example, the third 3GPP connection may be the first 3GPP connection, or the third 3GPP connection may be the second 3GPP connection, or the third 3GPP connection may be any one of one or more other 3GPP connections of the terminal. Here, it is not limited which 3GPP connection of the terminal the third 3GPP connection is. Whenever it is necessary or the terminal needs to establish a user plane connection corresponding to a certain 3GPP connection, this 3GPP connection may be used as the third 3GPP connection in this embodiment. Furthermore, this embodiment does not limit how the terminal determines which user plane to establish for which 3GPP connection.

The third request message may include: a PDU session establishment request (message) and/or a PDU session modification request (message).

The third request message carries at least one of: an identifier of the third 3GPP connection, or a second association parameter.

Furthermore, the third request message may further carry some or all of the content that is required to carry in the third request message as specified in the relevant protocol. For example, the third request message may be the PDU session establishment request (message). In addition to carrying at least one of the identifier of the third 3GPP connection or the second association parameter, the third request message further carries some or all of the content that the PDU session establishment request (message) is required to carry as specified in the relevant protocol.

The identifier of the third 3GPP connection may be generated by the terminal and transmitted to the first core network side device through a corresponding request message when the terminal registers to establish the third 3GPP connection; and/or, the identifier of the third 3GPP connection may be generated by the first core network side device and transmitted to the terminal through a reply message when the terminal registers to establish the third 3GPP connection. The related description of the transmission and/or generation of the identifier of the third 3GPP connection is the same as that of the generation and/or transmission of the identifier of the first 3GPP connection and/or the identifier of the second 3GPP connection in the foregoing embodiments, and therefore will not be repeated.

The second association parameter is used to indicate that the user plane connection corresponding to the third 3GPP connection is one of the multiple 3GPP connections of the terminal. The second association parameter is determined based on one or more association identifiers, or the second association parameter is determined based on one or more association identifier ranges.

In an embodiment, the first core network side device configures an association identifier for the terminal through the second reply message.

In this case, the second association parameter is the association identifier. In other words, by carrying the second association parameter (i.e., association identifier) in the third request message, the terminal may enable the receiving side, i.e. the first core network side device, to determine that the user plane connection corresponding to the third 3GPP connection currently requested to be established by the terminal is not the 3GPP connection initially established by the terminal, but a new 3GPP connection that the terminal further requests to establish on the basis of having already maintained one or more 3GPP connections.

In an embodiment, the first core network side device configures multiple association identifiers for the terminal through the second reply message.

In this case, the second association parameter is one of the multiple association identifiers. The second association parameter is used to indicate that the user plane connection corresponding to the third 3GPP connection is one of the multiple 3GPP connections of the terminal, and the second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

Further, the second association parameter may be determined from the multiple association identifiers based on at least one of: the connection type of the user plane connection corresponding to the third 3GPP connection, the access manner of the user plane connection corresponding to the third 3GPP connection, the network type of the user plane connection corresponding to the third 3GPP connection, or the network identifier of the user plane connection corresponding to the third 3GPP connection. In other words, by carrying the second association parameter (i.e., one of multiple association identifiers) in the third request message, the terminal may enable the receiving side, i.e., the first core network side device, to determine that the user plane connection corresponding to the third 3GPP connection currently requested to be established by the terminal is not the 3GPP connection initially established by the terminal, but a new 3GPP connection that the terminal further requests to establish on the basis of having already maintained one or more 3GPP connections. Furthermore, the first core network side device may further be enabled to determine or know at least one of: the connection type of the user plane connection corresponding to the third 3GPP connection, the access manner of the user plane connection corresponding to the third 3GPP connection, the network type of the user plane connection corresponding to the third 3GPP connection, or the network identifier of the user plane connection corresponding to the third 3GPP connection.

For example, the access manner of the user plane connection corresponding to the third 3GPP connection may be the same as the access manner corresponding to the third 3GPP connection, e.g., they are both the NR access, satellite access, or LTE access. All possible access manners are not limited or exhaustively listed here.

For example, the network type of the user plane connection corresponding to the third 3GPP connection may be the same as the network type corresponding to the third 3GPP connection, e.g., they are both either a PLMN or an SNPN. All possible network types are not limited or exhaustively listed here.

For example, the network identifier of the user plane connection corresponding to the third 3GPP connection may be the same as the network identifier corresponding to the third 3GPP connection, e.g., they are both a PLMN ID1. All possible network identifiers under all possible network types are not limited or exhaustively listed here.

For example, the connection type of the user plane connection corresponding to the third 3GPP connection is different from the connection type of the third 3GPP connection. The connection type of the user plane connection corresponding to the third 3GPP connection is the user plane connection, while the connection type of the third 3GPP connection is the control plane connection (or NAS connection).

The specific manner for determining the second association parameter based on the association identifier is similar to the processing manner for determining the first association parameter based on the association identifier in the aforementioned embodiments, and thus it will not be repeated.

In an embodiment, the first core network side device configures an association identifier range for the terminal through the second reply message.

In this case, the second association parameter is determined based on the association identifier range. Specifically, the second association parameter may be any value within the association identifier range. This embodiment does not limit which value within the association identifier range the second association parameter should be. In other words, by carrying the second association parameter (i.e., any value in the association identifier range) in the third request message, the terminal may enable the receiving side, i.e. the first core network side device, to determine that the user plane connection corresponding to the third 3GPP connection currently requested to be established is not the 3GPP connection initially established by the terminal, but a new 3GPP connection that the terminal further requests to establish on the basis of having already maintained one or more 3GPP connections.

In an embodiment, the first core network side device configures multiple association identifier ranges for the terminal through the second reply message.

In this case, the second association parameter is determined based on the multiple association identifier ranges. The second association parameter is used to indicate that the user plane connection corresponding to the third 3GPP connection is one of the multiple 3GPP connections of the terminal, and the second association parameter is related to at least one of: the connection type of the user plane connection corresponding to the third 3GPP connection, the access manner of the user plane connection corresponding to the third 3GPP connection, the network type of the user plane connection corresponding to the third 3GPP connection, or the network identifier of the user plane connection corresponding to the third 3GPP connection.

Further, the second association parameter may be any value in a target association range determined from the multiple association identifier ranges based on at least one of: the connection type of the user plane connection corresponding to the third 3GPP connection, the access manner of the user plane connection corresponding to the third 3GPP connection, the network type of the user plane connection corresponding to the third 3GPP connection, or the network identifier of the user plane connection corresponding to the third 3GPP connection. In this way, by carrying the second association parameter (i.e., any value in one of the multiple association identifier ranges) in the third request message, the terminal may enable the receiving side, i.e., the first core network side device, to determine that the user plane connection corresponding to the third 3GPP connection currently requested to be established is not the 3GPP connection initially established by the terminal, but a new 3GPP connection that the terminal further requests to establish on the basis of having already maintained one or more 3GPP connections. Furthermore, the first core network side device may further be enabled to determine or know at least one of: the connection type of the user plane connection corresponding to the third 3GPP connection, the access manner of the user plane connection corresponding to the third 3GPP connection, the network type of the user plane connection corresponding to the third 3GPP connection, or the network identifier of the user plane connection corresponding to the third 3GPP connection.

The specific manner for determining the second association parameter based on the association identifier range is similar to the processing manner for determining the first association parameter based on the association identifier range in the aforementioned embodiments, and thus it will not be repeated.

After receiving the third request message, and before transmitting the third reply message, the first core network side device may further perform the following processing: transmitting, by the first core network side device, a fourth request message to a third core network side device, where the fourth request message carries at least one of: the identifier of the third 3GPP connection, or the second association parameter; and receiving, by the first core network side device, the fourth reply message transmitted by the third core network side device, where the fourth reply message is used to indicate a completion of establishing the user plane connection corresponding to the third 3GPP connection.

The third core network side device may include an SMF. All possible nodes are not limited or exhaustively listed here.

The identifier of the third 3GPP connection and the second association parameter carried in the fourth request message are the same as those described in the description of the foregoing embodiments, and therefore will not be repeated. The fourth request message may be a PDU session establishment request (message) and/or PDU session modification request (message) transmitted by the first core network side device to the third core network side device (e.g., AMF to SMF). The fourth request message may actually be implemented or carried by invoking a service-based interface, such as by invoking the Nsmf_PDUsession_CreateSMContext_Request service provided by SMF (which is a service for requesting the SMF to create a pdusession (PDU session) context).

The processing of the third core network side device after receiving the fourth request message may include: performing, by the third core network side device, subscription information acquisition/update processing with UDM (the second core network side device), to obtain subscription information provided by UDM; performing, by the third core network side device, policy acquisition/update processing with PCF, to obtain policy and charging control (PCC) policy generated by PCF (a fourth core network side device); and performing, by the third core network side device, session establishment/modification processing with UPF (a fifth core network side device), and then transmitting, by the third core network side device, the fourth reply message to the first core network side device. It should be understood that the third core network side device may further return a session establishment/modification reply message to the access network side device and the terminal. The interaction process between the aforementioned third core network side device and UDM, PCF, the first core network side device, access network side device, and the terminal is the same as or similar to the procedure in the relevant protocols, and thus it will not be repeated here.

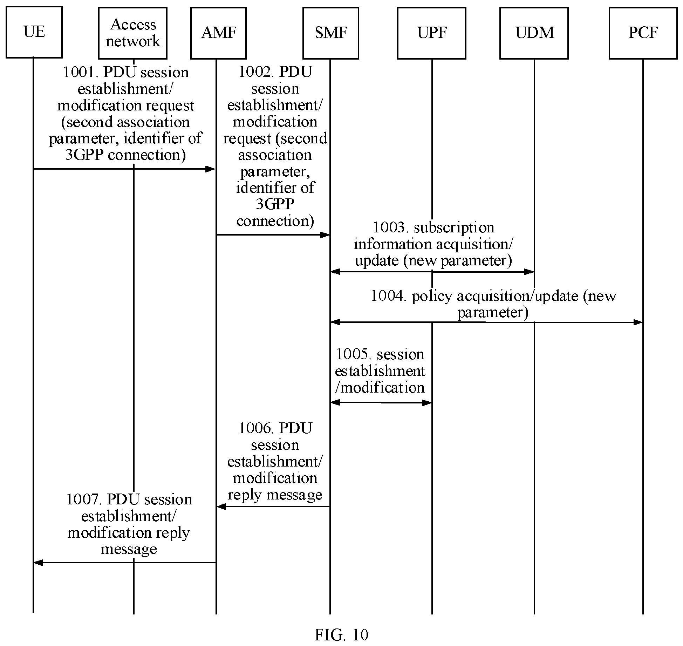

Referring to FIG. 10, taking the terminal as UE, the first core network side device as AMF, the second core network side device as UDM, and the third core network side device as SMF as an example, the communication method provided in the aforementioned embodiments will be described by way of example. In a PDU session flow corresponding to FIG. 10, the UE adds the relevant parameters of multiple 3GPP connections obtained in the aforementioned embodiments to the PDU session establishment/modification request message for processing by the network side. Specifically, the following steps are included.

Step 1001, the UE transmits, to the AMF, a PDU session establishment/modification request message in which new parameter (e.g., the second association parameter, the identifier of the 3GPP connection, and the like) is added. The identifier of the 3GPP connection is the identifier of the third 3GPP connection in the aforementioned embodiments. In subsequent steps, at least one of the association parameters and the identifier of the user plane connection carried in each PDU session establishment/modification request will be collectively referred to as "new parameter", which will not be explained again in this example.

Step 1002, the AMF transmits, to the SMF, the PDU session establishment/modification request message in which new parameter (such as the second association parameter, the identifier of the 3GPP connection, and the like) is added. The PDU session establishment/modification request message transmitted by the AMF to the SMF may actually be implemented or carried by invoking a service-based interface, such as by invoking the Nsmf_PDUsession_CreateSMContext_Request service provided by the SMF.

Step 1003, the SMF may carry the new parameter (such as the second association parameter, the identifier of the 3GPP connection, and the like) in the subscription information acquisition/update (message or process) exchanged with the UDM, so that the UDM may provide subscription information accordingly.

Step 1004, the SMF may add the new parameter (such as the second association parameter, the identifier of the 3GPP connection, and the like) in the policy acquisition/update (message or process) with the PCF, so that the PCF may generate a PCC policy accordingly.

Step 1005, the SMF and UPF interact to perform session modification/establishment.

Steps 1006 and 1007, the SMF returns the PDU session establishment/modification reply message to the AMF, access network, and UE. Steps 1005 to 1007 may be the same as the related processing in the existing mechanism.

In some possible implementations, after receiving the first reply message, the method further includes: in a case where a second condition is met, transmitting, by the terminal, a registration update request through a target 3GPP connection, where the target 3GPP connection is one of the multiple 3GPP connections of the terminal. Accordingly, after the first core network side device transmits the first reply message, the method further includes: receiving, by the first core network side device, a registration update request transmitted through the target 3GPP connection, where the target 3GPP connection is one of the multiple 3GPP connections of the terminal.

In this embodiment, the multiple 3GPP connections of the terminal refer to the multiple 3GPP connections that the terminal has currently established and simultaneously maintained. The multiple 3GPP connections of the terminal may include at least a first 3GPP connection and a second 3GPP connection. In an example, the multiple 3GPP connections that the terminal has currently established and simultaneously maintained may include multiple 3GPP connections that the terminal has currently established and simultaneously maintained and the connection type of each 3GPP connection being the control plane connection (NAS connection).

The content that the registration update request may carry may include some or all of the content that the registration update request is required to carry as specified in the relevant protocol.

After the first core network side device receives the registration update request transmitted through the target 3GPP connection, the method further includes: transmitting, by the first core network side device, a registration update reply through the target 3GPP connection, where the registration update reply carries an updated first temporary identifier. After the terminal transmits the registration update request through the target 3GPP connection, the method further includes: receiving, by the terminal, the registration update reply through the target 3GPP connection, where the registration update reply carries the updated first temporary identifier. This embodiment does not limit the specific process of the registration update process performed by the first core network side device.

The updated first temporary identifier may include the updated GUTI. Further, the content that the registration update reply may carry may further include some or all of the content that the registration update reply is required to carry as specified in the relevant protocol.

In an embodiment, the second condition includes at least one of: the terminal being not located within a registration area, or a registration update time having been reached.

In this embodiment, multiple 3GPP connections of the terminal share the same registration area, registration update time, and other information. In other words, the terminal may perform the following processing: determining, by the terminal, whether the current location is within the registration area and whether the current time has reached the registration update time; where in a case where the terminal is not within the registration area and/or the registration update time has reached the registration update time, it is determined that the second condition is met.

The target 3GPP connection is determined from the multiple 3GPP connections of the terminal based on at least one of: a connection level indication, a default rule, a specified access manner, a priority of an access manner, a specified network type, or a priority of a network type.

Optionally, during the procedure of registration of each 3GPP connection, the first core network side device may include the connection level indication corresponding to the 3GPP connection in the reply message corresponding to each 3GPP connection. For example, the first core network side device may configure the connection level indication corresponding to the first 3GPP connection through the first reply message. For other example, the first core network side device may configure the connection level indication corresponding to the second 3GPP connection through the second reply message.

Accordingly, the method by which the terminal determines the target 3GPP connection from the multiple 3GPP connections may include: determining, by the terminal, the target 3GPP connection based on the connection level indication corresponding to each 3GPP connection the terminal maintains simultaneously. Specifically, the terminal determines a 3GPP connection with the highest connection level indication as the target 3GPP connection based on the connection level indication corresponding to each 3GPP connection the terminal maintains simultaneously.

For example, the connection level indication of any 3GPP connection may include one of: connection level indication being high (or high level or high grade), connection level indication being medium (or medium level), or connection level indication being low (or low level or low grade). In this case, the terminal determines a 3GPP connection with the high connection level indication as the target 3GPP connection based on the connection level indication corresponding to each 3GPP connection the terminal maintains simultaneously.

For example, the connection level indication of any 3GPP connection may include one of: connection level indication being high priority, connection level indication being low priority, or connection level indication being medium priority. In this case, the terminal determines a 3GPP connection with the high priority connection level indication as the target 3GPP connection based on the connection level indication corresponding to each 3GPP connection the terminal maintains simultaneously.

For example, the connection level indication of any 3GPP connection may include a score. In this case, the terminal determines a 3GPP connection with the highest score as the target 3GPP connection based on the score of each 3GPP connection the terminal maintains simultaneously.

Optionally, during procedure of registration of each 3GPP connection, the first core network side device may not configure a corresponding connection level indication of each 3GPP connection.

The method by which the terminal determines the target 3GPP connection from the multiple 3GPP connections may include: determining, by the terminal, the target 3GPP connection from the multiple 3GPP connections that the terminal maintains simultaneously, based on the default rule.

For example, the default rule may include: the 3GPP connection initially registered and established by the terminal (i.e., the second 3GPP connection in the aforementioned embodiments) is the primary connection, and by default, the primary connection may be used to perform (or not perform) a specified process, e.g., the specified process may be at least one of location update, registration update, paging response, or the like. The determining, by the terminal, based on the default rule, the target 3GPP connection from the multiple 3GPP connections the terminal maintains simultaneously, may include: determining, by the terminal, based on the default rule, the 3GPP connection initially established as the target 3GPP connection from the multiple 3GPP connections the terminal maintains simultaneously.

It should be understood that the above is only an exemplary description of the default rule. In actual processing, the default rule may include, but are not limited to, the possibilities shown in the examples above. For example, the default rule may further include: all NAS connections (control plane connections) of the terminal initiating their own specified processes, such as at least one of location update, registration update, paging response, or the like. It should be understood that this is merely an illustrative example, and does not exhaustively list or limit all possible contents of the default rule.

Optionally, during the procedure of registration of each 3GPP connection, the first core network side device may not configure a corresponding connection level indication for each 3GPP connection.

The method by which the terminal determines the target 3GPP connection from the multiple 3GPP connections may include: determining, by the terminal, the target 3GPP connection from the multiple 3GPP connections that the terminal maintains simultaneously, based on at least one of a specified access manner, the priority of the access manner, a specified network type, or the priority of the network type.

The specified access manner, the priority of the access manner, the specified network type, and the priority of the network type may all be pre-configured on the terminal.

The specified access manner may be configured according to the actual situation, such as NR access, LTE access, or satellite access.

The priority of the access manner may be configured according to the actual situation. For example, NR access may be configured to have the highest priority, LTE access may be configured to have a medium priority, satellite access may be configured to have the lowest priority, or there are other priority configuration methods, which are not limited or exhaustively listed here.

The specified network type may be configured according to the actual situation, such as PLMN or SNPN.

The priority of the network type may be configured according to the actual situation. For example, PLMN may be configured to have the highest priority and SNPN may be configured to have the lowest priority, or there are other priority configuration methods, which are not limited or exhaustively listed here.

For example, a terminal may determine the target 3GPP connection by using any one of: the specified access manner, the priority of the access manner, the specified network type, or the priority of the network type. The terminal determining the target 3GPP connection from the multiple 3GPP connections the terminal maintains simultaneously, based on at least one of the specified access manner, the priority of the access manner, the specified network type, or the priority of the network type, may include one of: determining, by the terminal, any 3GPP connection under the specified access manner from the multiple 3GPP connections the terminal maintains simultaneously as the target 3GPP connection; selecting, by the terminal, any 3GPP connection with the highest priority of the access manner from the multiple 3GPP connections the terminal maintains simultaneously, based on the priority of the access manner and the access manner corresponding to each of the multiple 3GPP connection the terminal maintains simultaneously as the target 3GPP connection; determining, by the terminal, any 3GPP connection under a specified network type from the multiple 3GPP connections the terminal maintains simultaneously as the target 3GPP connection; or selecting, by the terminal, based on the priority of the network type and the specified network type corresponding to each of the multiple 3GPP connections the terminal maintains simultaneously, any 3GPP connection with the highest priority of the specified network type from the multiple 3GPP connections the terminal maintains simultaneously as the target 3GPP connection.

For example, the terminal may combine multiple of the following to determine the target 3GPP connection: the specified access manner, the priority of the access manner, the specified network type, and the priority of the network type.

For example, the specified access manner and the specified network type may be combined. The terminal determining the target 3GPP connection from the multiple 3GPP connections the terminal maintains simultaneously may include: determining, the terminal, whether there is a 3GPP connection under the specified access manner among the multiple 3GPP connections it maintains simultaneously; if the terminal determines that there are one or more 3GPP connections under the specified access manner among the multiple 3GPP connections it maintains simultaneously, then taking any one of the one or more 3GPP connections under the specified access manner as the target 3GPP connection; or if the terminal determines that there is no 3GPP connection under the specified access manner among the multiple 3GPP connections it maintains simultaneously, then determining whether there is a 3GPP connection under the specified network type among the multiple 3GPP connections it maintains simultaneously; and if the terminal determines that there are one or more 3GPP connections under the specified network type among the multiple 3GPP connections it maintains simultaneously, then taking any one of the one or more 3GPP connections under the specified network type as the target 3GPP connection; or if the terminal determines that there is no 3GPP connection under the specified network type among the multiple 3GPP connections it maintains simultaneously, then taking any one of the multiple 3GPP connections it maintains simultaneously as the target 3GPP connection.

For example, the specified access manner and the priority of the access manner may be combined. The terminal determining the target 3GPP connection from the multiple 3GPP connections it maintains simultaneously may include: determining, by the terminal, whether there is a 3GPP connection under the specified access manner among the multiple 3GPP connections the terminal maintains simultaneously; if the terminal determines that there are one or more 3GPP connections under the specified access manner among the multiple 3GPP connections the terminal maintains simultaneously, then taking, by the terminal, any one of the one or more 3GPP connections under the specified access manner as the target 3GPP connection; or if the terminal determines that there is no 3GPP connection under the specified access manner among the multiple 3GPP connections the terminal, maintains simultaneously, then based on the priority of the access manner and the access manner corresponding to each of the multiple 3GPP connections the terminal, maintains simultaneously, selecting, by the terminal, any 3GPP connection with the highest priority of the access manner from the multiple 3GPP connections the terminal, maintains simultaneously as the target 3GPP connection.

For example, the specified access manner and the priority of the network type may be combined. The terminal determining the target 3GPP connection from the multiple 3GPP connections the terminal, maintains simultaneously may include: determining, by the terminal, whether there is a 3GPP connection under the specified access manner among the multiple 3GPP connections the terminal, maintains simultaneously; if the terminal determines that there are one or more 3GPP connections under the specified access manner among the multiple 3GPP connections the terminal maintains simultaneously, then taking, by the terminal, any one of the one or more 3GPP connections under the specified access manner as the target 3GPP connection; or if the terminal determines that there is no 3GPP connection under the specified access manner among the multiple 3GPP connections the terminal, maintains simultaneously, then based on the priority of the network type and the network type corresponding to each of the multiple 3GPP connections it maintains simultaneously, selecting, by the terminal, any 3GPP connection with the highest priority of the network type among the multiple 3GPP connections the terminal maintains simultaneously as the target 3GPP connection.

The above is only a partial exemplary description of how the terminal combines multiple of the following to determine the target 3GPP connection: the specified access manner, the priority of the access manner, the specified network type, and the priority of the network type. In actual processing, it may include but is not limited to the above methods. However, not all possible combinations or methods for determining the target 3GPP connection are limited or exhaustively listed here.

In a possible embodiment, among the multiple 3GPP connections of the terminal, each 3GPP connection maintains its own registration area, registration update time, and other information. In other words, the terminal may perform the following processing: determining, by the terminal, whether the current location is within the registration area associated with any 3GPP connection and whether the current time has reached the registration update time associated with any 3GPP connection; and if the terminal is not within the registration area associated with any 3GPP connection and/or has reached the registration update time associated with any 3GPP connection, initiating, by the terminal, the corresponding registration update request through the 3GPP connection. The specific processing is not limited here.

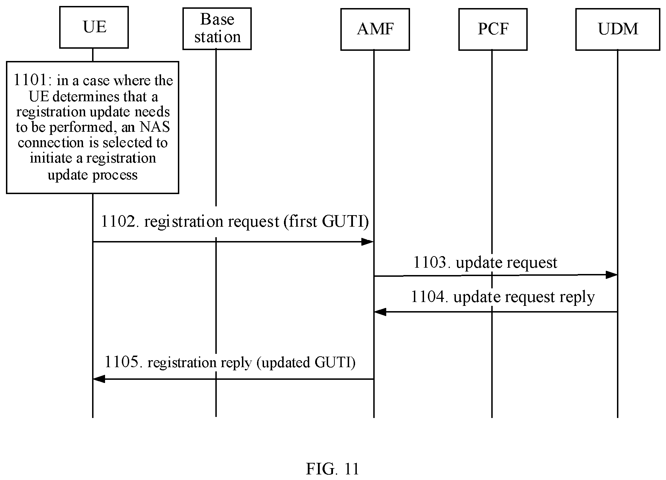

Referring to FIG. 11, taking the terminal as UE and the first core network side device as AMF as an example, the registration update process provided in the above implementation is illustrated as follows.

Step 1101, in a case where the UE determines that a registration update needs to be performed (i.e., the second condition is met), the NAS connection (i.e., the aforementioned target 3GPP connection) is selected to initiate the registration update process.

In this embodiment, the UE has completed the initial registration (e.g., process as illustrated in FIG. 9). Based on the parameters obtained during the registration process illustrated in FIG. 9 (e.g., a registration area, a registration periodic update time, a connection level indication, or the like), the UE determines whether to initiate a registration update and selects a NAS connection (i.e., the aforementioned target 3GPP connection) to initiate the registration update.

Step 1102, the UE transmits the registration request (specifically a registration update request) to the AMF through the selected NAS connection (i.e., the aforementioned target 3GPP connection). The registration request may carry a first GUTI.

Steps 1103 to 1105, the AMF transmits an update request to the UDM, the AMF receives the update request reply from the UDM, and the AMF transmits a registration reply (i.e., the registration update reply in the aforementioned embodiments) to the UE, which may carry the updated GUTI.

The detailed processing of steps 1102 to 1105 above is the same as the existing registration update process, and will not be repeated here.

FIG. 11 further illustrates the base station and PCF. The base station may be configured to forward messages between the UE and the AMF. The PCF-related processing is not described in this example. In actual processing, the processing in FIG. 11 above may include PCF-related processing, but this example does not describe it for the sake of simplicity.

In some possible implementations, after the first core network side device transmits the first reply message, the method further includes: receiving, by the first core network side device, a downlink paging notification message; transmitting, by the first core network side device, a paging message to each of one or more access network devices; and receiving, by the first core network side device, a paging response message through the target 3GPP connection, where the target 3GPP connection is one of the multiple 3GPP connections of the terminal.

After receiving the first reply message, the method further includes: receiving, by the terminal, a paging message; and transmitting a paging response message through the target 3GPP connection, where the target 3GPP connection is one of the multiple 3GPP connections of the terminal.

In this embodiment, the multiple 3GPP connections of the terminal refer to the multiple 3GPP connections that the terminal has currently established and simultaneously maintains. The multiple 3GPP connections of the terminal may include at least a first 3GPP connection and a second 3GPP connection.

The first core network side device receiving the downlink paging notification message may include: receiving, by the first core network side device, the downlink paging message through a third core network side device. The downlink paging message may be a downlink paging notification message. For example, assuming that the third core network side device is SMF and the first core network side device is AMF. AMF may receive the downlink paging notification messages transmitted by SMF, and the transmission of the downlink paging notification message may be implemented through the Namf_Communication_N1N2MessageTransfer (forwarding N1N2 messages) service. SMF may transmit the downlink paging notification message to AMF after receiving a downlink data notification through UPF.

In an embodiment, the first core network side device may not determine the target 3GPP connection, and after the terminal receives the paging message, the terminal determines the target 3GPP connection from its own multiple 3GPP connections.

In this embodiment, the one or more access network devices are one or more access network devices within the registration area corresponding to the multiple 3GPP connections of the terminal.

Before transmitting a paging message to each of one or more access network devices, the first core network side device may first determine the one or more access network devices. The method by which the first core network side device determines the one or more access network devices may include: determining, by the first core network side device, one or more optional access network devices located in the registration area, according to the registration areas corresponding to the multiple 3GPP connections of the terminal, and selecting , by the first core network side device, some or all of the one or more optional access network devices located in the registration area as the one or more access network devices.

The method by which the first core network side device determines the registration areas corresponding to the multiple 3GPP connections of the terminal may include: determining, by the first core network side device, the registration areas corresponding to the multiple 3GPP connections of the terminal based on the tracking area identity (TAI) list (tracking area list, TAI list) of the terminal. Here, the TAI list of the terminal may be maintained by the first core network side device.

For example, the first core network side device may obtain the TAI list through the TA corresponding to one or more 3GPP connections (which may be multiple control plane connections) of the terminal. For example, the first core network side device determines the registration areas corresponding to multiple 3GPP connections of the terminal based on the TAI list (tracking area list, TAI list) of the terminal, which may mean that the first core network side device determines one or more TAs corresponding to multiple 3GPP connections of the terminal based on the TAI list of the terminal, and uses each of the one or more TAs corresponding to the multiple 3GPP connections of the terminal as the registration areas corresponding to the multiple 3GPP connections of the terminal.

The terminal receiving the paging message may include: receiving, by the terminal, the paging message through the one or more access network devices.

The terminal transmitting the paging response message through the target 3GPP connection may refer to the terminal initiating a service request process through the target 3GPP connection and responding to the paging message in the service request process (i.e., transmitting the paging response message and performing subsequent paging-related processing).

Before transmitting the paging response message, the terminal may further include: determining the target 3GPP connection from the multiple 3GPP connections.

On the terminal side, the target 3GPP connection is determined from the multiple 3GPP connections of the terminal based on at least one of: the connection level indication, the paging indication, the default rule, the specified access manner, the priority of the access manner, the specified network type, or the priority of the network type.

Optionally, during the procedure of registration of each 3GPP connection, the first core network side device may carry the connection level indication corresponding to the 3GPP connection in the reply message corresponding to each 3GPP connection. Accordingly, the method by which the terminal determines the target 3GPP connection from the multiple 3GPP connections may include: determining, by the terminal, the target 3GPP connection based on the connection level indication corresponding to each 3GPP connection the terminal maintains simultaneously. This method is the same as the description of the foregoing embodiments, and will not be repeated.

It should be noted that this example is particularly applicable to situations where one or more 3GPP connections in the all 3GPP connections of the terminal are configured with connection level indications, and no 3GPP connection is configured with the paging indication.

Optionally, during the procedure of registration of each 3GPP connection, the first core network side device may carry the paging indication corresponding to the 3GPP connection in the reply message corresponding to each 3GPP connection among at least one 3GPP connection of the terminal.

Accordingly, the method by which the terminal determines the target 3GPP connection from the multiple 3GPP connections may include: determining, by the terminal, a 3GPP connection whose value of paging indication is a first paging indication value as the target 3GPP connection based on the paging indication corresponding to each 3GPP connection among the at least one of all 3GPP connections the terminal maintains simultaneously.

It should be noted that among all the 3GPP connections of the terminal, there may be one or more 3GPP connections configured with the connection level indication and paging indications. In this case, the target 3GPP connection may be selected by the paging indications.

Optionally, during the procedure of registration of each 3GPP connection, the first core network side device may not configure corresponding connection level indication and paging indication for each 3GPP connection. The method by which the terminal determines the target 3GPP connection from the multiple 3GPP connections may include: determining, by the terminal, based on the default rule, the target 3GPP connection from the multiple 3GPP connections the terminal maintains simultaneously. The related description of this example is similar to that of the aforementioned embodiments, and therefore will not be repeated.

Optionally, during the procedure of registration of each 3GPP connection, the first core network side device may not configure a corresponding connection level indication for each 3GPP connection. The method by which the terminal determines the target 3GPP connection from the multiple 3GPP connections may include: determining, by the terminal, the target 3GPP connection from the multiple 3GPP connections the terminal maintains simultaneously, based on at least one of the specified access manner, the priority of the access manner, the specified network type, or the priority of the network type. The related description of this example is similar to that of the aforementioned embodiments, and thus it will not be repeated.

After determining the target 3GPP connection, the terminal may perform the processing of transmitting a paging response message through the target 3GPP connection.

In an embodiment, the first core network side device may determine the target 3GPP connection. In this embodiment, the paging message carries indication information for activating the target 3GPP connection.

On the first core network side device side, the one or more access network devices are determined based on the target 3GPP connection among the multiple 3GPP connections of the terminal.

Specifically, the first core network side device transmitting the paging message to each of the one or more access network devices may include: determining, by the first core network side device, the target 3GPP connection of the terminal from the multiple 3GPP connections of the terminal; determining, by the first core network side device, one or more access network devices based on the target 3GPP connection; and transmitting, by the first core network side device, the paging message to each of the one or more access network devices. Accordingly, the terminal receiving the paging message may include: receiving, by the terminal, the paging message through one or more access network devices. In this case, one or more access network devices transmitting the paging message include at least the access network device corresponding to the target 3GPP connection.

On the first core network side device side, the target 3GPP connection is determined from the multiple 3GPP connections of the terminal based on at least one of: the connection level indication, the paging indication, the default rule, the specified access manner, the priority of the access manner, the specified network type, or the priority of the network type.

Optionally, during the procedure of registration of each 3GPP connection, the first core network side device may configure and save the connection level indication corresponding to each 3GPP connection when the terminal establishes each 3GPP connection. Accordingly, the first core network side device determining the target 3GPP connection of the terminal from the multiple 3GPP connections of the terminal may include: determining, by the first core network side device, the target 3GPP connection according to the connection level indication corresponding to each 3GPP connection the terminal maintains simultaneously. This method is similar to the related processing in the previous embodiments where the terminal determines the target 3GPP connection based on the connection level indication, and will not be repeated.

It should be noted that this example is particularly applicable to situations where one or more 3GPP connections among the all 3GPP connections of the terminal are configured with connection level indications, and no 3GPP connection is configured with the paging indication.

Optionally, during the procedure of registration of each 3GPP connection, the first core network side device may configure and save the paging indication corresponding to each 3GPP connection when the terminal establishes each of at least one 3GPP connection.

Accordingly, the first core network side device determining the target 3GPP connection of the terminal from the multiple 3GPP connections of the terminal may include: determining, by the first core network side device, a 3GPP connection whose value of paging indication is a first paging indication value as the target 3GPP connection based on the paging indication corresponding to each 3GPP connection among at least one of all 3GPP connections the terminal maintains simultaneously.

It should be noted that among all the 3GPP connections of the terminal, there may be one or more 3GPP connections configured with connection level indications and paging indications. In this case, the target 3GPP connection may be selected by paging indications.

Optionally, during the procedure of registration of each 3GPP connection, the first core network side device may not configure corresponding connection level indication and paging indication for each 3GPP connection. The process by which the first core network side device determines the target 3GPP connection of the terminal from the multiple 3GPP connections may include: determining, by the first core network side device, based on the default rule, the target 3GPP connection from the multiple 3GPP connections of the terminal. The related description of this example is similar to the related processing in the previous embodiments where the terminal determines the target 3GPP connection based on the default rule, and thus it will not be repeated.

Optionally, during the procedure of registration of each 3GPP connection, the first core network side device may not configure corresponding connection level indication and paging indication for each 3GPP connection. The first core network side device determining the target 3GPP connection of the terminal from the multiple 3GPP connections of the terminal may include: specifying, by the first core network side device, at least one of: the access manner, the priority of the access manner, the network type, or the priority of the network type, and determining, by the first core network side device, the target 3GPP connection from the multiple 3GPP connections of the terminal. The related description of this example is similar to the related processing in the foregoing embodiments where the terminal determines the target 3GPP connection based on at least one of: the specified access manner, the priority of the access manner, the specified network type, or the priority of the network type, and thus it will not be repeated.

After determining the target 3GPP connection, the first core network side device may determine that the target 3GPP connection (which may be a control plane connection) of the terminal needs to be activated, and notify the terminal through a paging message. That is, the paging message carries the indication information for activating the target 3GPP connection. For example, the indication information for activating the target 3GPP connection may include at least the identifier of the target 3GPP connection. The paging message carries the identifier of the target 3GPP connection to instruct the terminal to activate the target 3GPP connection.

It should be understood that, in addition to carrying the indication information for activating the target 3GPP connection, the paging message may also carry some or all of the content that the paging message is required to carry as specified in the relevant protocols.

The terminal receiving the paging message may include: receiving, by the terminal, the paging message through one or more access network devices.

The terminal transmitting the paging response message through the target 3GPP connection may refer to: determining, by the terminal, the target 3GPP connection based on the indication information for activating the target 3GPP connection carried in the paging message; initiating, by the terminal, a service request process through the target 3GPP connection, and responding to the paging message in the service request process (i.e., transmitting the paging response message and performing subsequent paging-related processing).

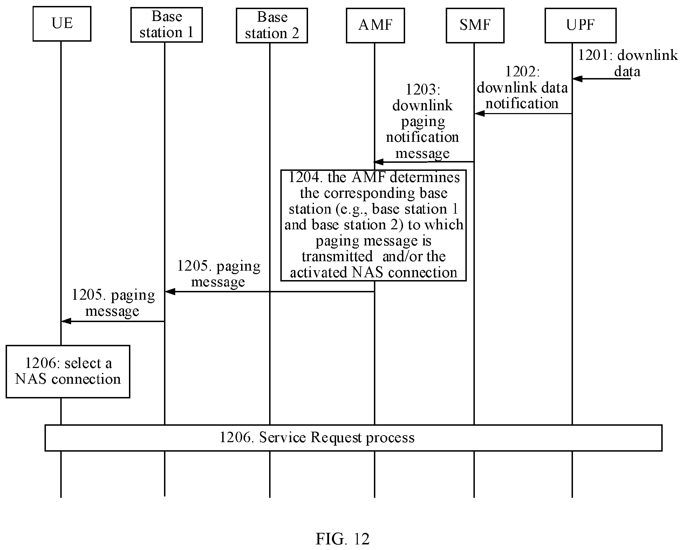

Referring to FIG. 12, taking the terminal as UE, the first core network side device as AMF, the third core network device as SMF, and one or more access network devices including base station 1 and base station 2 as an example, an exemplary description of the paging-related process provided in this embodiment may include the following.

Step 1201, UPF receives a downlink data packet.

Step 1202, after the downlink data packet arrives, the UPF will transmit a downlink data notification to the SMF.

Step 1203, SMF performs a downlink paging notification (which may be a downlink paging notification message) to AMF. The transmission of the downlink paging notification message may be implemented through the Namf_Communication_N1N2MessageTransfer (forwarding N1N2 messages) service.

Step 1204, the AMF determines the corresponding base station (e.g., base station 1 and base station 2) to which the paging message is transmitted and/or the activated NAS connection (i.e., the target 3GPP connection in the aforementioned embodiments).

If the initial registration of the UE is that multiple registrations are completed through multiple NAS connections (as illustrated in FIG. 9, at least 3GPP connection 1 and 3GPP connection 2 are established), the AMF determines which NAS connection needs to be activated and/or which base station(s) the NAS connection corresponds to, based on the UE context parameters (paging indication and/or connection level indication) generated in the process illustrated in FIG. 9, and thereby the AMF transmits, to the base station(s), a paging message and/or which NAS connection needs to be activated.

If the initial registration of the UE is completed through a NAS (i.e., only 3GPP connection 1 is established), the subsequent paging response processing is the same as the current mechanism and will not be repeated further.

Step 1205, the AMF transmits the paging message to the UE through the base station. In this step, the AMF may transmit paging messages to the UE through both base station 1 and base station 2. For simplicity, FIG. 12 does not illustrate an example of the AMF transmitting the paging message to the UE through base station 2.

Step 1206, after receiving the paging message, the UE selects a NAS connection (i.e., the target 3GPP connection in the aforementioned embodiments) based on the parameters obtained during the procedure of the registration (e.g., paging indication and/or connection level indication). Then, the UE initiates a service request process to respond to the paging message (which may include the paging response message).

It should be noted that before initiating the NAS message, the UE will first establish the corresponding RRC connection. Therefore, if only a paging reply is initiated through a NAS connection, then only the RRC connection required for the NAS connection needs to be established (for example, if the NAS connection selected by the UE corresponds to base station 1, then the UE may establish the required RRC connection with base station 1 in FIG. 12).

In some possible implementations, the terminal may register only once to establish a control plane connection (or NAS connection); however, the terminal may establish multiple user plane connections.

In this embodiment, the processing of the terminal establishing a control plane connection is similar to the processing of the terminal establishing only a second 3GPP connection in the previous embodiments. The following description will take the second 3GPP connection being the only control plane connection (or NAS connection) established by the terminal as an example.

The processing performed by the terminal may include: transmitting, by the terminal, a second request message, where the second request message is used to establish a second 3GPP connection, i.e., a control plane connection. The processing of the first core network side device may include: receiving, by the first core network side device, a second request message. The related description of the second request message is similar to that of the aforementioned embodiments. For example, the second request message may or may not carry the capability indication of the terminal, or the like, and will not be repeated here.

The processing after the first core network side device receives the second request message may include: transmitting, by the first core network side device, a second reply message. Accordingly, the processing after the terminal transmits the second request message may include: receiving, by the terminal, the second reply message.

The processing before the first core network side device transmits the second reply message may include: obtaining, by the first core network side device, the subscription information of the terminal from the second core network side device; determining, by the first core network side device, at least one of the following information based on the subscription information of the terminal and/or local policies: a first indication, one or more association identifiers, one or more association identifier ranges, a condition under which the terminal is allowed to establish multiple user plane connections, a first temporary identifier, or an identifier of the user plane connection.

In this embodiment, the content carried in the second reply message transmitted by the first core network side device to the terminal may include some or all content of at least one of the above-mentioned information. Specifically, the second reply message may carry at least one of: the first indication, one or more association identifiers, one or more association identifier ranges, the condition under which the terminal is allowed to establish multiple user plane connections, a first temporary identifier, or an identifier of the user plane connection. Further, the second reply message is further used to indicate whether the second 3GPP connection (i.e., control plane connection) has been successfully established. Preferably, the second reply message is used to indicate that the second 3GPP connection (i.e., control plane connection) has been successfully established.

The first indication may be used to indicate at least one of: whether the terminal is allowed to establish multiple user plane connections, or the number of multiple user plane connections that the terminal is allowed to establish. The method for determining the first indication is similar to that in the previous embodiments, except that in this embodiment, the first indication is only for one connection type in the previous embodiments, i.e., the user plane connection.

The condition under which the terminal is allowed to establish multiple user plane connections include at least one of: a location where the terminal is allowed to establish multiple user plane connections, or a time when the terminal is allowed to establish multiple user plane connections. The related descriptions regarding location and time are similar to those regarding time and location in the condition under which the terminal is allowed to establish multiple 3GPP connections in the aforementioned embodiments, and will not be repeated.

Each of the one or more association identifiers is used to indicate a correspondence between at least one of the following and the user plane connection: the terminal, the access manner, the network type, or the network identifier.

Each of the one or more association identifier ranges is used to indicate the correspondence between at least one of the following and the user plane connection: the terminal, access manner, network type, or network identifier.

The related descriptions of the association identifier and the association identifier range are similar to those in the previous embodiments, except that the association identifier and the association identifier range correspond to the user plane connection, and thus they will not be repeated here.

The purpose of the identifier of the user plane connection is to identify or indicate that the user plane connection currently established by the terminal is one of the multiple user plane connections of the terminal.

After receiving the second reply message (i.e., completing the establishment of the second 3GPP connection (a control plane connection)), the terminal maintains only one control plane connection and does not establish more control plane connections, but the terminal may establish multiple user plane connections.

The processing of the terminal after receiving the second reply message may include: transmitting, by the terminal, a first request message, where the first request message is used to establish a first 3GPP connection; and receiving, by the terminal, a first reply message, where each of the first reply message is used to indicate that the first 3GPP connection has been successfully established.

In this embodiment, there may be multiple first request messages and multiple first reply messages. Further, any one first request message may be a PDU session establishment/modification request, any one first reply message may be a PDU session establishment/modification reply message, and the first 3GPP connection established by using any one first request message (i.e., PDU session establishment/modification request) is a user plane connection.

In this embodiment, each user plane connection among the multiple user plane connections may also be substitutability referred to as each 3GPP user plane connection. The user plane connection and 3GPP user plane connection mentioned below have the same meaning and will not be explained again.

Further, each user plane connection (i.e., a 3GPP user plane connection) may include an air interface radio bearer connection and/or a core network GPRS tunnelling protocol (GTP) tunnel, and each user plane connection (i.e., the 3GPP user plane connection) is established through a 3GPP access manner or access technology (such as NR access, or E-UTRA access, or satellite access).

The multiple user plane connections (i.e. multiple 3GPP user plane connections) may be established by the terminal initiating multiple PDU session establishment/modification processes. For example, PDU session establishment/modification process initiated each time is used to establish one user plane connection (i.e. 3GPP user plane connection).

Specifically, the processing of the terminal transmitting multiple first request messages may be as follows: in a case where the first condition is met, the terminal transmits multiple PDU session establishment/modification requests, each of the multiple PDU session establishment/modification requests is used to establish a corresponding user plane connection; the terminal receives multiple PDU session establishment/modification reply messages, each of the PDU session establishment/modification reply messages is used to indicate that the corresponding user plane connection has been successfully established.

It should be understood that different PDU session establishment/modification reply messages correspond to different PDU session establishment/modification requests. The transmitting time of different PDU session establishment/modification requests may be the same or different, and this embodiment does not limit them.

The first condition includes at least one of: a condition under which the terminal is allowed to establish multiple user plane connections, or determining, based on the first indication, that the terminal is allowed to establish multiple user plane connections.

In an embodiment, the first condition may only include the condition under which the terminal is allowed to establish multiple user plane connections. That is, if the terminal meets the condition under which the terminal is allowed to establish multiple user plane connections, it may be determined that the first condition is met.

In an embodiment, the first condition may only include determining, based on the first indication, that the terminal is allowed to establish multiple user plane connections. That is, if the terminal determines, based on the first indication, that the terminal is allowed to establish multiple user plane connections, it may be determined that the first condition is met.

In an embodiment, the first condition includes the condition under which the terminal is allowed to establish multiple user plane connections, and determining, based on the first indication, that the terminal is allowed to establish multiple user plane connections.

The detailed description of the first condition in this embodiment is similar to that in the previous embodiments, except that the first condition in the previous embodiments is not limited to user plane connections, while this embodiment limits the first condition to scenarios where only multiple user plane connections are established for the terminal. Therefore, it will not be repeated here.

Each PDU session establishment/modification request in the multiple PDU session establishment/modification requests may carry at least one of: a first association parameter, a connection identifier, a first temporary identifier, or a PDU session identifier. Further, each PDU session establishment/modification request may also carry some or all of the content that is required to carry as specified in the relevant protocol, which will not be limited or exhaustively listed here.

The connection identifier carried in any PDU session establishment/modification request may be determined based on the identifier of the user plane connection. The identifier of the user plane connection is carried in the second reply message. For example, the identifier of a user plane connection may include multiple identifiers. The connection identifier carried in any PDU session establishment/modification request may be an identifier of any user plane connection, and different PDU session establishment/modification requests may carry different identifiers of the user plane connection. For example, the identifier of the user plane connection may include multiple identifiers, such as "c1 to c10", when the terminal initiates the establishment of the user plane connection, c1 may be carried in the PDU session establishment request, and when initiating the establishment of another user plane connection, c2 may be carried in the PDU session establishment request.

The first association parameter carried in any PDU session establishment/modification request is used to indicate that the user plane connection (i.e., 3GPP user plane connection) is one of the multiple user plane connections (i.e. multiple 3GPP user plane connections) of the terminal. Any one first association parameter is associated with at least one of: the access manner corresponding to the user plane connection (i.e., the 3GPP user plane connection), the network type corresponding to the user plane connection (i.e., the 3GPP user plane connection), or the network identifier corresponding to the user plane connection (i.e., the 3GPP user plane connection).

The first association parameter is determined based on the one or more association identifiers, or the first association parameter is determined based on the one or more association identifier ranges. Regarding how to determine the first association parameter based on the association identifier range or association identifier, it is similar to the previous embodiments, except that in this embodiment, the first association parameter is related to at least one of the following corresponding to the user plane connection of the terminal (i.e., 3GPP user plane connection): the access manner, network type, or network identifier.

In the multiple PDU session establishment/modification requests, the PDU session identifiers carried by different PDU session establishment/modification requests may be the same or different.

Optionally, the multiple user plane connections (i.e., multiple 3GPP user plane connections) correspond to the same PDU session. In this case, the PDU session identifier carried in multiple PDU session establishment/modification requests may be the same.

Specifically, multiple user plane connections (i.e. multiple 3GPP user plane connections) may correspond to the same PDU session. In this case, multiple 3GPP user plane connections may share the same PDU session identifier. In other words, among multiple PDU session establishment/modification requests, the PDU session identifiers carried by different PDU session establishment/modification requests are the same, but the identifiers of the user plane connection (i.e., the aforementioned connection identifiers) are different.

Accordingly, core network elements (e.g., the first core network side device) may aggregate or decompose data from different 3GPP user plane connections of the same PDU session (that is, aggregate or decompose data from multiple 3GPP user plane connections corresponding to the same PDU session).

Optionally, the multiple user plane connections (i.e., multiple 3GPP user plane connections) correspond to multiple PDU sessions. In this case, the PDU session identifiers carried in different PDU session establishment/modification requests may be different. In this case, multiple user plane connections do not need to be established by the same core network element.

In this example, each user plane connection (i.e., each 3GPP user plane connection) among the multiple user plane connections (i.e., multiple 3GPP user plane connections) may also correspond to a PDU session, and different user plane connections (i.e., 3GPP user plane connections) may correspond to different PDU sessions. Specifically, each user plane connection (i.e., each 3GPP user plane connection) independently corresponds to a PDU session identifier, and different user plane connections (i.e., 3GPP user plane connections) correspond to different PDU session identifiers. In other words, different PDU session establishment/modification requests carry different PDU session identifiers, and the identifiers of the user plane connections (i.e., the aforementioned connection identifier) are also different.

After receiving any PDU session establishment/modification request, before transmitting the PDU session establishment/modification reply message corresponding to the PDU session, the first core network side device may also perform the following processing: the first core network side device transmits a PDU session establishment/modification request to the third core network side device; the first core network side device receives a reply message corresponding to the PDU session establishment/modification request transmitted by the third core network side device, where the reply message is used to indicate a completion of establishing a user plane connection. The third core network side device may include SMF. This does not limit or exhaustively list all possible nodes.

The processing after the third core network side device receives the PDU session establishment/modification request may include that the third core network side device may perform subscription information acquisition/update processing with the UDM (the second core network side device) to obtain the subscription information provided by the UDM; the third core network side device may perform policy acquisition/update processing with the PCF to obtain the PCC policy generated by the PCF (a fourth core network side device); then the third core network side device may perform session establishment/modification processing with the UPF (a fifth core network side device), and then transmit the reply message corresponding to the PDU session establishment/modification request to the first core network side device. It should be understood that the third core network side device may further return the reply message corresponding to the PDU session establishment/modification request to the access network side device and the terminal. The interaction between the aforementioned third core network side device and UDM, PCF, first core network side device, access network side device, and terminals is the same as or similar to the procedure in the relevant protocols, and thus it will not be repeated here.

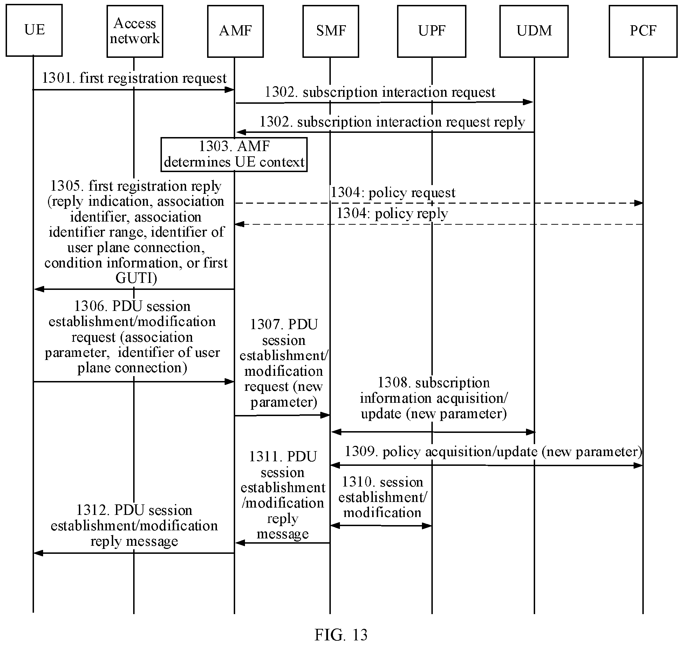

Referring to FIG. 13, taking the terminal as UE, the first core network side device as AMF, the second core network side device as UDM, and the third core network side device as SMF as an example, an exemplary description of the communication method provided in the aforementioned embodiments is given.

Step 1301, the UE initiates a first registration request (i.e., the second request message in the aforementioned embodiments) through an RRC connection established with an access network (e.g., an access network device (base station or gNB, etc.)).

Step 1302, after receiving the first registration request from the UE, the AMF initiates interaction with the UDM. Specifically, as illustrated in FIG. 11, the AMF transmits a subscription interaction request to the UDM, and the AMF receives the subscription interaction request reply (or subscription reply message) transmitted by the UDM.

Step 1303, after receiving the subscription reply message, the AMF determines the UE context based on the subscription information and/or local policies.

The UE context may include at least one of the following information:
reply indication (i.e., the first indication in the foregoing embodiments): whether the UE is allowed to perform multiple user plane connection establishments, and/or the number of user plane connections allowed to be established;
the identifier of the user plane connection;
association identifier and/or association identifier range, i.e., association identifiers of multiple user plane connections established by UE. Here, the association identifier and/or association identifier range may be further distinguished according to different 3GPP standards, such as the number of user plane connections, or association identifiers and serial numbers/serial numbers (ranges) under the NR access, LTE access, and satellite access respectively. Further, the association identifier and/or association identifier range may also be distinguished according to PLMN and SNPN, such as the number, association identifiers or serial numbers (ranges) of user plane connections under PLMN and SNPN respectively. Furthermore, it is even possible to further differentiate the granularity of each PLMN ID and SNPN ID;
condition information, i.e., the condition under which the terminal is allowed to establish multiple user plane connections (e.g., location area, time, 3GPP access manner requirements, or the like); or
first temporary identifier GUTI.

Step 1304 (optional), the AMF transmits a request message to the PCF to obtain the policy, which may be the access and mobility policy. As illustrated in FIG. 13, the AMF transmits a policy request to the PCF, and the AMF receives a policy reply from the PCF.

Step 1305, the AMF transmits a first registration reply to the UE, which may carry one or more of the parameters generated in step 1303 (e.g., at least one of reply indication, association identifier, association identifier range, identifier of the user plane connection, condition information, or the first GUTI). In this step, the first registration reply is the second reply message in the aforementioned embodiments.

Step 1306, the UE transmits, to the AMF, multiple PDU session establishment/modification requests in which new parameter (e.g., at least one of the association parameters (i.e., the first association parameter in the aforementioned embodiments) and the identifier of the user plane connection) is added. In subsequent steps, at least one of the association parameters and the identifier of the user plane connection carried in each PDU session establishment/modification request will be collectively referred to as "new parameter", which will not be explained again in this example. Additionally, it should be noted that, for the sake of simplicity, FIG. 13 does not illustrate multiple PDU session establishment/modification requests, but only uses "PDU session establishment/modification request" as an example. FIG. 13 does not represent a limitation on the number of PDU session establishment/modification requests transmitted by the UE.

Step 1307, the AMF transmits, to the SMF, each PDU session establishment/modification request message in which the new parameter is added. Each PDU session establishment/modification request message transmitted by the AMF to the SMF may actually be implemented or carried by invoking a service-based interface, such as by invoking the Nsmf_PDUsession_CreateSMContext_Request service provided by the SMF.

Step 1308, the SMF may carry the new parameter in the subscription information acquisition/update (message or process) exchanged with the UDM, so that the UDM may provide subscription information accordingly.

Step 1309, the SMF may add the new parameter in the policy acquisition/update (message or process) with PCF, so that PCF may generate a PCC policy accordingly.

Step 1310, the SMF and UPF interact to perform session modification/establishment.

Steps 1311 and 1312, the SMF returns multiple PDU session establishment/modification reply messages to the AMF, access network and UE (where different PDU session establishment/modification reply messages correspond to different PDU session establishment/modification requests). The related processing of each PDU session establishment/modification request in steps 1311 and 1312 may be the same as the related processing in the existing mechanism, and will not be described in detail. Additionally, it should be noted that, for the sake of simplicity, FIG. 13 does not illustrate multiple PDU session establishment/modification reply messages; only the "PDU session establishment/modification reply message" is used as an example, FIG. 13 does not represent a limitation on the number of PDU session establishment/modification reply messages transmitted by the UE.

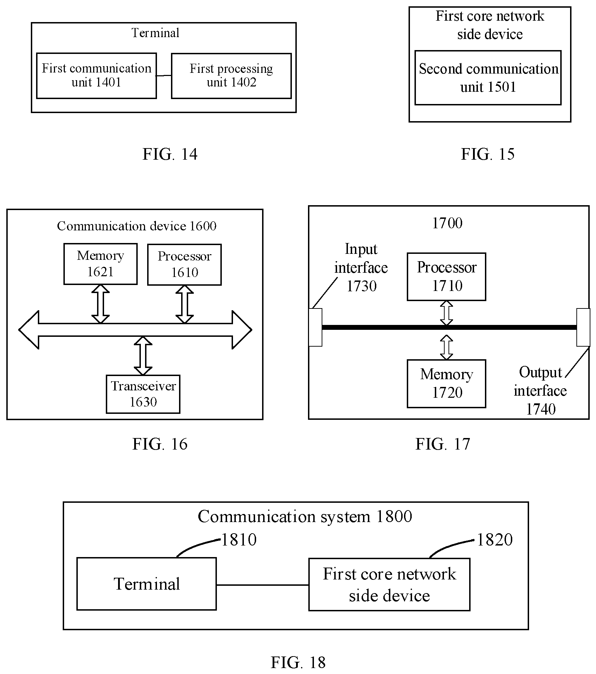

FIG. 14 is a schematic diagram of the composition structure of a terminal according to an embodiment of the present application, including:
a first communication unit 1401, configured to transmit a first request message, where the first request message is used to establish a first 3GPP connection; and receive a first reply message, where the first reply message is used to indicate that the first 3GPP connection has been successfully established, and the first 3GPP connection is one of multiple 3GPP connections of the terminal.

The terminal further includes: a first processing unit 1402, configured to transmit the first request message through the first communication unit in a case where a first condition is met, where the first condition includes at least one of: a condition under which the terminal is allowed to establish the multiple 3GPP connections, or determining, based on a first indication, that the terminal is allowed to establish the multiple 3GPP connections.

The first request message carries at least one of: a capability indication of the terminal, a first association parameter, a connection identifier, or a first temporary identifier.

The connection identifier includes at least one of: an identifier of the first 3GPP connection, or a respective identifier of each of one or more 3GPP connections of the terminal other than the first 3GPP connection.

The first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

The first association parameter is used to indicate that the first 3GPP connection is one of the multiple 3GPP connections of the terminal.

The first association parameter is related to at least one of: a connection type of the first 3GPP connection, an access manner corresponding to the first 3GPP connection, a network type corresponding to the first 3GPP connection, or a network identifier corresponding to the first 3GPP connection.

The first association parameter is determined based on one or more association identifiers, or the first association parameter is determined based on one or more association identifier ranges.

The first communication unit is configured to receive a second reply message, where the second reply message is used to determine whether the terminal is allowed to establish the multiple 3GPP connections.

The second reply message carries at least one of: a first indication, one or more association identifiers, one or more association identifier ranges, a condition under which the terminal is allowed to establish the multiple 3GPP connections, or a first temporary identifier.

The condition under which the terminal is allowed to establish the multiple 3GPP connections include at least one of: a location where the terminal is allowed to establish the multiple 3GPP connections, a time when the terminal is allowed to establish the multiple 3GPP connections, or one or more access manners in which the terminal is allowed to establish the multiple 3GPP connections.

The first indication is used to indicate at least one of: whether the terminal is allowed to establish the multiple 3GPP connections, or a number of the multiple 3GPP connections that the terminal is allowed to establish.

The number of the multiple 3GPP connections that the terminal is allowed to establish includes: a respective number of 3GPP connections under each of one or more connection types that the terminal is allowed to establish.

The first communication unit is configured to transmit a second request message, where the second request message is used to establish a second 3GPP connection, and the second 3GPP connection is a 3GPP connection established by the terminal for a first time.

The second request message carries capability information of the terminal.

The capability indication of the terminal is used to indicate at least one of: the terminal supporting or requesting establishment of the multiple 3GPP connections, or a number of the multiple 3GPP connections that the terminal supports or requests to establish.

The number of the multiple 3GPP connections that the terminal supports or requests to establish includes: a respective number of 3GPP connections under each of one or more connection types that the terminal supports or requests to establish.

The one or more connection types include at least one of: a control plane connection, or a user plane connection.

The second reply message is further used to indicate whether the second 3GPP connection has been successfully established.

The second reply message further carries at least one of: an identifier of the second 3GPP connection, a connection level indication corresponding to the second 3GPP connection, or a paging indication corresponding to the second 3GPP connection.

The connection level indication is used to determine whether to perform a specified process through a corresponding 3GPP connection.

The specified process includes at least one of: a paging-related process, or a registration update process.

The paging indication is used to determine whether to perform a paging-related process through a corresponding 3GPP connection.

The first communication unit is configured to transmit a third request message through a third 3GPP connection, where the third request message is used to establish a user plane connection corresponding to the third 3GPP connection, and the third 3GPP connection is one of the multiple 3GPP connections of the terminal; and receive a third reply message through the third 3GPP connection, where the third reply message is used to indicate that the user plane connection corresponding to the third 3GPP connection has been successfully established.

The third request message carries at least one of: an identifier of the third 3GPP connection, or a second association parameter.

The second association parameter is used to indicate that the user plane connection corresponding to the third 3GPP connection is one of the multiple 3GPP connections of the terminal.

The second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

The second association parameter is determined based on one or more association identifiers, or the second association parameter is determined based on one or more association identifier ranges.

Each of the one or more association identifiers is used to indicate a correspondence between at least one of the following and a 3GPP connection: the terminal, a connection type, an access manner, a network type, or a network identifier.

Each of the one or more association identifier ranges is used to indicate the correspondence between at least one of the following and a 3GPP connection: the terminal, a connection type, an access manner, a network type, or a network identifier.

The first processing unit is configured to control the first communication unit to transmit a registration update request through a target 3GPP connection in a case where a second condition is met, where the target 3GPP connection is one of the multiple 3GPP connections of the terminal.

The second condition includes at least one of: the terminal being not located within a registration area, or a registration update time having been reached.

The first communication unit is configured to receive a registration update reply through the target 3GPP connection, where the registration update reply carries an updated first temporary identifier.

The first communication unit is configured to receive a paging message and transmit a paging response message through a target 3GPP connection, where the target 3GPP connection is one of the multiple 3GPP connections of the terminal.

The paging message carries indication information for activating the target 3GPP connection.

The target 3GPP connection is determined from the multiple 3GPP connections of the terminal based on at least one of: a connection level indication, a paging indication, a default rule, a specified access manner, a priority of an access manner, a specified network type, or a priority of a network type.

FIG. 15 is a schematic diagram of the composition structure of a first core network side device according to an embodiment of the present application, including:
a second communication unit 1501, configured to receive a first request message, where the first request message is used to establish a first 3GPP connection; and transmit a first reply message, where the first reply message is used to indicate that the first 3GPP connection has been successfully established, and the first 3GPP connection is one of the multiple 3GPP connections of the terminal.

The first request message carries at least one of: a capability indication of the terminal, a first association parameter, a connection identifier, or a first temporary identifier.

The connection identifier includes at least one of: an identifier of the first 3GPP connection, or a respective identifier of each of the multiple 3GPP connections other than the first 3GPP connection of the terminal.

The first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

The first association parameter is used to indicate that the first 3GPP connection is one of the multiple 3GPP connections of the terminal.

The first association parameter is related to at least one of: a connection type of the first 3GPP connection, an access manner corresponding to the first 3GPP connection, a network type corresponding to the first 3GPP connection, or a network identifier corresponding to the first 3GPP connection.

The first association parameter is determined based on one or more association identifiers, or the first association parameter is determined based on one or more association identifier ranges.

The second communication unit is configured to transmit a second reply message, where the second reply message is used to determine whether the terminal is allowed to establish the multiple 3GPP connections.

The second reply message carries at least one of: a first indication, one or more association identifiers, one or more association identifier ranges, a condition under which the terminal is allowed to establish the multiple 3GPP connections, or a first temporary identifier.

The condition under which the terminal is allowed to establish the multiple 3GPP connections include at least one of: a location where the terminal is allowed to establish the multiple 3GPP connections, a time when the terminal is allowed to establish the multiple 3GPP connections, or the terminal being allowed to establish the multiple 3GPP connections under one or more access manners.

The first indication is used to indicate at least one of: whether the terminal is allowed to establish the multiple 3GPP connections, or a number of the multiple 3GPP connections that the terminal is allowed to establish.

The number of the multiple 3GPP connections that the terminal is allowed to establish includes: a respective number of 3GPP connections under each of one or more connection types that the terminal is allowed to establish.

The second communication unit is configured to receive a second request message, where the second request message is used to establish a second 3GPP connection, and the second 3GPP connection is a 3GPP connection requested to be established by the terminal for the first time.

The second reply message is further used to indicate whether the second 3GPP connection has been successfully established.

The second reply message carries at least one of: an identifier of the second 3GPP connection, a connection level indication corresponding to the second 3GPP connection, or a paging indication corresponding to the second 3GPP connection.

The connection level indication is used to determine whether to perform processing of a specified process through a corresponding 3GPP connection.

The specified process includes at least one of: a paging-related process, or a registration update process.

The paging indication is used to determine whether to perform processing of a paging-related process through a corresponding 3GPP connection.

The second request message carries capability information of the terminal.

The second communication unit is configured to transmit the capability information of the terminal to a second core network side device; and receive subscription information of the terminal transmitted by the second core network side device.

The subscription information of the terminal includes at least one of: whether the terminal is allowed to establish the multiple 3GPP connections; a number of the multiple 3GPP connections that the terminal is allowed to establish; or frequency information corresponding to each 3GPP connection among the multiple 3GPP connections that the terminal is allowed to establish.

The capability indication of the terminal is used to indicate at least one of: the terminal supporting or requesting establishment of the multiple 3GPP connections, or a number of the multiple 3GPP connections that the terminal supports or requests to establish.

The number of the multiple 3GPP connections that the terminal supports or requests to establish includes: a respective number of 3GPP connections under each of the one or more connection types that the terminal supports or requests to establish.

The one or more connection types include at least one of: a control plane connection, or a user plane connection.

The second communication unit is configured to receive a third request message through a third 3GPP connection, where the third request message is used to establish a user plane connection corresponding to the third 3GPP connection, and the third 3GPP connection is one of the multiple 3GPP connections of the terminal; and transmit a third reply message through the third 3GPP connection, where the third reply message is used to indicate that the user plane connection corresponding to the third 3GPP connection has been successfully established.

The third request message carries at least one of: an identifier of the third 3GPP connection, or a second association parameter.

The second association parameter is used to indicate that the user plane connection corresponding to the third 3GPP connection is one of the multiple 3GPP connections of the terminal.

The second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

The second association parameter is determined based on one or more association identifiers, or the second association parameter is determined based on one or more association identifier ranges.

The second communication unit is configured to transmit a fourth request message to a third core network side device, where the fourth request message carries at least one of: an identifier of the third 3GPP connection, or a second association parameter; and receive a fourth reply message transmitted by the third core network side device, where the fourth reply message is used to indicate a completion of establishing the user plane connection corresponding to the third 3GPP connection.

Each of the one or more association identifiers is used to indicate a correspondence between at least one of the following and a 3GPP connection: the terminal, a connection type, an access manner, a network type, or a network identifier.

Each of the one or more association identifier ranges is used to indicate a correspondence between at least one of the following and a 3GPP connection: the terminal, a connection type, an access manner, a network type, or a network identifier.

The second communication unit is configured to receive a registration update request transmitted through a target 3GPP connection, where the target 3GPP connection is one of the multiple 3GPP connections of the terminal.

The second communication unit is configured to transmit a registration update reply through the target 3GPP connection, where the registration update reply carries an updated first temporary identifier.

The second communication unit is configured to receive a downlink paging notification message; transmit a paging message to each of one or more access network devices; and receive a paging response message through a target 3GPP connection, where the target 3GPP connection is one of the multiple 3GPP connections of the terminal.

The one or more access network devices are one or more access network devices within a registration area corresponding to the multiple 3GPP connections of the terminal.

The one or more access network devices are determined based on the target 3GPP connection among the multiple 3GPP connections of the terminal.

The target 3GPP connection is determined from the multiple 3GPP connections of the terminal based on at least one of: a connection level indication, a paging indication, a default rule, a specified access manner, a priority of an access manner, a specified network type, or a priority of a network type.

The paging message carries indication information for activating the target 3GPP connection.

The first core network side device includes a control plane node.

The devices in the embodiments of the present application may realize the corresponding functions of each device in the aforementioned authentication method embodiments. The processes, functions, implementation manners, and beneficial effects of various modules (sub-modules, units, or components, etc.) in the terminal or the first core network side device may be found in the corresponding descriptions in the above method embodiments, and will not be repeated here. It should be noted that the functions described by various modules (sub-modules, units, or components, etc.) in the terminal or the first core network side device in the embodiments of the present application may be implemented by different modules (sub-modules, units or components, etc.) or by the same module (sub-module, unit or component, etc.).

FIG. 16 is a schematic structural diagram of a communication device 1600 according to an embodiment of the present application. The communication device 1600 includes a processor 1610, which may call a computer program from a memory and run the computer program to enable the communication device 1600 to implement the methods in the embodiments of the present application. In a possible implementation, the communication device 1600 may further include a memory 1620. The processor 1610 may call the computer program from the memory 1620 and run the computer program to enable the communication device 1600 to implement the methods in the embodiments of the present application. The memory 1620 may be a separate device independent of the processor 1610, or it may be integrated into the processor 1610. In a possible implementation, the communication device 1600 may further include a transceiver 1630, which the processor 1610 may control the transceiver 1630 to communicate with other devices. Specifically, it may transmit information or data to other devices or receive information or data transmitted by other devices. The transceiver 1630 may include a transmitter and a receiver. The transceiver 1630 may further include an antenna, and the number of antennas may be one or more.

In a possible implementation, the communication device 1600 may be a terminal or a first core network side device in the embodiments of the present application, and the communication device 1600 may implement the corresponding processes implemented by the terminal or the first core network side device in the various methods of the embodiments of the present application. For the sake of brevity, it will not be described in detail here.

FIG. 17 is a schematic structural diagram of a chip 1700 according to an embodiment of the present application. The chip 1700 includes a processor 1710, which may call a computer program from a memory and run the computer program to implement the methods in the embodiments of the present application. In a possible implementation, the chip 1700 may further include a memory 1720. The processor 1710 may call the computer program from the memory 1720 and run the computer program to implement the method performed by the terminal or the first core network side device in the embodiments of the application. The memory 1720 may be a separate device independent of the processor 1710, or it may be integrated into the processor 1710. In a possible implementation, the chip 1700 may further include an input interface 1730. The processor 1710 may control the input interface 1730 to communicate with other devices or chips, specifically, the input interface 1730 may acquire information or data transmitted by other devices or chips. In a possible implementation, the chip 1700 may further include an output interface 1740. The processor 1710 may control the output interface 1740 to communicate with other devices or chips, specifically, the output interface 1740 may output information or data to other devices or chips.

In a possible implementation, the chip may be applied to the terminal or the first core network side device in the embodiments of the present application, and the chip may implement the corresponding processes implemented by the terminal or the first core network side device in the various methods in the embodiments of the present application. For the sake of brevity, it will not be repeated here. It should be understood that the chip mentioned in the embodiments of the present application may also be referred to as a system level chip, a system chip, a chip system, or a system-on-a-chip, etc. The processors mentioned above may be general-purpose processors, digital signal processors (DSPs), field programmable gate arrays (FPGAs), application specific integrated circuits (ASICs), or other programmable logic devices, transistor logic devices, discrete hardware components, etc. The general-purpose processor mentioned above may be a microprocessor or any conventional processor. The memory mentioned above may be a volatile memory or a non-volatile memory, or may include both the volatile and the non-volatile memory. The non-volatile memory may be a read-only memory (ROM), programmable ROM (PROM), an erasable PROM (EPROM), an electrically EPROM (EEPROM), or a flash memory. The Volatile memory may be a random access memory (RAM). It should be understood that the above-described memory is exemplary but not restrictive. For example, the memory in the embodiments of the present application may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. In other words, the memory in the embodiments of the present application is intended to include, but is not limited to, these and any other suitable types of memories.

FIG. 18 is a schematic block diagram of a communication system 1800 according to an embodiment of the present application. The communication system 1800 includes a terminal 1810 and a first core network side device 1820. The terminal 1810 may be used to implement the corresponding functions implemented by the terminal in the above method. The first core network side device 1820 may be used to implement the corresponding functions implemented by the first core network side device in the above method. For the sake of brevity, it will not be repeated here.

In the above embodiments, it may be implemented entirely or partially by software, hardware, firmware, or any combination thereof. When implemented using software, it may be implemented in whole or in part as a computer program product. The computer program product includes one or more computer instructions. When the computer program instructions are loaded and executed on a computer, all or part of the processes or functions described in the embodiments of the present application are generated. The computer may be a general-purpose computer, a special-purpose computer, a computer network, or other programmable device. The computer instructions may be stored in a computer-readable storage medium or transmitted from one computer-readable storage medium to another. For example, the computer instructions may be transmitted from one website, computer, server, or data center to another website, computer, server, or data center via wired (e.g., coaxial cable, fiber optic, digital subscriber line (DSL)) or wireless (e.g., infrared, wireless, microwave, etc.) means. The computer-readable storage medium may be any available medium that a computer can access, or a data storage device such as a server or data center that integrates one or more available media. The available media may be magnetic media (e.g., floppy disks, hard disks, magnetic tapes), optical media (e.g., DVDs), or semiconductor media (e.g., solid-state drives (SSDs)).

It should be understood that in the various embodiments of the present application, the size of the serial number of the above-mentioned processes does not imply the order of execution. The execution order of each process should be determined by its function and internal logic, and should not constitute any limitation on the implementation process of the embodiments of the present application. Those skilled in the art will understand that, for the sake of convenience and brevity, for the specific working processes of the systems, devices, and units described above, the corresponding processes in the foregoing method embodiments may be referred to, and will not be repeated here. The above description is only specific embodiments of the present application, but the protection scope of the present application is not limited thereto. Any changes or substitutions that may be easily conceived by those skilled in the art within the scope of the technology disclosed in the present application should be included within the protection scope of the present application. Therefore, the scope of protection of the present application should be subjected to the scope of protection of the claims.

## Claims

1. A communication method, comprising:
transmitting, by a terminal, a first request message, wherein the first request message is used to establish a first 3rd generation partnership project (3GPP) connection; and
receiving, by the terminal, a first reply message, wherein the first reply message is used to indicate that the first 3GPP connection has been successfully established, and the first 3GPP connection is one of multiple 3GPP connections of the terminal.

2. The method according to claim 1, wherein transmitting, by the terminal, the first request message comprises:
in a case where a first condition is met, transmitting, by the terminal, the first request message, wherein the first condition comprises at least one of: a condition under which the terminal is allowed to establish the multiple 3GPP connections, or determining, based on a first indication, that the terminal is allowed to establish the multiple 3GPP connections.

3. The method according to claim 1 or 2, wherein the first request message carries at least one of: a capability indication of the terminal, a first association parameter, a connection identifier, or a first temporary identifier.

4. The method according to claim 3, wherein the connection identifier comprises at least one of: an identifier of the first 3GPP connection, or a respective identifier of each of one or more 3GPP connections of the terminal other than the first 3GPP connection.

5. The method according to any one of claims 1 to 4, wherein the first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

6. The method according to any one of claims 3 to 5, wherein the first association parameter is used to indicate that the first 3GPP connection is one of the multiple 3GPP connections of the terminal.

7. The method according to claim 6, wherein the first association parameter is related to at least one of: a connection type of the first 3GPP connection, an access manner corresponding to the first 3GPP connection, a network type corresponding to the first 3GPP connection, or a network identifier corresponding to the first 3GPP connection.

8. The method according to any one of claims 3 to 7, wherein the first association parameter is determined based on one or more association identifiers, or the first association parameter is determined based on one or more association identifier ranges.

9. The method according to any one of claims 1 to 8, wherein before transmitting, by the terminal, the first request message, the method further comprises:
receiving, by the terminal, a second reply message, wherein the second reply message is used to determine whether the terminal is allowed to establish the multiple 3GPP connections.

10. The method of claim 9, wherein the second reply message carries at least one of: a first indication, one or more association identifiers, one or more association identifier ranges, a condition under which the terminal is allowed to establish the multiple 3GPP connections, or a first temporary identifier.

11. The method according to claim 2 or 10, wherein the condition under which the terminal is allowed to establish the multiple 3GPP connections comprises at least one of: a location where the terminal is allowed to establish the multiple 3GPP connections, a time when the terminal is allowed to establish the multiple 3GPP connections, or one or more access manners in which the terminal is allowed to establish the multiple 3GPP connections.

12. The method according to claim 2 or 10, wherein the first indication is used to indicate at least one of: whether the terminal is allowed to establish the multiple 3GPP connections, or a number of the multiple 3GPP connections that the terminal is allowed to establish.

13. The method according to claim 12, wherein the number of the multiple 3GPP connections that the terminal is allowed to establish comprises: a respective number of 3GPP connections under each of one or more connection types that the terminal is allowed to establish.

14. The method according to claim 9 or 10, wherein before receiving, by the terminal, the second reply message, the method further comprises:
transmitting, by the terminal, a second request message, wherein the second request message is used to establish a second 3GPP connection, and the second 3GPP connection is a 3GPP connection established by the terminal for a first time.

15. The method according to claim 14, wherein the second request message carries capability information of the terminal.

16. The method according to claim 3 or 15, wherein the capability indication of the terminal is used to indicate at least one of: the terminal supporting or requesting establishment of the multiple 3GPP connections, or the number of the multiple 3GPP connections that the terminal supports or requests to establish.

17. The method according to claim 16, wherein the number of the multiple 3GPP connections that the terminal supports or requests to establish comprises: a respective number of 3GPP connections under each of one or more connection types that the terminal supports or requests to establish.

18. The method according to claim 13 or 17, wherein the one or more connection types comprise at least one of: a control plane connection, or a user plane connection.

19. The method according to claim 14 or 15, wherein the second reply message is further used to indicate whether the second 3GPP connection has been successfully established.

20. The method according to claim 19, wherein the second reply message further carries at least one of: an identifier of the second 3GPP connection, a connection level indication corresponding to the second 3GPP connection, or a paging indication corresponding to the second 3GPP connection.

21. The method according to claim 5 or 20, wherein the connection level indication is used to determine whether to perform a specified process through a corresponding 3GPP connection.

22. The method according to claim 21, wherein the specified process comprises at least one of: a paging-related process, or a registration update process.

23. The method according to claim 5 or 20, wherein the paging indication is used to determine whether to perform a paging-related process through a corresponding 3GPP connection.

24. The method according to any one of claims 1 to 23, wherein after receiving, by the terminal, the first reply message, the method further comprises:
transmitting, by the terminal, a third request message through a third 3GPP connection, wherein the third request message is used to establish a user plane connection corresponding to the third 3GPP connection, and the third 3GPP connection is one of the multiple 3GPP connections of the terminal; and
receiving, by the terminal, a third reply message through the third 3GPP connection, wherein the third reply message is used to indicate that the user plane connection corresponding to the third 3GPP connection has been successfully established.

25. The method according to claim 24, wherein the third request message carries at least one of: an identifier of the third 3GPP connection, or a second association parameter.

26. The method according to claim 25, wherein the second association parameter is used to indicate that the user plane connection corresponding to the third 3GPP connection is one of the multiple 3GPP connections of the terminal.

27. The method according to claim 26, wherein the second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

28. The method according to any one of claims 25 to 27, wherein the second association parameter is determined based on one or more association identifiers, or the second association parameter is determined based on one or more association identifier ranges.

29. The method according to any one of claims 8, 10, and 28, wherein each of the one or more association identifiers is used to indicate a correspondence between at least one of the following and a 3GPP connection: the terminal, a connection type, an access manner, a network type, or a network identifier.

30. The method according to any one of claims 8, 10, and 28, wherein each of the one or more association identifier ranges is used to indicate a correspondence between at least one of the following and a 3GPP connection: the terminal, a connection type, an access manner, a network type, or a network identifier.

31. The method according to any one of claims 1 to 30, wherein after receiving, by the terminal, the first reply message, the method further comprises:
in a case where a second condition is met, transmitting, by the terminal, a registration update request through a target 3GPP connection, wherein the target 3GPP connection is one of the multiple 3GPP connections of the terminal.

32. The method according to claim 31, wherein the second condition comprises at least one of: the terminal being not located within a registration area, or a registration update time having been reached.

33. The method according to claim 31 or 32, wherein after transmitting, by the terminal, the registration update request through the target 3GPP connection, the method further comprises:
receiving, by the terminal, a registration update reply through the target 3GPP connection, wherein the registration update reply carries an updated first temporary identifier.

34. The method according to any one of claims 1 to 33, wherein after receiving, by the terminal, the first reply message, the method further comprises:
receiving, by the terminal, a paging message; and
transmitting, by the terminal, a paging response message through a target 3GPP connection, wherein the target 3GPP connection is one of the multiple 3GPP connections of the terminal.

35. The method according to claim 34, wherein the paging message carries indication information for activating the target 3GPP connection.

36. The method according to any one of claims 31 to 34, wherein the target 3GPP connection is determined from the multiple 3GPP connections of the terminal based on at least one of: a connection level indication, a paging indication, a default rule, a specified access manner, a priority of an access manner, a specified network type, or a priority of a network type.

37. A communication method, comprising:
receiving, by a first core network side device, a first request message, wherein the first request message is used to establish a first 3rd generation partnership project (3GPP) connection; and
transmitting, by the first core network side device, a first reply message, wherein the first reply message is used to indicate that the first 3GPP connection has been successfully established, and the first 3GPP connection is one of multiple 3GPP connections of a terminal.

38. The method according to claim 37, wherein the first request message carries at least one of: a capability indication of the terminal, a first association parameter, a connection identifier, or a first temporary identifier.

39. The method according to claim 38, wherein the connection identifier comprises at least one of: an identifier of the first 3GPP connection, or a respective identifier of each of the multiple 3GPP connections other than the first 3GPP connection of the terminal.

40. The method according to any one of claims 37 to 39, wherein the first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

41. The method according to any one of claims 38 to 40, wherein the first association parameter is used to indicate that the first 3GPP connection is one of the multiple 3GPP connections of the terminal.

42. The method according to claim 41, wherein the first association parameter is related to at least one of: a connection type of the first 3GPP connection, an access manner corresponding to the first 3GPP connection, a network type corresponding to the first 3GPP connection, or a network identifier corresponding to the first 3GPP connection.

43. The method according to any one of claims 38 to 42, wherein the first association parameter is determined based on one or more association identifiers, or the first association parameter is determined based on one or more association identifier ranges.

44. The method according to any one of claims 37 to 43, wherein before receiving, by the first core network side device, the first request message, the method further comprises:
transmitting, by the first core network side device, a second reply message, wherein the second reply message is used to determine whether the terminal is allowed to establish the multiple 3GPP connections.

45. The method according to claim 44, wherein the second reply message carries at least one of: a first indication, one or more association identifiers, one or more association identifier ranges, a condition under which the terminal is allowed to establish the multiple 3GPP connections, or a first temporary identifier.

46. The method according to claim 45, wherein the condition under which the terminal is allowed to establish the multiple 3GPP connections comprises at least one of: a location where the terminal is allowed to establish the multiple 3GPP connections, a time when the terminal is allowed to establish the multiple 3GPP connections, or the terminal being allowed to establish the multiple 3GPP connections under one or more access manners.

47. The method according to claim 45, wherein the first indication is used to indicate at least one of: whether the terminal is allowed to establish the multiple 3GPP connections, or a number of the multiple 3GPP connections that the terminal is allowed to establish.

48. The method according to claim 47, wherein the number of the multiple 3GPP connections that the terminal is allowed to establish comprises: a respective number of 3GPP connections under each of one or more connection types that the terminal is allowed to establish.

49. The method according to any one of claims 44 to 48, wherein before transmitting, by the first core network side device, the second reply message, the method further comprises:
receiving, by the first core network side device, a second request message, wherein the second request message is used to establish a second 3GPP connection, and the second 3GPP connection is a 3GPP connection requested to be established by the terminal for a first time.

50. The method according to claim 49, wherein the second reply message is further used to indicate whether the second 3GPP connection has been successfully established.

51. The method according to claim 50, wherein the second reply message carries at least one of: an identifier of the second 3GPP connection, a connection level indication corresponding to the second 3GPP connection, or a paging indication corresponding to the second 3GPP connection.

52. The method according to claim 40 or 51, wherein the connection level indication is used to determine whether to perform processing of a specified process through a corresponding 3GPP connection.

53. The method according to claim 52, wherein the specified process comprises at least one of: a paging-related process, or a registration update process.

54. The method according to claim 40 or 51, wherein the paging indication is used to determine whether to perform processing of a paging-related process through a corresponding 3GPP connection.

55. The method according to any one of claims 49 to 51, wherein the second request message carries capability information of the terminal.

56. The method according to claim 55, wherein before transmitting, by the first core network side device, the second reply message, the method further comprises:
transmitting, by the first core network side device, the capability information of the terminal to a second core network side device; and
receiving, by the first core network side device, subscription information of the terminal transmitted by the second core network side device.

57. The method according to claim 56, wherein the subscription information of the terminal comprises at least one of: whether the terminal is allowed to establish the multiple 3GPP connections; a number of the multiple 3GPP connections that the terminal is allowed to establish; or respective frequency information corresponding to each 3GPP connection among the multiple 3GPP connections that the terminal is allowed to establish.

58. The method according to any one of claims 38, 55 to 57, wherein the capability indication of the terminal is used to indicate at least one of: the terminal supporting or requesting establishment of the multiple 3GPP connections, or a number of the multiple 3GPP connections that the terminal supports or requests to establish.

59. The method according to claim 58, wherein the number of the multiple 3GPP connections that the terminal supports or requests to establish comprises: a respective number of 3GPP connections under each of one or more connection types that the terminal supports or requests to establish.

60. The method according to claim 48 or 59, wherein the one or more connection types comprise at least one of: a control plane connection, or a user plane connection.

61. The method according to any one of claims 37 to 60, wherein after transmitting, by the first core network side device, the first reply message, the method further comprises:
receiving, by the first core network side device, a third request message through a third 3GPP connection, wherein the third request message is used to establish a user plane connection corresponding to the third 3GPP connection, and the third 3GPP connection is one of the multiple 3GPP connections of the terminal; and
transmitting, by the first core network side device, a third reply message through the third 3GPP connection, wherein the third reply message is used to indicate that the user plane connection corresponding to the third 3GPP connection has been successfully established.

62. The method according to claim 61, wherein the third request message carries at least one of: an identifier of the third 3GPP connection, or a second association parameter.

63. The method according to claim 62, wherein the second association parameter is used to indicate that the user plane connection corresponding to the third 3GPP connection is one of the multiple 3GPP connections of the terminal.

64. The method according to claim 63, wherein the second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

65. The method according to any one of claims 62 to 64, wherein the second association parameter is determined based on one or more association identifiers, or the second association parameter is determined based on one or more association identifier ranges.

66. The method according to any one of claims 61 to 65, wherein before transmitting, by the first core network side device, the third reply message, the method further comprises:
transmitting, by the first core network side device, a fourth request message to a third core network side device, wherein the fourth request message carries at least one of: an identifier of the third 3GPP connection, or a second association parameter; and
receiving, by the first core network side device, a fourth reply message transmitted by the third core network side device, wherein the fourth reply message is used to indicate a completion of establishing the user plane connection corresponding to the third 3GPP connection.

67. The method according to any one of claims 43, 45, and 65, wherein each of the one or more association identifiers is used to indicate a correspondence between at least one of the following and a 3GPP connection: the terminal, a connection type, an access manner, a network type, or a network identifier.

68. The method according to any one of claims 43, 45, and 65, wherein each of the one or more association identifier ranges is used to indicate a correspondence between at least one of the following and a 3GPP connection: the terminal, a connection type, an access manner, a network type, or a network identifier.

69. The method according to any one of claims 37 to 68, wherein after transmitting, by the first core network side device, the first reply message, the method further comprises:
receiving, by the first core network side device, a registration update request transmitted through a target 3GPP connection, wherein the target 3GPP connection is one of the multiple 3GPP connections of the terminal.

70. The method according to claim 69, wherein after receiving, by the first core network side device, the registration update request transmitted through the target 3GPP connection, the method further comprises:
transmitting, by the first core network side device, a registration update reply through the target 3GPP connection, wherein the registration update reply carries an updated first temporary identifier.

71. The method according to any one of claims 37 to 70, wherein after transmitting, by the first core network side device, the first reply message, the method further comprises:
receiving, by the first core network side device, a downlink paging notification message;
transmitting, by the first core network side device, a paging message to each of one or more access network devices; and
receiving, by the first core network side device, a paging response message through a target 3GPP connection, wherein the target 3GPP connection is one of the multiple 3GPP connections of the terminal.

72. The method according to claim 71, wherein the one or more access network devices are one or more access network devices within a registration area corresponding to the multiple 3GPP connections of the terminal.

73. The method according to claim 71, wherein the one or more access network devices are determined based on the target 3GPP connection among the multiple 3GPP connections of the terminal.

74. The method according to any one of claims 71 to 73, wherein the target 3GPP connection is determined from the multiple 3GPP connections of the terminal based on at least one of: a connection level indication, a paging indication, a default rule, a specified access manner, a priority of an access manner, a specified network type, or a priority of a network type.

75. The method according to any one of claims 71 to 74, wherein the paging message carries indication information for activating the target 3GPP connection.

76. The method according to any one of claims 37 to 75, wherein the first core network side device comprises a control plane node.

77. A terminal, comprising:
a first communication unit, configured to:
transmit a first request message, wherein the first request message is used to establish a first 3rd generation partnership project (3GPP) connection; and
receive a first reply message, wherein the first reply message is used to indicate that the first 3GPP connection has been successfully established, and the first 3GPP connection is one of multiple 3GPP connections of the terminal.

78. The terminal according to claim 77, further comprising: a first processing unit, configured to transmit the first request message through the first communication unit in a case where a first condition is met, wherein the first condition comprises at least one of: a condition under which the terminal is allowed to establish the multiple 3GPP connections, or determining, based on a first indication, that the terminal is allowed to establish the multiple 3GPP connections.

79. The terminal according to claim 77 or 78, wherein the first request message carries at least one of: a capability indication of the terminal, a first association parameter, a connection identifier, or a first temporary identifier.

80. The terminal according to claim 79, wherein the connection identifier comprises at least one of: an identifier of the first 3GPP connection, or a respective identifier of each of one or more 3GPP connections of the terminal other than the first 3GPP connection.

81. The terminal according to any one of claims 77 to 80, wherein the first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

82. The terminal according to any one of claims 79 to 81, wherein the first association parameter is used to indicate that the first 3GPP connection is one of the multiple 3GPP connections of the terminal.

83. The terminal according to claim 82, wherein the first association parameter is related to at least one of: a connection type of the first 3GPP connection, an access manner corresponding to the first 3GPP connection, a network type corresponding to the first 3GPP connection, or a network identifier corresponding to the first 3GPP connection.

84. The terminal according to any one of claims 79 to 83, wherein the first association parameter is determined based on one or more association identifiers, or the first association parameter is determined based on one or more association identifier ranges.

85. The terminal according to any one of claims 77 to 84, wherein the first communication unit is configured to receive a second reply message, wherein the second reply message is used to determine whether the terminal is allowed to establish the multiple 3GPP connections.

86. The terminal according to claim 85, wherein the second reply message carries at least one of: a first indication, one or more association identifiers, one or more association identifier ranges, a condition under which the terminal is allowed to establish the multiple 3GPP connections, or a first temporary identifier.

87. The terminal according to claim 78 or 86, wherein the condition under which the terminal is allowed to establish the multiple 3GPP connections comprises at least one of: a location where the terminal is allowed to establish the multiple 3GPP connections, a time when the terminal is allowed to establish the multiple 3GPP connections, or one or more access manners in which the terminal is allowed to establish the multiple 3GPP connections.

88. The terminal according to claim 78 or 86, wherein the first indication is used to indicate at least one of: whether the terminal is allowed to establish the multiple 3GPP connections, or a number of the multiple 3GPP connections that the terminal is allowed to establish.

89. The terminal according to claim 88, wherein the number of the multiple 3GPP connections that the terminal is allowed to establish comprises: a respective number of 3GPP connections under each of one or more connection types that the terminal is allowed to establish.

90. The terminal according to claim 85 or 86, wherein the first communication unit is configured to transmit a second request message, wherein the second request message is used to establish a second 3GPP connection, and the second 3GPP connection is a 3GPP connection established by the terminal for a first time.

91. The terminal according to claim 90, wherein the second request message carries capability information of the terminal.

92. The terminal according to claim 79 or 91, wherein the capability indication of the terminal is used to indicate at least one of: the terminal supporting or requesting establishment of the multiple 3GPP connections, or a number of the multiple 3GPP connections that the terminal supports or requests to establish.

93. The terminal according to claim 92, wherein the number of the multiple 3GPP connections that the terminal supports or requests to establish comprises: a respective number of 3GPP connections under each of one or more connection types that the terminal supports or requests to establish.

94. The terminal according to claim 89 or 93, wherein the one or more connection types comprise at least one of: a control plane connection, or a user plane connection.

95. The terminal according to claim 90 or 91, wherein the second reply message is further used to indicate whether the second 3GPP connection has been successfully established.

96. The terminal according to claim 95, wherein the second reply message further carries at least one of: an identifier of the second 3GPP connection, a connection level indication corresponding to the second 3GPP connection, or a paging indication corresponding to the second 3GPP connection.

97. The terminal according to claim 81 or 96, wherein the connection level indication is used to determine whether to perform a specified process through a corresponding 3GPP connection.

98. The terminal according to claim 97, wherein the specified process comprises at least one of: a paging-related process, or a registration update process.

99. The terminal according to claim 81 or 96, wherein the paging indication is used to determine whether to perform a paging-related process through a corresponding 3GPP connection.

100. The terminal according to any one of claims 77 to 99, wherein the first communication unit is configured to:
transmit a third request message through a third 3GPP connection, wherein the third request message is used to establish a user plane connection corresponding to the third 3GPP connection, and the third 3GPP connection is one of the multiple 3GPP connections of the terminal; and
receive a third reply message through the third 3GPP connection, wherein the third reply message is used to indicate that the user plane connection corresponding to the third 3GPP connection has been successfully established.

101. The terminal according to claim 100, wherein the third request message carries at least one of: an identifier of the third 3GPP connection, or a second association parameter.

102. The terminal according to claim 101, wherein the second association parameter is used to indicate that the user plane connection corresponding to the third 3GPP connection is one of the multiple 3GPP connections of the terminal.

103. The terminal according to claim 102, wherein the second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

104. The terminal according to any one of claims 101 to 103, wherein the second association parameter is determined based on one or more association identifiers, or the second association parameter is determined based on one or more association identifier ranges.

105. The terminal according to any one of claims 84, 86, and 104, wherein each of the one or more association identifiers is used to indicate a correspondence between at least one of the following and a 3GPP connection: the terminal, a connection type, an access manner, a network type, or a network identifier.

106. The terminal according to any one of claims 84, 86, and 104, wherein each of the one or more association identifier ranges is used to indicate a correspondence between at least one of the following and a 3GPP connection: the terminal, a connection type, an access manner, a network type, or a network identifier.

107. The terminal according to any one of claims 77 to 106, wherein the first processing unit is configured to control the first communication unit to transmit a registration update request through a target 3GPP connection in a case where a second condition is met, wherein the target 3GPP connection is one of the multiple 3GPP connections of the terminal.

108. The terminal according to claim 107, wherein the second condition comprises at least one of: the terminal being not located within a registration area, or a registration update time having been reached.

109. The terminal according to claim 107 or 108, wherein the first communication unit is configured to receive a registration update reply through the target 3GPP connection, wherein the registration update reply carries an updated first temporary identifier.

110. The terminal according to any one of claims 77 to 109, wherein the first communication unit is configured to receive a paging message and transmit a paging response message through a target 3GPP connection, wherein the target 3GPP connection is one of the multiple 3GPP connections of the terminal.

111. The terminal according to claim 110, wherein the paging message carries indication information for activating the target 3GPP connection.

112. The terminal according to any one of claims 107 to 110, wherein the target 3GPP connection is determined from the multiple 3GPP connections of the terminal based on at least one of: a connection level indication, a paging indication, a default rule, a specified access manner, a priority of an access manner, a specified network type, or a priority of a network type.

113. A first core network side device, comprising:
a second communication unit, configured to:
receive a first request message, wherein the first request message is used to establish a first 3rd generation partnership project (3GPP) connection; and
transmit a first reply message, wherein the first reply message is used to indicate that the first 3GPP connection has been successfully established, and the first 3GPP connection is one of multiple 3GPP connections of a terminal.

114. The first core network side device according to claim 113, wherein the first request message carries at least one of: a capability indication of the terminal, a first association parameter, a connection identifier, or a first temporary identifier.

115. The first core network side device according to claim 114, wherein the connection identifier comprises at least one of: an identifier of the first 3GPP connection, or a respective identifier of each of the multiple 3GPP connections other than the first 3GPP connection of the terminal.

116. The first core network side device according to any one of claims 113 to 115, wherein the first reply message carries at least one of: a first association parameter, an identifier of the first 3GPP connection, an updated condition under which the terminal is allowed to establish the multiple 3GPP connections, a second temporary identifier, a connection level indication corresponding to the first 3GPP connection, a paging indication corresponding to the first 3GPP connection, or a second indication.

117. The first core network side device according to any one of claims 114 to 116, wherein the first association parameter is used to indicate that the first 3GPP connection is one of the multiple 3GPP connections of the terminal.

118. The first core network side device according to claim 117, wherein the first association parameter is related to at least one of: a connection type of the first 3GPP connection, an access manner corresponding to the first 3GPP connection, a network type corresponding to the first 3GPP connection, or a network identifier corresponding to the first 3GPP connection.

119. The first core network side device according to any one of claims 114 to 118, wherein the first association parameter is determined based on one or more association identifiers, or the first association parameter is determined based on one or more association identifier ranges.

120. The first core network side device according to any one of claims 113 to 119, wherein the second communication unit is configured to transmit a second reply message, wherein the second reply message is used to determine whether the terminal is allowed to establish the multiple 3GPP connections.

121. The first core network side device according to claim 120, wherein the second reply message carries at least one of: a first indication, one or more association identifiers, one or more association identifier ranges, a condition under which the terminal is allowed to establish the multiple 3GPP connections, or a first temporary identifier.

122. The first core network side device according to claim 121, wherein the condition under which the terminal is allowed to establish the multiple 3GPP connections comprises at least one of: a location where the terminal is allowed to establish the multiple 3GPP connections, a time when the terminal is allowed to establish the multiple 3GPP connections, or the terminal being allowed to establish the multiple 3GPP connections under one or more access manners.

123. The first core network side device according to claim 121, wherein the first indication is used to indicate at least one of: whether the terminal is allowed to establish the multiple 3GPP connections, or a number of the multiple 3GPP connections that the terminal is allowed to establish.

124. The first core network side device according to claim 123, wherein the number of the multiple 3GPP connections that the terminal is allowed to establish comprises: a respective number of 3GPP connections under each of one or more connection types that the terminal is allowed to establish.

125. The first core network side device according to any one of claims 120 to 124, wherein the second communication unit is configured to receive a second request message, wherein the second request message is used to establish a second 3GPP connection, and the second 3GPP connection is a 3GPP connection requested to be established by the terminal for a first time.

126. The first core network side device according to claim 125, wherein the second reply message is further used to indicate whether the second 3GPP connection has been successfully established.

127. The first core network side device according to claim 126, wherein the second reply message carries at least one of: an identifier of the second 3GPP connection, a connection level indication corresponding to the second 3GPP connection, or a paging indication corresponding to the second 3GPP connection.

128. The first core network side device according to claim 116 or 127, wherein the connection level indication is used to determine whether to perform processing of a specified process through a corresponding 3GPP connection.

129. The first core network side device according to claim 128, wherein the specified process comprises at least one of: a paging-related process, or a registration update process.

130. The first core network side device according to claim 116 or 127, wherein the paging indication is used to determine whether to perform processing of a paging-related process through a corresponding 3GPP connection.

131. The first core network side device according to any one of claims 125 to 127, wherein the second request message carries capability information of the terminal.

132. The first core network side device according to claim 131, wherein the second communication unit is configured to:
transmit the capability information of the terminal to a second core network side device; and
receive subscription information of the terminal transmitted by the second core network side device.

133. The first core network side device according to claim 132, wherein the subscription information of the terminal comprises at least one of: whether the terminal is allowed to establish the multiple 3GPP connections; a number of the multiple 3GPP connections that the terminal is allowed to establish; or respective frequency information corresponding to each 3GPP connection among the multiple 3GPP connections that the terminal is allowed to establish.

134. The first core network side device according to any one of claims 114, 131 to 133, wherein the capability indication of the terminal is used to indicate at least one of: the terminal supporting or requesting establishment of the multiple 3GPP connections, or a number of the multiple 3GPP connections that the terminal supports or requests to establish.

135. The first core network side device according to claim 134, wherein the number of the multiple 3GPP connections that the terminal supports or requests to establish comprises: a respective number of 3GPP connections under each of one or more connection types that the terminal supports or requests to establish.

136. The first core network side device according to claim 124 or 135, wherein the one or more connection types comprise at least one of: a control plane connection, or a user plane connection.

137. The first core network side device according to any one of claims 113 to 136, wherein the second communication unit is configured to:
receive a third request message through a third 3GPP connection, wherein the third request message is used to establish a user plane connection corresponding to the third 3GPP connection, and the third 3GPP connection is one of the multiple 3GPP connections of the terminal; and
transmit a third reply message through the third 3GPP connection, wherein the third reply message is used to indicate that the user plane connection corresponding to the third 3GPP connection has been successfully established.

138. The first core network side device according to claim 137, wherein the third request message carries at least one of: an identifier of the third 3GPP connection, or a second association parameter.

139. The first core network side device according to claim 138, wherein the second association parameter is used to indicate that the user plane connection corresponding to the third 3GPP connection is one of the multiple 3GPP connections of the terminal.

140. The first core network side device according to claim 139, wherein the second association parameter is related to at least one of: a connection type of the user plane connection corresponding to the third 3GPP connection, an access manner of the user plane connection corresponding to the third 3GPP connection, a network type of the user plane connection corresponding to the third 3GPP connection, or a network identifier of the user plane connection corresponding to the third 3GPP connection.

141. The first core network side device according to any one of claims 138 to 140, wherein the second association parameter is determined based on one or more association identifiers, or the second association parameter is determined based on one or more association identifier ranges.

142. The first core network side device according to any one of claims 137 to 141, wherein the second communication unit is configured to:
transmit a fourth request message to a third core network side device, wherein the fourth request message carries at least one of: an identifier of the third 3GPP connection, or a second association parameter; and
receive a fourth reply message transmitted by the third core network side device, wherein the fourth reply message is used to indicate a completion of establishing the user plane connection corresponding to the third 3GPP connection.

143. The first core network side device according to any one of claims 119, 121, and 141, wherein each of the one or more association identifiers is used to indicate a correspondence between at least one of the following and a 3GPP connection: the terminal, a connection type, an access manner, a network type, or a network identifier.

144. The first core network side device according to any one of claims 119, 121, and 141, wherein each of the one or more association identifier ranges is used to indicate a correspondence between at least one of the following and a 3GPP connection: the terminal, a connection type, an access manner, a network type, or a network identifier.

145. The first core network side device according to any one of claims 113 to 144, wherein the second communication unit is configured to receive a registration update request transmitted through a target 3GPP connection, wherein the target 3GPP connection is one of the multiple 3GPP connections of the terminal.

146. The first core network side device according to claim 145, wherein the second communication unit is configured to transmit a registration update reply through the target 3GPP connection, wherein the registration update reply carries an updated first temporary identifier.

147. The first core network side device according to any one of claims 113 to 146, wherein the second communication unit is configured to:
receive a downlink paging notification message;
transmit a paging message to each of one or more access network devices; and
receive a paging response message through a target 3GPP connection, wherein the target 3GPP connection is one of the multiple 3GPP connections of the terminal.

148. The first core network side device according to claim 147, wherein the one or more access network devices are one or more access network devices within a registration area corresponding to the multiple 3GPP connections of the terminal.

149. The first core network side device according to claim 147, wherein the one or more access network devices are determined based on the target 3GPP connection among the multiple 3GPP connections of the terminal.

150. The first core network side device according to any one of claims 147 to 149, wherein the target 3GPP connection is determined from the multiple 3GPP connections of the terminal based on at least one of: a connection level indication, a paging indication, a default rule, a specified access manner, a priority of an access manner, a specified network type, or a priority of a network type.

151. The first core network side device according to any one of claims 147 to 150, wherein the paging message carries indication information for activating the target 3GPP connection.

152. The first core network side device according to any one of claims 113 to 151, wherein the first core network side device comprises a control plane node.

153. A terminal, comprising: a transceiver, a processor, and a memory, wherein the memory is configured to store a computer program, the transceiver is configured to communicate with other devices, and the processor is configured to call and run the computer program stored in the memory to enable the terminal to perform the method as described in any one of claims 1 to 36.

154. A first core network side device, comprising: a transceiver, a processor, and a memory, wherein the memory is configured to store a computer program, the transceiver is configured to communicate with other devices, and the processor is configured to call and run the computer program stored in the memory to enable the first core network side device to perform the method as described in any one of claims 37 to 76.

155. A chip, comprising: a processor configured to call a computer program from a memory and run the computer program, to enable a device equipped with the chip to perform the method as described in any one of claims 1 to 36 or 37 to 76.

156. A computer-readable storage medium, for storing a computer program that, when run by a device, enables the device to perform the method as described in any one of claims 1 to 36 or 37 to 76.

157. A computer program product, comprising computer program instructions that enable a computer to perform the method as claimed in any one of claims 1 to 36 or 37 to 76.

158. A computer program, wherein the computer program enables a computer to perform the method as described in any one of claims 1 to 36 or 37 to 76.
